(19) **Europäisches Patentamt**
**European Patent Office**
**Office européen des brevets**

(11) **EP 3 535 700 B1**

(12) **EUROPEAN PATENT SPECIFICATION**

(45) Date of publication and mention
of the grant of the patent:
**04.03.2026 Bulletin 2026/10**

(21) Application number: **17800682.1**

(22) Date of filing: **03.11.2017**

(51) International Patent Classification (IPC):
**G06N 3/045** *(2023.01)* **G06N 3/0455** *(2023.01)*
**G06N 3/044** *(2023.01)* **G06N 3/0442** *(2023.01)*
**G06N 3/0464** *(2023.01)* **G06N 3/09** *(2023.01)*
**G06F 40/216** *(2020.01)* **G06F 40/30** *(2020.01)*
**G06F 40/44** *(2020.01)* *G10L 25/30* *(2013.01)*
*G10L 15/16* *(2006.01)* *G10L 15/18* *(2013.01)*

(52) Cooperative Patent Classification (CPC):
**G06F 40/216; G06F 40/30; G06F 40/44;**
**G06N 3/044; G06N 3/0442; G06N 3/045;**
**G06N 3/0455; G06N 3/0464; G06N 3/09;**
G06F 40/00; G10L 15/16; G10L 15/18;
G10L 15/1815; G10L 25/30

(86) International application number:
**PCT/US2017/060049**

(87) International publication number:
**WO 2018/085722 (11.05.2018 Gazette 2018/19)**

(54) **QUASI-RECURRENT NEURAL NETWORK**

QUASI-REKURRENTES NEURONALES NETZWERK

RÉSEAU NEURONAL QUASI RÉCURRENT

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **04.11.2016 US 201662417333 P**
**04.11.2016 US 201662418075 P**
**31.01.2017 US 201715420710**
**31.01.2017 US 201715420801**

(43) Date of publication of application:
**11.09.2019 Bulletin 2019/37**

(73) Proprietor: **Salesforce, Inc.**
**San Francisco, CA 94105 (US)**

(72) Inventors:
• **BRADBURY, James**
**San Francisco, CA 94105 (US)**
• **MERITY, Stephen, Joseph**
**San Francisco, CA 94103 (US)**
• **XIONG, Caiming**
**Palo Alto, CA 94303 (US)**

• **SOCHER, Richard**
**Menlo Park, CA 94025 (US)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
• **JUNYOUNG CHUNG ET AL: "Gated Feedback**
**Recurrent Neural Networks", 9 February 2015**
**(2015-02-09), pages 1 - 9, XP055344915,**
**Retrieved from the Internet <URL:https://arxiv.**
**org/pdf/1502.02367.pdf> [retrieved on 20170213]**
• **DAVID BALDUZZI ET AL: "Strongly-Typed**
**Recurrent Neural Networks", ARXIV.ORG,**
**CORNELL UNIVERSITY LIBRARY, 201 OLIN**
**LIBRARY CORNELL UNIVERSITY ITHACA, NY**
**14853, 6 February 2016 (2016-02-06),**
**XP080681880**

- SUMIT CHOPRA ET AL: "Abstractive Sentence Summarization with Attentive Recurrent Neural Networks", PROCEEDINGS OF THE 2016 CONFERENCE OF THE NORTH AMERICAN CHAPTER OF THE ASSOCIATION FOR COMPUTATIONAL LINGUISTICS: HUMAN LANGUAGE TECHNOLOGIES, 12 June 2016 (2016-06-12), Stroudsburg, PA, USA, pages 93 - 98, XP055442666, DOI: 10.18653/v1/N16-1012
- RAMESH NALLAPATI ET AL: "Abstractive Text Summarization using Sequence-to-sequence RNNs and Beyond", PROCEEDINGS OF THE 20TH SIGNLL CONFERENCE ON COMPUTATIONAL NATURAL LANGUAGE LEARNING, 26 August 2016 (2016-08-26), Stroudsburg, PA, USA, pages 280 - 290, XP055441008, DOI: 10.18653/v1/K16-1028
- KLAUS GREFF ET AL: "LSTM: A Search Space Odyssey", IEEE TRANSACTIONS ON NEURAL NETWORKS AND LEARNING SYSTEMS, 1 January 2016 (2016-01-01), Piscataway, NJ, USA, pages 1 - 18, XP055353064, ISSN: 2162-237X, DOI: 10.1109/TNNLS.2016.2582924
- JAMES BRADBURY ET AL: "Quasi-Recurrent Neural Networks", ARXIV.ORG, CORNELL UNIVERSITY LIBRARY, 201 OLIN LIBRARY CORNELL UNIVERSITY ITHACA, NY 14853, 5 November 2016 (2016-11-05), XP080729557

**Description**

**CROSS REFERENCE TO OTHER APPLICATIONS**

This application claims the benefit of U.S. Provisional Patent Application No. 62/417,333, "QUASI-RECURRENT NEURAL NETWORKS" (Atty. Docket No. SALE 1180-1/1946PROV), filed on November 04, 2016.
This application claims the benefit of U.S. Provisional Patent Application No. 62/418,075, "QUASI-RECURRENT NEURAL NETWORKS" (Atty. Docket No. SALE 1180-2/1946PROV2), filed on November 04, 2016.
This application claims the benefit of U.S. Nonprovisional Patent Application No. 15/420,710, "QUASI-RECURRENT NEURAL NETWORK" (Atty. Docket No. SALE 1180-3/1946US), filed on January 31, 2017.
This application claims the benefit of U.S. Nonprovisional Patent Application No. 15/420,801 entitled "QUASI-RECURRENT NEURAL NETWORK BASED ENCODER-DECODER MODEL" (Atty. Docket No. SALE 1180-4/1946US2), filed on January 31, 2017.

**FIELD OF THE TECHNOLOGY DISCLOSED**

The technology disclosed relates generally to natural language processing (NLP) using deep neural networks, and in particular relates to a quasi-recurrent neural network (QRNN) that increases computational efficiency in NLP tasks.

**BACKGROUND**

The subject matter discussed in this section should not be assumed to be prior art merely as a result of its mention in this section. Similarly, a problem mentioned in this section or associated with the subject matter provided as background should not be assumed to have been previously recognized in the prior art. The subject matter in this section merely represents different approaches, which in and of themselves can also correspond to implementations of the claimed technology.
Recurrent neural networks (RNNs) are a powerful tool for modeling sequential data, but the dependence of each timestep's computation on the previous timestep's output limits parallelism and makes RNNs unwieldy for very long sequences. The technology disclosed provides a quasi-recurrent neural network (QRNN) that alternates convolutional layers, which apply in parallel across timesteps, and minimalist recurrent pooling layers that apply in parallel across feature dimensions.
Despite lacking trainable recurrent layers, stacked QRNNs have better predictive accuracy than stacked long short-term memory networks (LSTMs) of the same hidden size. Due to their increased parallelism, they are up to 16 times faster at train and test time. Experiments on language modeling, sentiment classification, and character-level neural translation demonstrate these advantages and underline the viability of QRNNs as a basic building block for a variety of sequence tasks.
Chung et al., "Gated Feedback Recurrent Neural Networks," 9 February 2015, pages 1-9, retrieved from the Internet:URL:https://arxiv.org/pdf/1502.02367.pdf discloses a novel recurrent neural network (RNN) architecture. The proposed RNN, gated-feedback RNN (GF-RNN), extends the existing approach of stacking multiple recurrent layers by allowing and controlling signals flowing from upper recurrent layers to lower layers using a global gating unit for each pair of layers. The recurrent signals exchanged between layers are gated adaptively based on the previous hidden states and the current input. The authors evaluated the proposed GF-RNN with different types of recurrent units, such as tanh, long short-term memory and gated recurrent units, on the tasks of character-level language modeling and Python program evaluation. Their empirical evaluation of different RNN units, revealed that in both tasks, the GF-RNN outperforms the conventional approaches to build deep stacked RNNs. They suggest that the improvement arises because the GFRNN can adaptively assign different layers to different timescales and layer-to-layer interactions (including the top-down ones which are not usually present in a stacked RNN) by learning to gate these interactions.
Balduzzi et al., "Strongly-Typed Recurrent Neural Networks," ARXIV.ORG, Cornell University Library, 201 Olin Library Cornell University Ithaca, NY 14853, 6 February 2016, pages 1-8 discloses that recurrent neural networks are increasing popular models for sequential learning. Unfortunately, although the most effective RNN architectures are perhaps excessively complicated, extensive searches have not found simpler alternatives. This paper imports ideas from physics and functional programming into RNN design to provide guiding principles. From physics, the authors introduce type constraints, analogous to the constraints that forbids adding meters to seconds. From functional programming, they require that strongly-typed architectures factorize into stateless learnware and state-dependent firmware, reducing the impact of side-effects. The features learned by strongly-typed nets have a simple semantic interpretation via dynamic averagepooling on one-dimensional convolutions. They also show that strongly-typed gradients are better behaved than in classical architectures, and characterize the representational power of stronglytyped nets. Finally, experiments show that, despite being more constrained, strongly-typed architectures achieve lower training and comparable generalization error to classical architectures.

Chopra et al., "Abstractive Sentence Summarization with Attentive Recurrent Neural Networks," Proceedings of the 2016 Conference of the North American Chapter of the Association for Computational Linguistics: Human Language Technologies, 12 June 2016, pages 93-98 discloses that abstractive Sentence Summarization generates a shorter version of a given sentence while attempting to preserve its meaning. The authors introduce a conditional recurrent neural network (RNN) which generates a summary of an input sentence. The conditioning is provided by a novel convolutional attention-based encoder which ensures that the decoder focuses on the appropriate input words at each step of generation. Their model relies only on learned features and is easy to train in an end-to-end fashion on large data sets. Their experiments show that the model significantly outperforms the recently proposed state-of-the-art method on the Gigaword corpus while performing competitively on the DUC-2004 shared task.

Nallapati et al., "Abstractive Text Summarization using Sequence-to Sequence RNNs and Beyond," Proceedings of the 20th Signll Conference on Computational Natural Language Learning, 26 August 2016, pages 280-290 discloses that abstractive text summarization using Attentional Encoder-Decoder Recurrent Neural Networks, and show that they achieve state-of-the-art performance on two different corpora. The authors propose several novel models that address critical problems in summarization that are not adequately modeled by the basic architecture, such as modeling key-words, capturing the hierarchy of sentence-toword structure, and emitting words that are rare or unseen at training time. Their work shows that many of their proposed models contribute to further improvement in performance. They also propose a new dataset consisting of multi-sentence summaries, and establish performance benchmarks for further research.

Greff et al., "LSTM: A Search Space Odyssey," IEEE Transactions on Neural Networks and Learning Systems, 1 January 2016; pages 1-18 discloses that several variants of the Long Short-Term Memory (LSTM) architecture for recurrent neural networks have been proposed since its inception in 1995. In recent years, these networks have become the state-of-the-art models for a variety of machine learning problems. This has led to a renewed interest in understanding the role and utility of various computational components of typical LSTM variants. In this paper, the authors present the first large-scale analysis of eight LSTM variants on three representative tasks: speech recognition, handwriting recognition, and polyphonic music modeling. The hyperparameters of all LSTM variants for each task were optimized separately using random search, and their importance was assessed using the powerful fANOVA framework. In total, they summarize the results of 5400 experimental runs ($\approx$ 15 years of CPU time), which makes their study the largest of its kind on LSTM networks. Their results show that none of the variants can improve upon the standard LSTM architecture significantly, and demonstrate the forget gate and the output activation function to be its most critical components. They further observe that the studied hyperparameters are virtually independent and derive guidelines for their efficient adjustment.

Bradbury et al., "Quasi-Recurrent Neural Networks," ARXIV.ORG, Cornell University Library, 201 Olin Library Cornell University Ithaca, NY 14853, 5 November 2016, discloses that recurrent neural networks are a powerful tool for modeling sequential data, but the dependence of each timestep's computation on the previous timestep's output limits parallelism and makes RNNs unwieldy for very long sequences. The authors introduce quasi-recurrent neural networks (QRNNs), an approach to neural sequence modeling that alternates convolutional layers, which apply in parallel across timesteps, and a minimalist recurrent pooling function that applies in parallel across channels. Despite lacking trainable recurrent layers, stacked QRNNs have better predictive accuracy than stacked LSTMs of the same hidden size. Due to their increased parallelism, they are up to 16 times faster at train and test time. Experiments on language modeling, sentiment classification, and character-level neural machine translation demonstrate these advantages and underline the viability of QRNNs as a basic building block for a variety of sequence tasks.

## BRIEF DESCRIPTION OF THE DRAWINGS

In the drawings, like reference characters generally refer to like parts throughout the different views. Also, the drawings are not necessarily to scale, with an emphasis instead generally being placed upon illustrating the principles of the technology disclosed. In the following description, various implementations of the technology disclosed are described with reference to the following drawings, in which:

**FIG. 1** illustrates aspects of a quasi-recurrent neural network (QRNN) that increases computational efficiency in natural language processing (NLP) tasks.

**FIG. 2** shows one implementation of a convolutional layer that operates in parallel over a time series of input vectors and concurrently outputs convolutional vectors.

**FIG. 3** depicts one implementation of a convolutional vector comprising an activation vector, a forget gate vector, an input gate vector, and an output gate vector.

**FIG. 4** is one implementation of multiple convolutional vectors, comprising activation vectors and gate vectors, concurrently output by a convolutional layer.

**FIG. 5** illustrates one implementation of feature values at ordinal positions in activation vectors and gate vectors

concurrently output by a convolutional layer.

**FIG. 6** is one implementation of a single-gate pooling layer that applies accumulators in parallel to concurrently accumulate an ordered set of feature sums in a state vector, and sequentially outputs successive state vectors.

**FIG. 7** illustrates one implementation a multi-gate pooling layer that applies accumulators in parallel to concurrently accumulate an ordered set of feature sums in a state vector, and sequentially outputs successive state vectors.

**FIG. 8** depicts one implementation of successive state vectors sequentially output by a pooling layer.

**FIG. 9** is one implementation of a quasi-recurrent neural network (QRNN) encoder-decoder model.

**FIG. 10** is a table that shows accuracy comparisons of the QRNN on sentiment classification task.

**FIG. 11** shows one implementation of visualization of QRNN's state vectors.

**FIG. 12** depicts a table that shows accuracy comparisons of the QRNN on language modeling task.

**FIG. 13** is a table that shows accuracy comparisons of the QRNN on language translation task.

**FIG. 14** depicts charts that show training speed and inference speed of the QRNN.

**FIG. 15** is a simplified block diagram of a computer system that can be used to implement the quasi-recurrent neural network (QRNN).

## DETAILED DESCRIPTION

The following discussion is presented to enable any person skilled in the art to make and use the technology disclosed, and is provided in the context of a particular application and its requirements. Various modifications to the disclosed implementations will be readily apparent to those skilled in the art, and the general principles defined herein may be applied to other implementations and applications without departing from the scope of the appended claims. Thus, the technology disclosed is not intended to be limited to the implementations shown, but is to be accorded the widest scope consistent with the appended claims.

The discussion is organized as follows. First, an introduction describing some of the problems addressed by the QRNN is presented. Then, the convolutional layer that implements timestep-wise parallelism is described, followed by the pooling layer that implements feature dimension-wise parallelism. Next, the QRNN encoder-decoder model is discussed. Lastly, some experimental results illustrating performance of the QRNN on various NLP tasks are provided.

## Introduction

Recurrent neural networks (RNNs), including gated variants such as the long short-term memory (LSTM) have become the standard model architecture for deep learning approaches to sequence modeling tasks. RNNs repeatedly apply a function with trainable parameters to a hidden state.

Recurrent layers can also be stacked, increasing network depth, representational power and often accuracy. RNN applications in the natural language domain range from sentence classification to word-level and character-level language modeling. RNNs are also commonly the basic building block for more complex models for tasks such as machine translation or question answering.

In RNNs, computation at each timestep depends on the results from the previous timestep. Due to this reason, RNNs, including LSTMs, are limited in their capability to handle tasks involving very long sequences, such as document classification or character-level machine translation, as the computation of features or states for different parts of the document cannot occur in parallel.

Convolutional neural networks (CNNs), though more popular on tasks involving image data, have also been applied to sequence encoding tasks. Such models apply time-invariant filter functions in parallel with windows along the input sequence. CNNs possess several advantages over recurrent models, including increased parallelism and better scaling to long sequences such as those often seen with character-level language data. Convolutional models for sequence processing have been more successful when combined with RNN layers in a hybrid architecture because traditional max-pooling and average-pooling approaches to combining convolutional features across timesteps assume time invariance and hence cannot make full use of large-scale sequence order information.

The technology disclosed provides a quasi-recurrent neural network (QRNN) that addresses drawbacks of standard models like RNNs and CNNs. QRNNs allow for parallel computation across both timesteps and feature dimensions, enabling high throughput and good scaling of long sequences. Like RNNs, QRNNs allow the output to depend on the overall order of elements in the sequence. QRNNs are tailored to several natural language tasks, including document-level sentiment classification, language modeling, and character-level translation. QRNNs outperform strong LSTM baselines on all three tasks while dramatically reducing computation time.

Intuitively, many aspects of the semantics of long sequences are context-invariant and can be computed in parallel (e.g., convolutionally), but some aspects require long-distance context and must be computed recurrently. Many existing neural network architectures either fail to take advantage of the contextual information or fail to take advantage of the parallelism. QRNNs exploit both parallelism and context, exhibiting advantages from both convolutional and recurrent neural networks. QRNNs have better predictive accuracy than LSTM-based models of equal hidden size, even though they use fewer parameters and run substantially faster.

Experiments show that the speed and accuracy advantages remain consistent across tasks and at both word and character levels. Extensions to both CNNs and RNNs are directly applicable to the QRNN, while the model's hidden states are more interpretable than those of other recurrent architectures as its channels maintain their independence across timesteps. Therefore, an opportunity arises for the QRNNs to serve as a building block for long-sequence tasks that were previously impractical with traditional RNNs.

### Quasi-Recurrent Neural Network (QRNN)

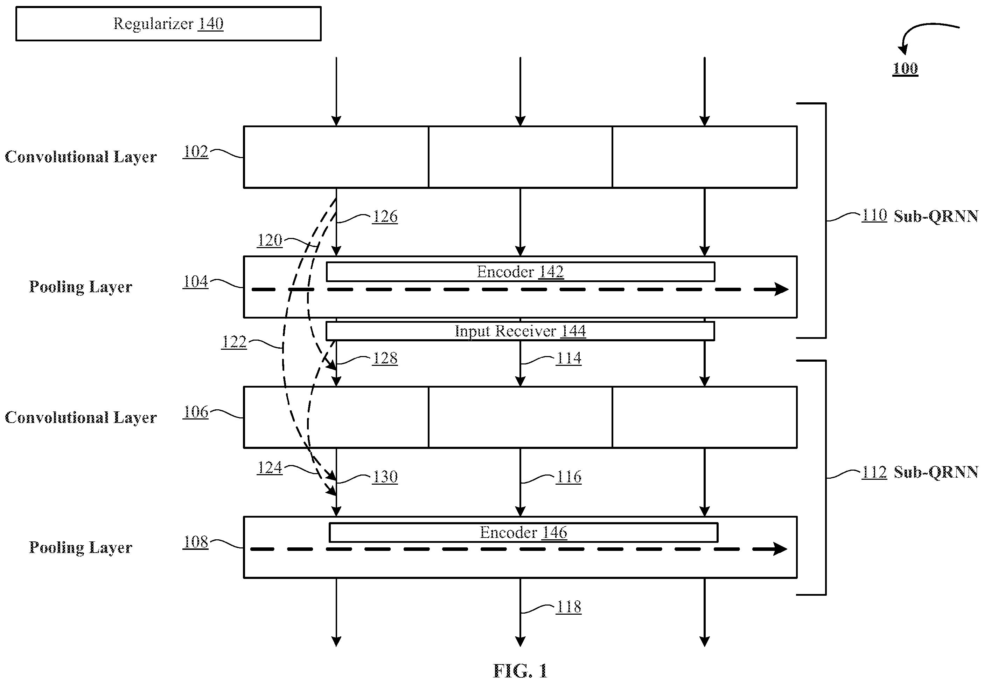

**FIG. 1** shows the computation structure of a QRNN **100.** QRNN **100** contains two kinds of components or layers, namely, convolutional layers (like **102, 106**) and pooling layers (like **104, 108**). The convolutional layers **102, 106** allow fully parallel computation across sequence minibatches and timesteps. The pooling layers **104, 108** lack trainable parameters and apply fully parallel computation across sequence minibatches and feature dimensions. In **FIG. 1,** the continuous blocks of the pooling layers **104, 108** indicate parameterless functions that operate in parallel along the feature dimensions.

**FIG. 1** also shows sub-QRNNs **110, 112.** Sub-QRNN **110** contains at least one convolutional layer **102** and at least one pooling layer **104.** Sub-QRNN **112** contains at least one convolutional layer **106** and at least one pooling layer **108.** In other implementations, each of the sub-QRNNs **110, 112** include any number of convolutional layers (e.g., two, three, or more) and any number of pooling layers (e.g., two, three, or more). Also in other implementations, QRNN 100 can include one or more sub-QRNNs.

In some implementations, QRNN **100** contains a sequence of sub-QRNNs arranged from a lowest sub-QRNN in the sequence to a highest sub-QRNN in the sequence. As used herein, a QRNN with multiple sub-QRNNs arranged in a sequence is referred to as a "stacked QRNN". A stacked QRNN, such as QRNN **100,** processes received input data through each of the sub-QRNNs in the sequence to generate an alternative representation of the input data. In addition, the sub-QRNNs, such as sub-QRNNs **110, 112,** receive, as input, a preceding output generated by a preceding sub-QRNN in the sequence. These steps of received are embodied by the input receiver (e.g., input receiver **144**) of the sub-QRNNs. For example, in **FIG. 1,** second convolutional layer **106** of the second sub-QRNN **112** processes, as input, output from the preceding first pooling layer **104** of the first sub-QRNN **110.** In contrast, first convolutional layer **102** of the first sub-QRNN **110** takes, as input, embedded vectors (e.g., word vectors, character vectors, phrase vectors,) mapped to a high-dimensional embedding space. Thus, in some implementations, varied input is provided to different sub-QRNNs of a stacked QRNN and/or to different components (e.g., convolutional layers, pooling layers) within a sub-QRNN.

Furthermore, QRNN **100** processes the output from a preceding sub-QRNN through a convolutional layer to produce an alternative representation of the preceding output. Then, the QRNN **100** processes the alternative representation through a pooling layer to produce an output. For example, in **FIG. 1,** the second sub-QRNN **112** uses the second convolutional layer **106** to convolve preceding output **114** from the first pooling layer **104** of the first sub-QRNN **110.** The convolution produces an alternative representation **116,** which is further processed by the second pooling layer **108** of the second sub-QRNN **112** to produce an output **118.**

In some implementations, QRNN **100** also includes skip connections between the sub-QRNNs and/or between layers in a sub-QRNN. The skip connections, such as **120, 122, 124,** concatenate output of a preceding layer with output of a current layer and provide the concatenation to a following layer as input. In one example of skip connections between layers of a sub-QRNN, skip connection **120** concatenates output **126** of the first convolutional layer **102** of the first sub-QRNN **110** with output **128** of the first pooling layer **104** of the first sub-QRNN **110.** The concatenation is then provided as input to the second convolutional layer **106** of the second sub-QRNN **112.** In one example of skip connections between sub-QRNNs, skip connection **122** concatenates the output **126** of the first convolutional layer **102** of the first sub-QRNN **110** with output **130** of the second convolutional layer **106** of the second sub-QRNN **112.** The concatenation is then provided as input to the second pooling layer **108** of the second sub-QRNN **112.** Likewise, skip connection **124** concatenates the output **128** of the first pooling layer **104** of the first sub-QRNN **110** with output **130** of the second convolutional layer **106** of the second sub-QRNN **112.** The concatenation is then provided as input to the second pooling layer **108** of the second sub-QRNN **112.**

For sequence classification tasks, QRNN **100** includes skip connections between every QRNN layer, which are referred to herein as "dense connections". In one implementation, QRNN **100** includes dense connections between the input embeddings and every QRNN layer and between every pair of QRNN layers. This results in QRNN **100** concatenating each QRNN layer's input to its output along the feature dimension, before feeding the resulting state vectors into the next layer. The output of the last layer is then used as the overall encoding result.

**QRNN Convolutional Layer - Timestep Parallelism**

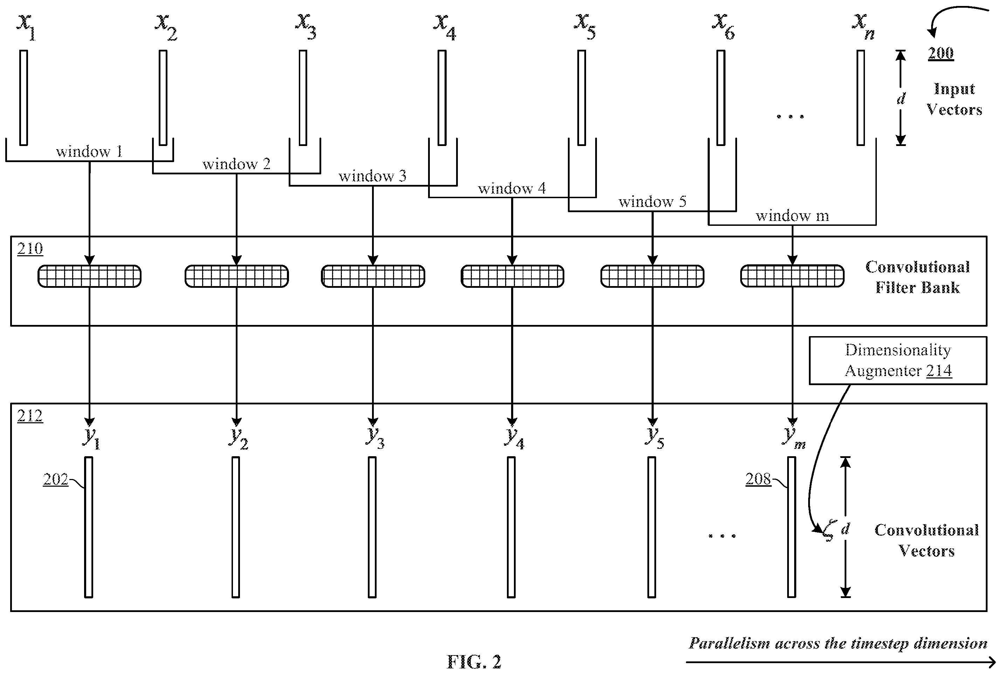

**FIG. 2** shows one implementation of operation of a QRNN convolutional layer **200**. **FIG**. **2** shows $d$ -dimensional input vectors $x_1,..., x_6,..., x_n$ representing $n$ elements in an input sequence $X \in \mathbb{R}^{d \times n}$. Input vectors $x_1,...., x_6,..., x_n$ are respectively produced over $n$ timesteps. In one implementation, the input sequence is a word-level input sequence with $n$ words. In another implementation, the input sequence is a character-level input sequence with $n$ characters. In yet another implementation, the input sequence is a phrase-level input sequence with $n$ phrases. The input vectors $x_1,...,x_6,..., x_n$ are mapped to a high-dimensional vector space, referred to herein as an "embedding space". The embedding space is defined using an embedding matrix $E \in \mathbb{R}^{d \times |v|}$, where $v$ represents the size of the vocabulary. In implementations, the embedding space can be a word embedding space, a character embedding space, or a phrase embedding space. In some implementations, the input vectors $x_1,..., x_6,..., x_n$ are initialized using pre-trained embedding models like GloVe and word2vec. In yet other implementations, the input vectors are based on one-hot encoding.

QRNN convolutional layer **200** performs parallel convolutions to $m$ time series windows over the input vectors $x_1,..., x_6,..., x_n$ with a bank of $b$ filters to concurrently output a sequence $Y \in \mathbb{R}^{\zeta d \times m}$ of $m$ convolutional vectors $y_1,..., y_5,..., y_m$. $\zeta d$ is the dimensionality of each convolutional vector, where $\zeta$ identifies a dimensionality augmentation parameter. These steps of producing concurrent convolutional vectors are embodied by the convolutional vector producers (e.g., convolutional vector producer **212**) of the convolutional layers. These steps of augmentation are embodied by the dimensionality augmenters (e.g., dimensionality augmenter **214**) of the convolutional layers. As used herein, "parallelism across the timestep or time series dimension" or "timestep or time series parallelism" refers to the QRNN convolutional layer **200** applying a convolutional filter bank in parallel to the input vectors $x_1,..., x_6,..., x_n$ over $m$ time series windows to concurrently produce $m$ convolutional vectors $y_1,..., y_5,..., y_m$.

In implementations, dimensionality of the concurrently produced convolutional vectors $y_1,..., y_5,..., y_m$ is augmented relative to dimensionality of the input vectors $x_1,..., x_6,..., x_n$ in dependence upon a number of convolutional filters in the convolutional filter bank. Thus the dimensionality augmentation parameter $\zeta$ is proportionally dependent on the number of convolutional filters in the convolutional filter bank such that $\zeta d = b$. For example, if the dimensionality of the input vectors $x_1,..., x_6,..., x_n$ is 100 , i.e., $d = 100$ , and the convolutional filter bank contains 200 convolutional filters, i.e., $b = 200$ , then the dimensionality of the concurrently outputted convolutional vectors $y_1,..., y_5,..., y_m$ is 200 , i.e., $\zeta d = 200$ and $\zeta = 2$. In other implementations, the convolutional filter bank (e.g., convolutional filter bank **210**) is configured with varied number of convolutional filters, such that the dimensionality $\zeta d$ of the concurrently outputted convolutional vectors is 300, 400, 500, 800, or any other number.

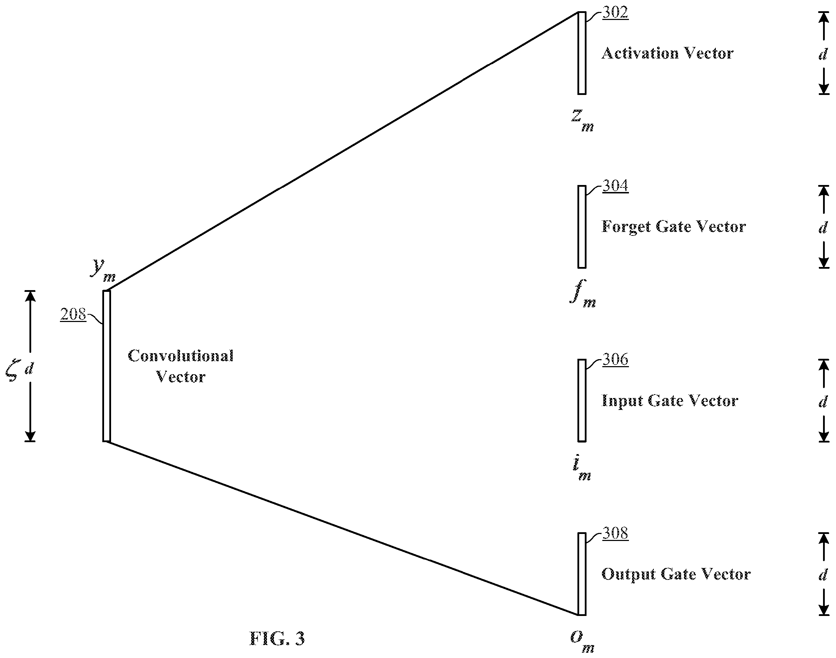

**FIG. 3** depicts one implementation of a convolutional vector $y_m$ **208** comprising an activation vector $z_m$ **302,** a forget gate vector $f_m$ **304,** an input gate vector $i_m$ **306,** and an output gate vector $o_m$ **308.** In implementations, a convolutional vector can include any combination of an activation vector and one or more gate vectors. For example, in one implementation, a convolutional vector **208** comprises an activation vector **302** and a forget gate vector **304.** In another implementation, a convolutional vector **208** comprises an activation vector **302,** a forget gate vector **304,** and input gate vector **306.** In yet another implementation, a convolutional vector **208** comprises an activation vector **302,** a forget gate vector **304,** and output gate vector **308.**

In implementations, a number of gate vectors in a convolutional vector **208** is configured in dependence upon the dimensionality $\zeta d$ of the convolutional vector, such that $\zeta d$ dimensions are proportionally split between an activation vector and one or more gate vectors of the convolutional vector. In one example, for convolutional vector $y_m$ **208**, if $\zeta d = 400$, then the activation vector $z_m$ **302,** the forget gate vector $f_m$ **304,** the input gate vector $i_m$ **306,** and the output gate vector $o_m$ **308,** all have the same dimensionality $d = 100$. In another example, for a convolutional vector of dimensionality $\zeta d = 200$, the convolutional vector comprises an activation vector and only one gate vector (e.g., a forget gate vector), each of dimensionality $d = 100$. In yet another example, for a convolutional vector of dimensionality $\zeta d = 300$, the convolutional vector comprises an activation vector and two gate vectors (e.g., a forget gate vector and a output gate vector or a forget gate vector and an input gate vector), each of dimensionality $d = 100$.

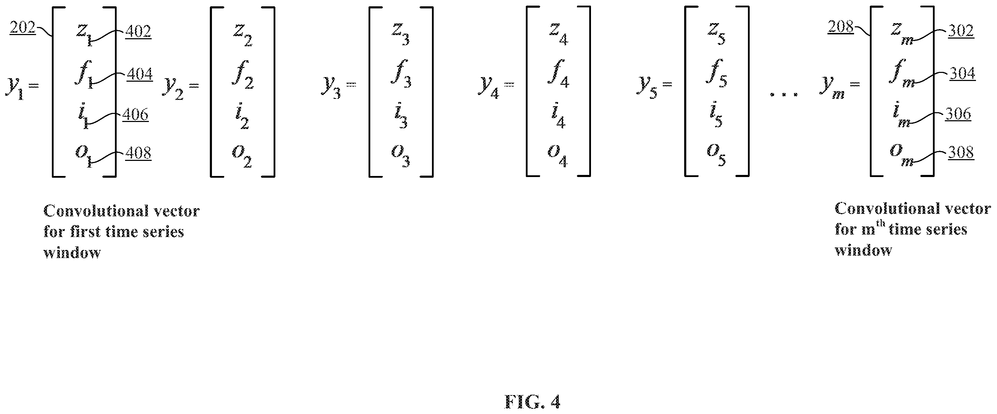

**FIG. 4** is one implementation of multiple convolutional vectors $y_1,..., y_5,..., y_m$, and comprising activation vectors and gate vectors, concurrently output by the QRNN convolutional layer **200**. **FIG. 4** shows a convolutional vector $y_1$ **202** generated by the QRNN convolutional layer **200** for the first time series window. Convolutional vector $y_1$ **202** comprises an activation vector $z_1$ **402,** a forget gate vector $f_1$ **404,** an input gate vector $i_1$ **406,** and an output gate vector $o_1$ **408.** Similarly, the QRNN convolutional layer **200** produces the convolutional vector $y_m$ **208** for the m$^{th}$ time series window.

In some implementations, in order to be useful for tasks that include prediction of the next element of an input sequence, the convolutional filters must not allow the computation for any given timestep to access information from future timesteps. That is, with filters of width $k$, each convolutional vector $y_t$ depends only on input vectors $x_{t-k+1}$ through $x_t$. Such a convolutional operation is referred to herein as "masked convolution". In one implementation, masked convolution is applied by padding the input to the left by the convolution's filter size minus one.

The concurrently produced convolutional vectors $y_1,..., y_5,..., y_m$ provide the activation vectors and the gate vectors that are used by a QRNN pooling layer to implement one or more QRNN pooling functions. In one implementation, prior to being used by a QRNN pooling layer, the activation vectors and the gate vectors are subjected to preprocessing. In one implementation, the preprocessing includes passing the activation vectors through a hyperbolic tangent nonlinearity activation (tanh ). In one implementation, the preprocessing includes passing the gate vectors through an elementwise sigmoid nonlinearity activation ($\sigma$ ). For a QRNN pooling function that requires a forget gate vector $f_t$ and an output gate vector $o_t$ at each timestep window, the computations in a corresponding QRNN convolutional layer are defined by the following mathematical formulations:

$$Z = \tanh (W_z * X)$$

$$F = \sigma (W_f * X)$$

$$O = \sigma (W_o * X)$$

where the activation vector $W_z$, $W_f$, and $W_o$, each in $\mathbb{R}^{k \times n \times m}$ , are convolutional filter banks and * denotes a masked convolution along the timestep dimension.

In one exemplary implementation, when the filter width of the convolutional filters is 2, the activation vector and the gate vectors represent LSTM-like gates and are defined by the following mathematical formulations:

$$z_t = \tanh (W_z^1 x_{t-1} + W_z^2 x_t)$$

$$f_t = \sigma (W_f^1 x_{t-1} + W_f^2 x_t)$$

$$i_t = \sigma (W_i^1 x_{t-1} + W_i^2 x_t)$$

$$o_t = \sigma (W_o^1 x_{t-1} + W_o^2 x_t)$$

where the activation vector $z_t$, the forget gate vector $f_t$, the input gate vector $i_t$, and the output gate vector $o_t$ are concurrently produced by applying respective convolutional filter weight matrices $W_z^1$, $W_z^2$, $W_f^1$, $W_f^2$, $W_i^1$, $W_i^2$, $W_o^1$, $W_o^2$ to the input vectors $x_{t-1}$ and $x_t$.

In other implementations, convolutional filters of larger width are used to compute higher $n$-gram features at each timestep window. In implementations, larger widths are especially effective for character-level tasks.

### QRNN Pooling Layer - QRNN Pooling Functions

QRNN pooling layers implement various QRNN pooling functions. QRNN pooling functions are controlled by one or more gate vectors provided by a corresponding QRNN convolutional layer. The gate vectors mix state vectors across timestep windows, while independently operating on each element of a state vector. In implementations, QRNN pooling functions are constructed from elementwise gates of an LSTM cell. In other implementations, QRNN pooling functions are constructed based on variants of an LSTM, such as no input gate (NIG) variant, no forget gate (NFG) variant, no output gate (NOG) variant, no input activation function (NIAF) variant, no output activation function (NOAF) variant, coupled input-forget gate (CIFG) variant, and full gate recurrent (FGR) variant. In yet other implementations, QRNN pooling functions are constructed based on operations of a gated recurrent unit (GRU), or any other type of RNN, or any other conventional or future-developed neural network.

### f-*Pooling*

Consider the following mathematical formulation which defines one implementation of a QRNN pooling function, referred to herein as *"f*-pooling", which uses a single gate vector:

$$c_t = f_t \odot c_{t-1} + (1 - f_t) \odot z_t \qquad (1)$$

where,

$c_t$ is the current state vector
$f_t$ is the current forget state vector
$c_{t-1}$ is the previous state vector
$z_t$ is the current activation state vector
$\odot$ denotes elementwise multiplication or Hadamard Product

Regarding the state vector, a current state vector $c_t$ is the consolidation of a current activation vector $z_t$ with the past state vector $c_{t-1}$. The current activation vector $z_t$ is identified by a current convolutional vector $y_t$, which is derived from a convolution over a current time series window of input vectors $x_t,...,x_{t+k-1}$, where $k$ is the convolutional filter size or width. Anthropomorphically, the current state vector $c_t$ knows the recipe of combining or mixing a currently convolved input vector window $x_t,...,x_{t+k-1}$ with the past state vector $c_{t-1}$ so as to summarize the current input vector window $x_t,...,x_{t+k-1}$ in light of the contextual past. Thus the current activation vector $z_t$ and the past state vector $c_{t-1}$ are used to generate the current state vector $c_t$ that includes aspects of the current input vector window $x_t,...,x_{t+k-1}$.

Regarding the forget gate vector, a current forget gate vector $f_t$ makes an assessment of how much of the past state vector $c_{t-1}$ is useful for the computation of the current state vector $c_t$. In addition, the current forget gate vector $f_t$ also provides an assessment of how much of the current activation vector $z_t$ is useful for the computation of the current state vector $c_t$.

### fo-*Pooling*

In some implementations, a QRNN pooling function, which uses an output gate vector in addition to the forget gate vector, is referred to herein as " *fo*-pooling" and defined by the following mathematical formulations:

$$c_t = f_t \odot c_{t-1} + (1 - f_t) \odot z_t \qquad (1)$$

$$h_t = o_t \odot c_t \qquad (2)$$

where,

$h_t$ is the current hidden state vector
$o_t$ is the current output state vector
$c_t$ is the current state vector
$\odot$ denotes elementwise multiplication or Hadamard Product

The current state vector $c_t$ may contain information that is not necessarily required to be saved. A current output gate vector $o_t$ makes an assessment regarding what parts of the current state vector $c_t$ need to be exposed or present in a current hidden state vector $h_t$.

### ifo-*Pooling*

Consider the following mathematical formulation which defines one implementation of a QRNN pooling function, referred to herein as *"ifo*-pooling", which uses multiple gate vectors:

$$c_t = f_t \odot c_{t-1} + i_t \odot z_t \qquad (3)$$

where,

$c_t$ is the current state vector
$f_t$ is the current forget state vector
$c_{t-1}$ is the previous state vector
$i_t$ is the current input state vector
$z_t$ is the current activation state vector
$\odot$ denotes elementwise multiplication or Hadamard Product

Regarding the input gate vector, for generating the current state vector $c_t$, a current input gate vector $i_t$ takes into account the importance of the current activation vector $z_t$, and, by extension, the importance of the current input vector window $x_t,...,x_{t+k-1}$. The input gate vector $i_t$ is an indicator of how much of the current input is worth preserving and thus is used to gate the current state vector $c_t$.

Therefore, anthropomorphically, mathematical formulation (3) involves: taking advice of the current forget gate vector $f_t$ to determine how much of the past state vector $c_{t-1}$ should be forgotten, taking advice of the current input gate vector $i_t$ to determine how much of the current activation vector $z_t$ should be taken into account, and summing the two results to produce the current state vector $c_t$.

## ORNN Pooling Layer - Feature Dimension Parallelism

A QRNN pooling layer calculates a state vector for each of the $m$ time series windows using one or more QRNN pooling functions such as $f$-pooling, $fo$-pooling, and $ifo$-pooling. Each state vector is composed of a plurality of elements. Each element of a state vector is referred to herein as a "feature sum". Each feature sum of a state vector is identified by a corresponding ordinal position in the state vector.

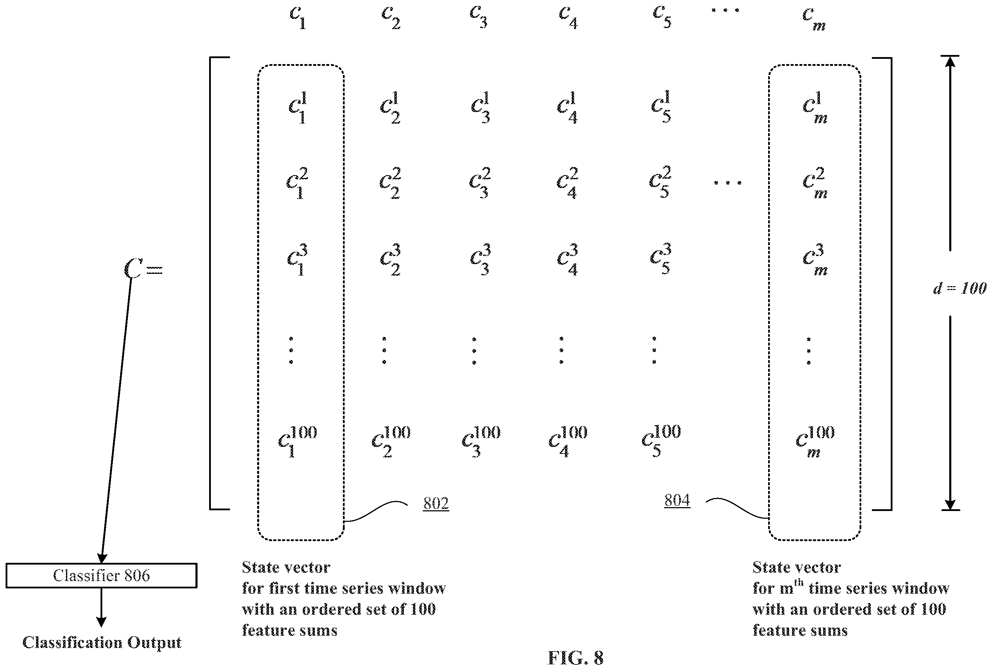

Consider the state vector sequence $C$ depicted in **FIG. 8.** Sequence $C$ comprises state vectors $c_1,...,c_m$. In one example, a state vector $c_1$ **802** for the first time series window is composed of the following ordered set of 100 feature sums:

$$c_1^1, \ldots, c_1^{100}$$

where the superscript identifies the ordinal position of a given feature sum in a particular state vector and the subscript identifies the particular state vector, and, by extension, also the particular time series window.

Similarly, a state vector $c_m$ 804 for the m$^{th}$ time series window is also composed of an ordered set of 100 feature sums $c_m^1,...,c_m^{100}$.

The number of feature sums or elements in a state vector is proportionally dependent on the dimensionality $d$ of the state vector. Thus, since state vector $c_1$ **802** has a dimensionality of 100, i.e., $d = 100$, it has 100 feature sums. Also, the dimensionality $d$ of a state vector is dependent on the dimensionality of the activation vectors and gate vectors used to calculate the state vector. In implementations, the activation vectors, the gate vectors, and the resulting state vectors share the same dimensionality $d$.

Typically, all the state vectors produced by a QRNN pooling layer for a given input sequence share the same dimensionality $d$. Thus, as shown in **FIG. 8,** state vectors $c_1,...,c_m$ have the same number of feature sums or elements, with each feature sum being identified by a corresponding ordinal position within each state vector.

Like state vectors, the activation vectors and the gate vectors are also composed of a plurality of elements. Each element of an activation vector is referred to herein as a "feature value". Similarly, each element of a gate vector is also referred to herein as a "feature value". Each feature value of an activation vector is identified by a corresponding ordinal position in the activation vector. Similarly, each feature value of a gate vector is identified by a corresponding ordinal position in the gate vector.

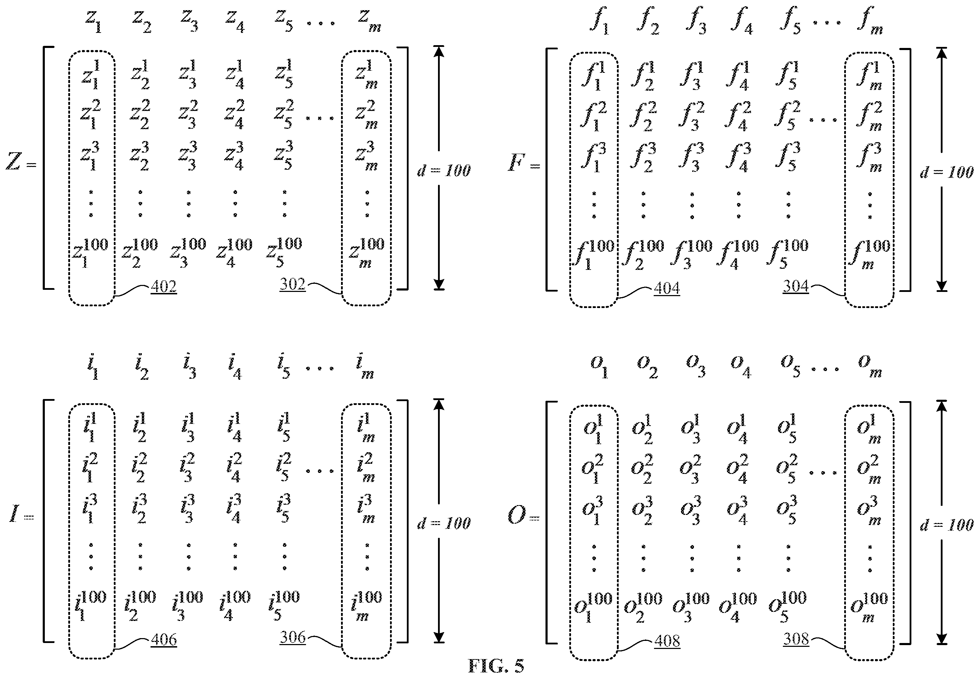

Turning to **FIG. 5,** it shows an activation vector sequence $Z$ of $z_1,...,z_m$ activation vectors, a forget gate vector sequence $F$ of $f_1,...,f_m$ forget gate vectors, an input gate vector sequence $I$ of $i_1,...,i_m$ input gate vectors, and an output gate vector sequence $O$ of $o_1,...,o_m$ output gate vectors. As discussed above, the QRNN convolutional layer 200 concurrently outputs all the activation vectors and the gate vectors in the sequences $Z$, $F$, $I$, and $O$.

In one example, an activation vector $z_1$ **402** for the first time series window is composed of the following ordered set of 100 feature values:

$$z_1^1, \ldots, z_1^{100}$$

where the superscript identifies the ordinal position of a given feature value in a particular activation vector and the subscript identifies the particular activation vector, and, by extension, also the particular time series window.

Similarly, an activation vector $z_m$ **302** in **FIG. 3** for the m$^{th}$ time series window is also composed of an ordered set of

100 feature values $z_m^1,...,z_m^{100}$.

In another example, a forget gate vector $f_1$ **404** for the first time series window is composed of the following ordered set of 100 feature values:

$$f_1^1, \cdots, f_1^{100}$$

where the superscript identifies the ordinal position of a given feature value in a particular forget gate vector and the subscript identifies the particular forget gate vector, and, by extension, also the particular time series window.

Similarly, a forget gate vector $f_m$ 304 for the $m^{th}$ time series window is also composed of an ordered set of 100 feature values $f_m^1,...,f_m^{100}$.

In yet another example, an input gate vector $i_1$ **406** for the first time series window is composed of the following ordered set of 100 feature values:

$$i_1^1, \cdots, i_1^{100}$$

where the superscript identifies the ordinal position of a given feature value in a particular input gate vector and the subscript identifies the particular input gate vector, and, by extension, also the particular time series window.

Similarly, an input gate vector $i_m$ 306 for the $m^{th}$ time series window is also composed of an ordered set of 100 feature values $i_m^1, ..., i_m^{100}$.

In yet further example, an output gate vector $o_1$ **408** for the first time series window is composed of the following ordered set of 100 feature values:

$$o_1^1, \ldots, o_1^{100}$$

where the superscript identifies the ordinal position of a given feature value in a particular output gate vector and the subscript identifies the particular output gate vector, and, by extension, also the particular time series window.

Similarly, an output gate vector $o_m$ **308** for the $m^{th}$ time series window is also composed of an ordered set of 100 feature values $o_m^1,...,o_m^{100}$.

As used herein, "parallelism across the feature dimension" or "feature parallelism" refers to a QRNN pooling layer operating in parallel over feature values of a convolutional vector, i.e., over corresponding feature values in a respective activation vector and one or more gate vectors produced by the convolutional vector, to concurrently accumulate, in a state vector, an ordered set of feature sums. The accumulation of the feature sums can be based on one or more QRNN pooling functions such as *f*-pooling, *fo*-pooling, and *ifo*-pooling. Element-wise accumulation involves the feature values in the gate vectors serving as parameters that, respectively, apply element-wise by ordinal position to the feature values in the activation vector.

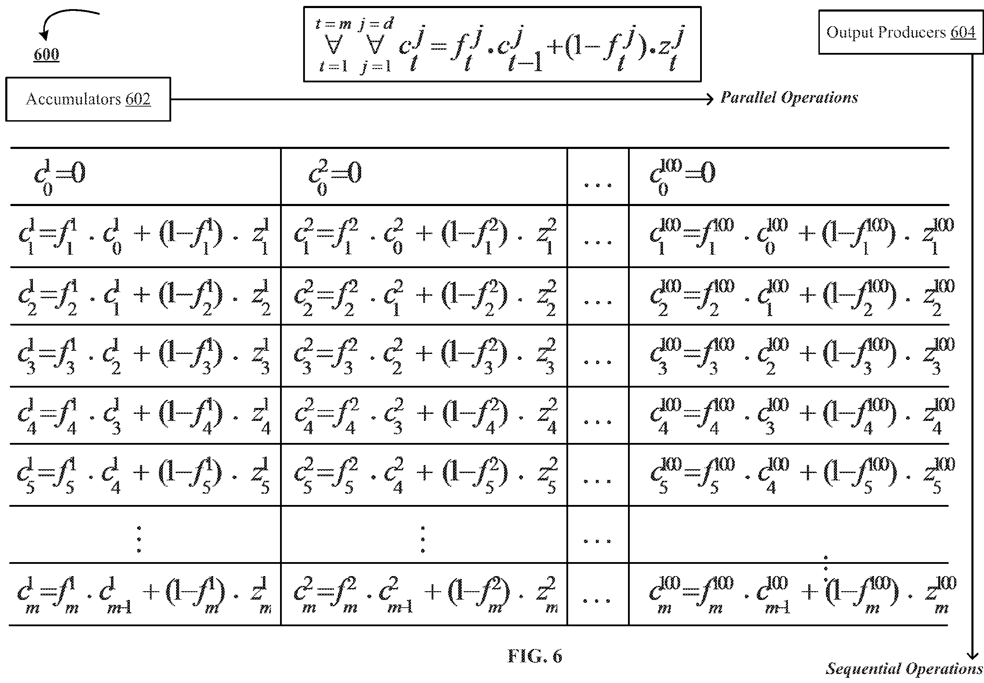

Consider one example of feature parallelism in **FIG. 6,** which is based on *f*-pooling implemented by a single-gate QRNN pooling layer **600**. Note that the QRNN pooling layer **600** applies *f*-pooling "ordinal position-wise" using the following mathematical formulation:

$$\overset{t=m}{\underset{t=1}{\forall}} \overset{j=d}{\underset{j=1}{\forall}} c_t^j = f_t^j \cdot c_{t-1}^j + (1 - f_t^j) \cdot z_t^j \qquad (4)$$

where, the pair for all symbols indicate operations over two dimensions of a matrix and

$$\overset{t=m}{\underset{t=1}{\forall}}$$ denotes operation over successive time series windows

$$\overset{j=d}{\underset{j=1}{\forall}}$$ denotes operations over ordinal positions, which are parallelizable

$c_t^j$ is the feature sum at the $j$ ordinal position in the current state vector $c_t$

$f_t^j$ is the feature value at the $j$ ordinal position in the current forget gate vector $f_t$

$c_{t-1}^j$ is the feature value at the $j$ ordinal position in the previous state vector $c_{t-1}$

$z_t^j$ is the feature value at the $j$ ordinal position in the current activation vector $Zt$

• denotes multiplication

Mathematical formulation (4) involves computing a feature sum $c_t^j$ for a given ordinal position $j$ in a state vector $c_t$ for a current time series window $t$ in dependence upon: a feature sum $c_{t-1}^j$ at the same ordinal position $j$ in a state vector $c_{t-1}$ for a previous time series window $t$-1, a feature value $f_t^j$ at the same ordinal position $j$ in a forget gate vector $f_t$ for a current time series window $t$, and a feature value $z_t^j$ at the same ordinal position $j$ in a forget gate vector $z_t$ for a current time series window $t$.

Therefore, anthropomorphically, in mathematical formulation (4), each feature value of a current forget gate vector controls ordinal position-wise accumulation of a respective feature value from a current activation vector and a respective feature sum from a previous state vector. Thus, in **FIG. 6,** feature sum $c_1^1$ is accumulated in dependence upon feature sum $c_0^1$, feature value $f_1^1$, and feature value $z_1^1$. Similarly, feature sum $c_1^2$ is accumulated in dependence upon feature sum $c_0^2$, feature value $f_1^2$, and feature value $z_1^2$. Likewise, feature sum $c_1^{100}$ is accumulated in dependence upon feature sum $c_0^{100}$, feature value $f_1^{100}$, and feature value $z_1^{100}$. In implementations, feature sums of a first state vector $c_0$ can be initialized to zero, or to pre-trained values, or to values dependent on the feature values of an activation vector.

Regarding feature parallelism, for the current time series state vector $c_t$, the QRNN pooling layer **600** applies accumulators (e.g., accumulators **602**) in parallel to concurrently accumulate feature sums for all the ordinal positions $\bigforall_{j=1}^{j=d}$ in the state vector $c_t$ in accordance with the mathematical formulation (4). Thus, in **FIG. 6,** feature sums $c_1^1$, ..., $c_1^{100}$ for state vector $c_1$ **802** for the first time series window are accumulated in parallel. Similarly, feature sums $c_2^1,...,c_2^{100}$ for state vector $c_2$ for the second time series window are accumulated in parallel. Likewise, feature sums $c_m^1,...,c_m^{100}$ for state vector $c_m$ **804** for the $m^{th}$ time series window are accumulated in parallel.

In addition, the QRNN pooling layer **600** sequentially outputs state vectors $c_1,...,c_m$ for each successive time series window $\bigforall_{t=1}^{t=m}$ among the $m$ time series windows. These steps of sequentially outputting state vectors are embodied by the output producers (e.g., output producers **604**) of the QRNN **100.**

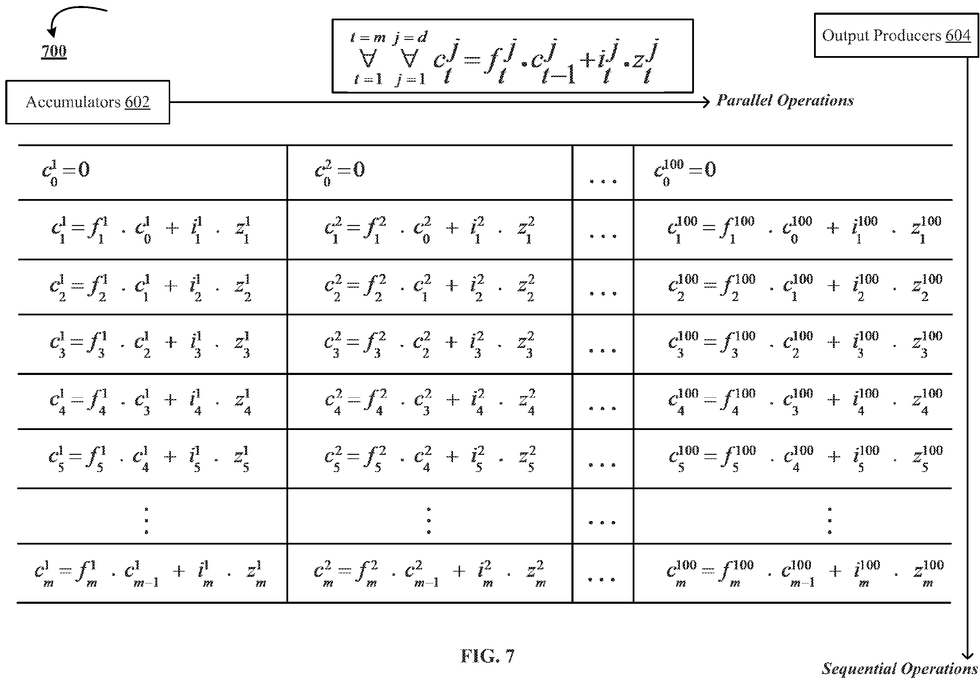

Consider another example of feature parallelism in **FIG. 7,** which is based on *ifo*-pooling implemented by a multi-gate pooling layer **700**. Note that the QRNN pooling layer **700** applies *ifo*-pooling "ordinal position-wise" using the following mathematical formulation:

$$\bigforall_{t=1}^{t=m} \bigforall_{j=1}^{j=d} c_t^j = f_t^j \cdot c_{t-1}^j + i_t^j \cdot z_t^j \qquad (5)$$

where, the pair for all symbols indicate operations over two dimensions of a matrix and

$$\mathop{\forall}\limits_{t=1}^{t=m}$$ denotes operation over successive time series windows

$$\mathop{\forall}\limits_{j=1}^{j=d}$$ denotes operations over ordinal positions, which are parallelizable

$c_t^j$ is the feature sum at the $j$ ordinal position in the current state vector $c_t$

$f_t^j$ is the feature value at the $j$ ordinal position in the current forget gate vector $f_t$

$c_{t-1}^j$ is the feature value at the $j$ ordinal position in the previous state vector $c_{t-1}$

$i_t^j$ is the feature value at the $j$ ordinal position in the current input gate vector $it$

$z_t^j$ is the feature value at the $j$ ordinal position in the current activation vector $z_t$

• denotes multiplication

Mathematical formulation (5) involves computing a feature sum $c_t^j$ for a given ordinal position $j$ in a state vector $c_t$ for a current time series window $t$ in dependence upon: a feature sum $c_{t-1}^j$ at the same ordinal position $j$ in a state vector $c_{t-1}$ for a previous time series window $t$-1, a feature value $f_t^j$ at the same ordinal position $j$ in a forget gate vector $f_t$ for a current time series window $t$, a feature value $i_t^j$ at the same ordinal position $j$ in an input gate vector $i_t$ for a current time series window $t$, and a feature value $z_t^j$ at the same ordinal position $j$ in a forget gate vector $z_t$ for a current time series window $t$.

Therefore, anthropomorphically, in mathematical formulation (5), each feature value of a current forget gate vector controls ordinal position-wise accumulation of a respective feature sum from a previous state vector, and each feature value of a current input gate vector controls, ordinal position-wise, accumulation of a respective feature value from a current activation vector. Thus, in **FIG. 7,** feature sum $c_1^1$ is accumulated in dependence upon feature sum $c_0^1$, feature value $f_1{}^1$, feature value $i_1^1$, and feature value $z_1^1$. Similarly, feature sum $c_1^2$ is accumulated in dependence upon feature sum $c_0^2$, feature value $f_1{}^2$, feature value $i_1^2$, and feature value $z_1^2$. Likewise, feature sum $c_1^{100}$ is accumulated in dependence upon feature sum $c_0^{100}$, feature value $f_1{}^{100}$, feature value $i_1^{100}$, and feature value $z_1^{100}$. In implementations, feature sums of a first state vector $c_0$ can be initialized to zero, or to pre-trained values, or to values dependent on the feature values of an activation vector.

Regarding feature parallelism, for the current time series state vector $c_t$, the QRNN pooling layer **700** applies accumulators in parallel to concurrently accumulate feature sums for all the ordinal positions $\mathop{\forall}\limits_{j=1}^{j=d}$ in the state vector $c_t$ in accordance with the mathematical formulation (5). Thus, in **FIG. 7,** feature sums $c_1{}^1$, ..., $c_1{}^{100}$ for state vector $c_1$ 802 for the first time series window are accumulated in parallel. Similarly, feature sums $c_2{}^1$,...,$c_2{}^{100}$ for state vector $c_2$ for the

13

second time series window are accumulated in parallel. Likewise, feature sums $c_m{}^1,...,c_m{}^{100}$ for state vector $c_m$ **804** for the $m^{th}$ time series window are accumulated in parallel.

In addition, the QRNN pooling layer **700** sequentially outputs state vectors $c_1, ..., c_m$ for each successive time series window $\bigvee\limits_{t=1}^{t=m}$ among the $m$ time series windows.

A single QRNN pooling layer thus performs an input-dependent pooling, followed by a gated linear combination of convolutional features. Although recurrent parts of the QRNN pooling functions are calculated by the QRNN pooling layers for each timestep in an input sequence, QRNN pooling layers' parallelism along feature dimensions means that, in practice, implementing the QRNN pooling functions over long input sequences requires a negligible amount of computation time.

In one implementation, the QRNN is regularized by requiring a random subset of feature sums at given ordinal positions in the state vector for the current time series window to replicate respective feature sums at the given ordinal positions in the state vector concurrently accumulated for the prior time series window. This is achieved by requiring respective feature values at the given ordinal positions in a forget gate vector for the current time series window to be unity.

### QRNN Encoder-Decoder Model

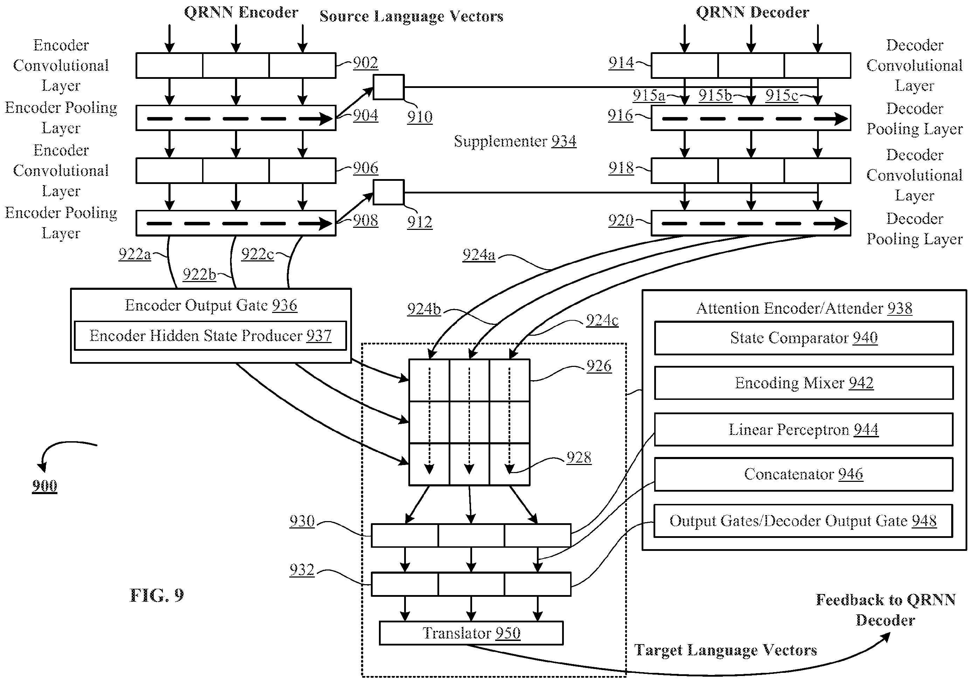

**FIG. 9** is one implementation of a QRNN encoder-decoder model **900** that increases computational efficiency in neural network sequence-to-sequence modeling. Model **900** includes a QRNN encoder and a QRNN decoder. The QRNN encoder comprises one or more encoder convolutional layers (like **902, 906**) and one or more one encoder pooling layers (like **904, 908**). At least one encoder convolutional layer (like **902**) receives a time series of encoder input vectors and concurrently outputs encoded convolutional vectors for time series windows. Also, at least one encoder pooling layer (like **904** or **908**) receives the encoded convolutional vectors for the time series windows, concurrently accumulates an ordered set of feature sums in an encoded state vector for a current time series window, and sequentially outputs an encoded state vector (like **922a, 922b,** or **922c**) for each successive time series window among the time series windows.

The QRNN decoder comprises one or more decoder convolutional layers (like **914, 918)** and one or more one decoder pooling layers (like **916, 920**). At least one decoder convolutional layer (like **914**) receives a time series of decoder input vectors and concurrently outputs decoded convolutional vectors for time series windows. At least one decoder pooling layer (like **916** or **920**) receives the decoded convolutional vectors (like **915a, 915b, 915c**) for the time series windows respectively concatenated with an encoded state vector (like **910** or **912**) outputted by an encoder pooling layer (like **904** or **908**) for a final time series window, concurrently accumulates an ordered set of feature sums in a decoded state vector for a current time series window, and sequentially outputs a decoded state vector (like **924a, 924b,** or **924c**) for each successive time series window among the time series windows. Thus, the output of each decoder QRNN layer's convolution functions is supplemented at every timestep with the final encoder hidden state. This is accomplished by adding the result of the convolution for layer $l$ (e.g., $W_z^l * X^l$, in $\mathbb{R}^{T \times m}$) with broadcasting to a linearly projected copy of layer $l$'s last encoder state (e.g., $V_z^l \tilde{h}_T^l$, in $\mathbb{R}^m$) (like **910** or **912**). These steps of supplementing decoder pooling layer input are embodied by the supplementer (e.g., supplementer **934**) of the QRNN **100**.

Activation vectors and the gate vectors for the QRNN encoder-decoder model **900** are defined by the following mathematical formulation:

$$Z^l = \tanh{(W_z^l * X^l + V_z^l \tilde{h}_T^l)}$$

$$F^l = \sigma{(W_f^l * X^l + V_f^l \tilde{h}_T^l)}$$

$$O^l = \sigma{(W_o^l * X^l + V_o^l \tilde{h}_T^l)}$$

where the tilde denotes that $\tilde{h}$ is an encoder variable.

Then, a state comparator calculates linguistic similarity (e.g., using dot product or inner product or bilinear product) between the encoded state vectors (like **922a, 922b,** or **922c**) and the decoded state vectors (like **924a, 924b,** or **924c**) to produce an affinity matrix **926** with encoding-wise and decoding-wise axes. These steps of calculating linguistic similarity are embodied by the state comparator (e.g., state comparator **940**) of the attention encoder/attender **938**. Next, an exponential normalizer **928,** such as softmax, normalizes the affinity matrix **926** encoding-wise to produce respective encoding-to-decoding attention weights $\alpha_{st}$, defined as:

$$\alpha_{st} = soft\max\left(C_t^L \cdot \tilde{h}_s^L\right)$$

Then, an encoding mixer (e.g., encoding mixer **942** of the attention encoder/attender 938) respectively combines the encoded state vectors (like **922a, 922b,** or **922c**) with the encoding-to-decoding attention weights to generate respective contextual summaries $k_t$ of the encoded state vectors, defined as:

$$k_t = \sum_s \alpha_{st} \tilde{h}_s^L$$

Finally, an attention encoder respectively combines the decoded state vectors (like **924a, 924b,** or **924c**) with the respective contextual summaries of the encoded state vectors to produce an attention encoding for each of the time series windows. In one implementation, the attention encoder is a multilayer perceptron that projects a concatenation of the decoded state vectors and respective contextual summaries of the encoded state vectors into non-linear projections to produce an attention encoding for each of the time series windows.

In some implementations, the encoded state vectors (like **922a, 922b,** or **922c**) are respectively multiplied by output gate vectors (e.g., decoder output gate **948** of the attention encoder/attender **938**) of the encoded convolutional vectors to produce respective encoded hidden state vectors. In such implementations, the state comparator calculates linguistic similarity (e.g., using dot product or inner product or bilinear product) between the encoded hidden state vectors and the decoded state vectors to produce an affinity matrix with encoding-wise and decoding-wise axes. Also, in such implementations, the encoding mixer respectively combines the encoded hidden state vectors with the encoding-to-decoding attention weights to generate respective contextual summaries of the encoded hidden state vectors. Further, in such implementations, the attention encoder respectively combines the decoded state vectors with the respective contextual summaries of the encoded hidden state vectors, and further multiplies the combinations with respective output gate vectors of the decoded convolutional vectors to produce an attention encoding for each of the time series windows. In one implementation, the attention encoder is a multilayer perceptron that projects a concatenation of the decoded state vectors and respective contextual summaries of the encoded hidden state vectors into non-linear projections, and further multiplies the linear projections **930** with respective output gate vectors **932** of the decoded convolutional vectors to produce an attention encoding for each of the time series windows, defined as:

$$h_t^L = o_t \odot \left(W_k k_t + W_c c_t^L\right)$$

where $L$ is the last layer. These steps of linear projections are embodied by the linear perceptron **944** of the attention encoder/attender **938**. These steps of concatenations are embodied by the concatenator **946** of the attention encoder/-attender **938.**

While the first step of the attention procedure is quadratic in the sequence length, in practice it takes significantly less computation time than the model's linear and convolutional layers due to the simple and highly parallel dot-product scoring function.

Other implementations of the technology disclosed include using normalizers different than, in addition to, and/or in combination with the exponential normalizer. Some examples include sigmoid based normalizers (e.g., multiclass sigmoid, piecewise ramp), hyperbolic tangent based normalizers, rectified linear unit (ReLU) based normalizers, identify based normalizers, logistic based normalizers, sine based normalizers, cosine based normalizers, unit sum based normalizers, and step based normalizers. Other examples include hierarchical softmax, differentiated softmax, importance sampling, noise contrastive estimation, negative sampling, gated softmax spherical softmax, Taylor softmax, and sparsemax. In yet other implementations, any other conventional or future-developed normalizer can be used.

**Experimental Results**

QRNN outperforms LSTM-based models of equal state vector size on three different natural language processing (NLP) tasks, namely, document-level sentiment classification, language modeling, and character-based neural network machine translation, while dramatically improving computation speed. These steps of performing different NLP tasks using the state vectors are embodied by the classifier (e.g., classifier **806**) of the QRNN **100** or the translator 950 of the QRNN encoder-decoder model **900.**

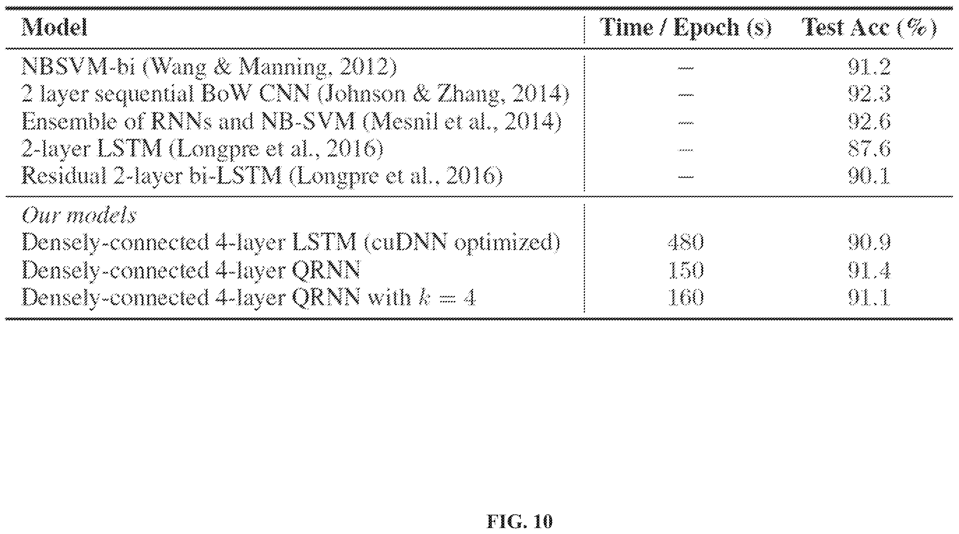

**FIG. 10** is a table that shows accuracy comparisons of the QRNN on sentiment classification task for a popular document-level sentiment classification benchmark, the IMDb movie review dataset. The dataset consists of a balanced sample of 25,000 positive and 25,000 negative reviews, divided into equal-size train and test sets, with an average document length of 231 words. In one implementation, a QRNN having a four-layer densely connected architecture with 256 units per layer and word vectors initialized using 300-dimensional cased GloVe embeddings achieves best performance on a held-out development.

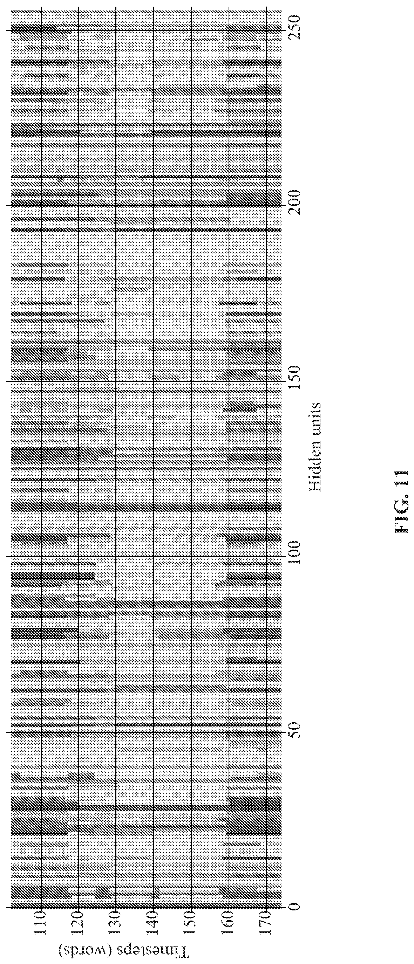

**FIG. 11** shows one implementation of visualization of hidden state vectors of the final QRNN layer on part of an example from the IMDb dataset, with timesteps along the vertical axis. Even without any post-processing, changes in the hidden state are visible and interpretable in regards to the input. This is a consequence of the elementwise nature of the recurrent pooling function, which delays direct interaction between different channels of the hidden state until the computation of the next QRNN layer.

In **FIG. 11,** colors denote neuron activations. After an initial positive statement *"This movie is simply gorgeous"* (off graph at timestep 9), timestep 117 triggers a reset of most hidden states due to the phrase "*not exactly a bad story*" (soon after "*main weakness is its story*"). Only at timestep 158, after *"I recommend this movie to everyone, even if you've never played the game*", do the hidden units recover.

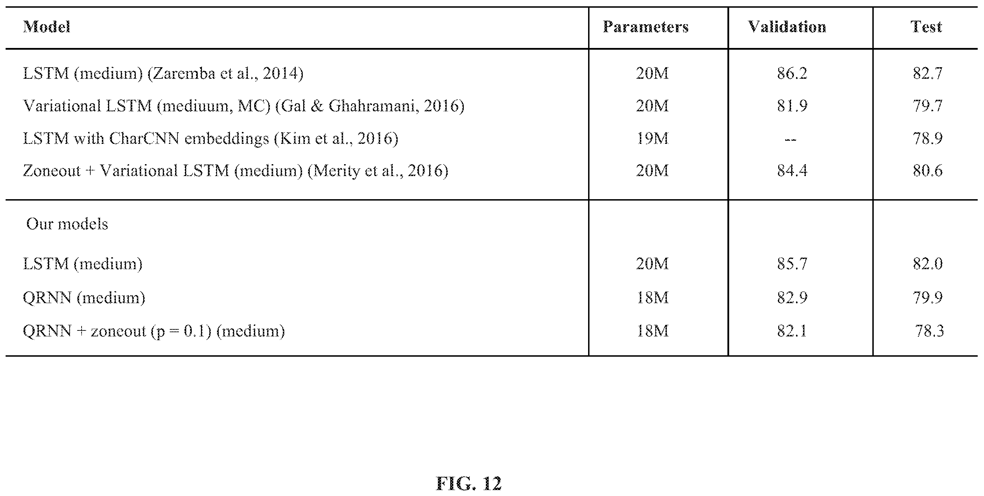

**FIG. 12** depicts a table that shows accuracy comparisons of the QRNN on alanguage modeling task. The experiment uses a standard preprocessed version of the Penn Treebank (PTB). **FIG. 12** shows single model perplexity on validation and test sets for the Penn Treebank language modeling task. Lower is better. "Medium" refers to a two-layer network with 640 or 650 hidden units per layer. All QRNN models include dropout of 0.5 on embeddings and between layers, in some implementations. MC refers to Monte Carlo dropout averaging at test time.

As shown in **FIG. 12,** the QRNN strongly outperforms different types of LSTMs. This is due to the efficient computational capacity that the QRNN's pooling layer has relative to the LSTM's recurrent weights, which provide structural regularization over the recurrence.

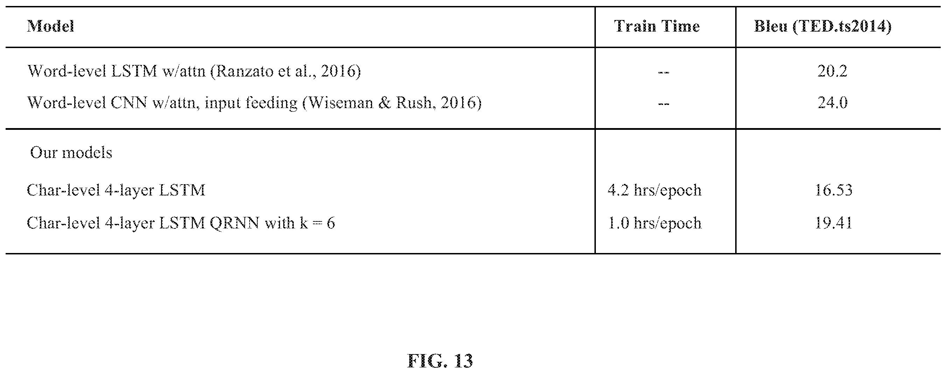

**FIG. 13** is a table that shows accuracy comparisons of the QRNN on language translation tasks. The QRNN encoder-decoder model is evaluated on a challenging neural network machine translation task, IWSLT German-English spoken-domain translation, applying fully character-level segmentation. This dataset consists of 209,772 sentence pairs of parallel training data from transcribed TED and TEDx presentations, with a mean sentence length of 103 characters for German and 93 for English.

The QRNN encoder-decoder model achieves best performance on a development set (TED.tst2013) using a four-layer encoder-decoder QRNN with 320 units per layer, no dropout or L2 regularization, and gradient rescaling to a maximum magnitude of 5. **FIG. 13** shows that the QRNN encoder-decoder model outperforms the character-level LSTM, almost matching the performance of a word-level attentional baseline.

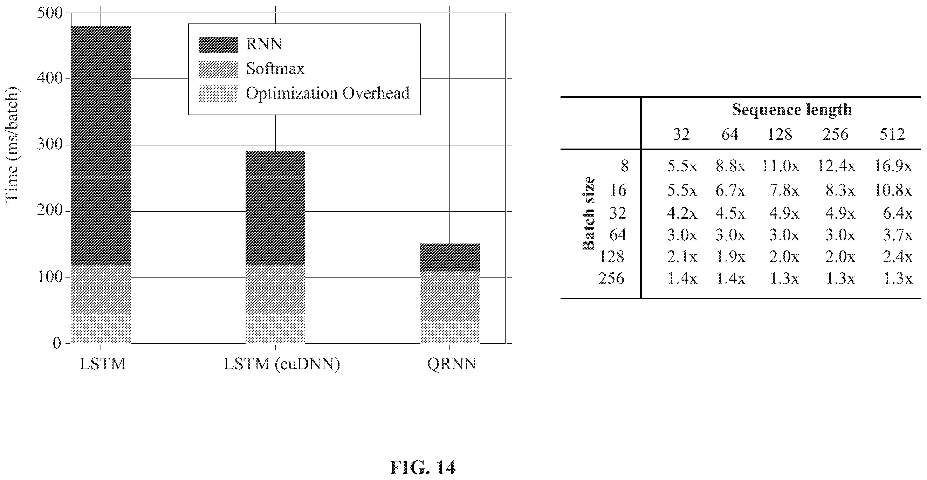

**FIG. 14** depicts charts that show training speed and inference speed of the QRNN. In **FIG. 14,** the training speed for two-layer 640-unit PTB LM on a batch of 20 examples of 105 timesteps is shown on the left. "RNN" and "softmax" include the forward and backward times, while "optimization overhead" includes gradient clipping, L2 regularization, and SGD computations. On the right, **FIG. 14** shows the inference speed advantage of a 320-unit QRNN layer over an equal-sized cuDNN LSTM layer for data with the given batch size and sequence length. Training results are similar.

## Sample Code

The following sample code shows one implementation of the QRNN **100:**

```
from chainer import cuda, Function, Variable, Chain
```

```
import chainer.links as L
import chainer.functions as F
import numpy as np


THREADS_PER_BLOCK = 32

class STRNNFunction(Function):

    def forward_gpu(self, inputs):
        f, z, hinit = inputs
        b, t, c = f.shape
        assert c % THREADS_PER_BLOCK == 0
        self.h = cuda.cupy.zeros((b, t + 1, c), dtype=np.float32)
        self.h[:, 0, :] = hinit
        cuda.raw('''
            #define THREADS_PER_BLOCK 32
            extern "C" __global__ void strnn_fwd(
                const CArray<float, 3> f, const CArray<float, 3> z,
                CArray<float, 3> h) {
                int index[3];
                const int t_size = f.shape()[1];
                index[0] = blockIdx.x;
                index[1] = 0;
                index[2] = blockIdx.y * THREADS_PER_BLOCK + threadIdx.x;
                float prev_h = h[index];
                for (int i = 0; i < t_size; i++){
                    index[1] = i;
                    const float ft = f[index];
                    const float zt = z[index];
                    index[1] = i + 1;
                    float &ht = h[index];
                    prev_h = prev_h * ft + zt;
                    ht = prev_h;
                }
            }''', 'strnn_fwd')(
                (b, c // THREADS_PER_BLOCK), (THREADS_PER_BLOCK,),
                (f, z, self.h))
        return self.h[:, 1:, :],


    def backward_gpu(self, inputs, grads):
        f, z = inputs[:2]
        gh, = grads
        b, t, c = f.shape
        gz = cuda.cupy.zeros_like(gh)
        cuda.raw('''
            #define THREADS_PER_BLOCK 32
```

```
            extern "C" __global__ void strnn_back(
            const CArray<float, 3> f, const CArray<float, 3> gh,
            CArray<float, 3> gz) {
            int index[3];
            const int t_size = f.shape()[1];
            index[0] = blockIdx.x;
            index[2] = blockIdx.y * THREADS_PER_BLOCK + threadIdx.x;
            index[1] = t_size - 1;
            float &gz_last = gz[index];
            gz_last = gh[index];
            float prev_gz = gz_last;
            for (int i = t_size - 1; i > 0; i--){
                index[1] = i;
                const float ft = f[index];
                index[1] = i - 1;
                const float ght = gh[index];
                float &gzt = gz[index];
                prev_gz = prev_gz * ft + ght;
                gzt = prev_gz;
            }
        }''', 'strnn_back')(
            (b, c // THREADS_PER_BLOCK), (THREADS_PER_BLOCK,),
            (f, gh, gz))
        gf = self.h[:, :-1, :] * gz
        ghinit = f[:, 0, :] * gz[:, 0, :]
        return gf, gz, ghinit




def strnn(f, z, h0):
    return STRNNFunction()(f, z, h0)




def attention_sum(encoding, query):
    alpha = F.softmax(F.batch_matmul(encoding, query, transb=True))
    alpha, encoding = F.broadcast(alpha[:, :, :, None],
                        encoding[:, :, None, :])
    return F.sum(alpha * encoding, axis=1)




class Linear(L.Linear):

    def __call__(self, x):
        shape = x.shape
        if len(shape) == 3:
            x = F.reshape(x, (-1, shape[2]))
        y = super().__call__(self, x)
```

```
        if len(shape) == 3:
            y = F.reshape(y, shape)
        return y


class QRNNLayer(Chain):

    def __init__(self, in_size, out_size, kernel_size=2, attention=False,
            decoder=False):
        if kernel_size == 1:
            super().__init__(W=Linear(in_size, 3 * out_size))
        elif kernel_size == 2:
            super().__init__(W=Linear(in_size, 3 * out_size, nobias=True),
                    V=Linear(in_size, 3 * out_size))
        else:
            super().__init__(
                conv=L.ConvolutionND(1, in_size, 3 * out_size, kernel_size,
                        stride=1, pad=kernel_size - 1))
        if attention:
            self.add_link('U', Linear(out_size, 3 * in_size))
            self.add_link('o', Linear(2 * out_size, out_size))
        self.in_size, self.size, self.attention = in_size, out_size, attention
        self.kernel_size = kernel_size


    def pre(self, x):
        dims = len(x.shape) - 1

        if self.kernel_size == 1:
            ret = self.W(x)
        elif self.kernel_size == 2:
            if dims == 2:
                xprev = Variable(
                    self.xp.zeros((self.batch_size, 1, self.in_size),
                            dtype=np.float32), volatile='AUTO')
                xtminus1 = F.concat((xprev, x[:, :-1, :]), axis=1)
            else:
                xtminus1 = self.x
            ret = self.W(x) + self.V(xtminus1)
        else:
            ret = F.swapaxes(self.conv(
                F.swapaxes(x, 1, 2))[:, :, :x.shape[2]], 1, 2)

        if not self.attention:
            return ret

        if dims == 1:
```

```
        enc = self.encoding[:, -1, :]
    else:
        enc = self.encoding[:, -1:, :]
    return sum(F.broadcast(self.U(enc), ret))

def init(self, encoder_c=None, encoder_h=None):
    self.encoding = encoder_c
    self.c, self.x = None, None
    if self.encoding is not None:
        self.batch_size = self.encoding.shape[0]
        if not self.attention:
            self.c = self.encoding[:, -1, :]

    if self.c is None or self.c.shape[0] < self.batch_size:
        self.c = Variable(self.xp.zeros((self.batch_size, self.size),
                              dtype=np.float32), volatile='AUTO')

    if self.x is None or self.x.shape[0] < self.batch_size:
        self.x = Variable(self.xp.zeros((self.batch_size, self.in_size),
                              dtype=np.float32), volatile='AUTO')

def __call__(self, x):
    if not hasattr(self, 'encoding') or self.encoding is None:
        self.batch_size = x.shape[0]
        self.init()
    dims = len(x.shape) - 1
    f, z, o = F.split_axis(self.pre(x), 3, axis=dims)
    f = F.sigmoid(f)
    z = (1 - f) * F.tanh(z)
    o = F.sigmoid(o)

    if dims == 2:
        self.c = strnn(f, z, self.c[:self.batch_size])
    else:
        self.c = f * self.c + z

    if self.attention:
        context = attention_sum(self.encoding, self.c)
        self.h = o * self.o(F.concat((self.c, context), axis=dims))
    else:
        self.h = self.c * o

    self.x = x
    return self.h

def get_state(self):
```

```
        return F.concat((self.x, self.c, self.h), axis=1)

        def set_state(self, state):
            self.x, self.c, self.h = F.split_axis(
                state, (self.in_size, self.in_size + self.size), axis=1)


        state = property(get_state, set_state)
```

## Particular Implementations

We describe systems, methods, and articles of manufacture for a quasi-recurrent neural network (QRNN). One or more features of an implementation can be combined with the base implementation. Implementations that are not mutually exclusive are taught to be combinable. One or more features of an implementation can be combined with other implementations. This disclosure periodically reminds the user of these options. Omission from some implementations of recitations that repeat these options should not be taken as limiting the combinations taught in the preceding sections - these recitations are hereby incorporated forward by reference into each of the following implementations.

In this particular implementation section, previously described modules or components of the QRNN **100** and the QRNN encoder-decoder model **900,** such as the convolutional layers, the pooling layers, and the attention encoder are alternatively described using smaller modularized modules or components without changing their principle of operation or the QRNN **100** or the QRNN encoder-decoder model **900.**

The modules in this particular implementation section can be implemented in hardware or software, and need not be divided up in precisely the same way as discussed in this particular implementation section. Some of the modules can also be implemented on different processors or computers, or spread among a number of different processors or computers. In addition, it will be appreciated that some of the modules can be combined, operated in parallel or in a different sequence than that discussed in this particular implementation section without affecting the functions achieved. Also as used herein, the term "module" can include "sub-modules", which themselves can be considered herein to constitute modules. For example, a convolutional filter bank **210,** a convolutional vector producer **212,** and a dimensionality augmenter **214** can be considered herein to be sub-modules of the convolutional layer **200.** In another example, a state comparator **940,** an encoding mixer **942,** a linear perceptron **944,** a concatenator **946,** and a decoder output gate **948** can be considered herein to be sub-modules of the attention encoder or attender **938.** In another example, encoders for encoding order and context information of the elements in the state vectors can be considered herein to be sub-modules of the pooling layers. The modules discussed in this particular implementation can also be thought of as flowchart steps in a method. A module also need not necessarily have all its code disposed contiguously in memory; some parts of the code can be separated from other parts of the code with code from other modules or other functions disposed in between.

## QRNN

In one implementation, the technology disclosed presents a quasi-recurrent neural network (abbreviated QRNN) system. The QRNN system runs on numerous parallel processing cores. The QRNN system comprises a QRNN and increases computation speed during training and inference stages of neural network-based sequence classification tasks.

The QRNN system comprises a convolutional layer, a pooling layer, an output producer (e.g., output producer **604**), and a classifier (e.g., classifier **806**).

The convolutional layer comprises a convolutional filter bank configured to perform parallel convolution of input vectors in time series windows over a set of time series of input vectors among a plurality of time series of input vectors. The convolutional layer further comprises a convolutional vector producer configured to concurrently output a convolutional vector for each of the time series windows based on the parallel convolution. Each convolution vector comprises feature values in an activation vector and in one or more gate vectors and the feature values in the gate vectors are parameters that, respectively, apply element-wise by ordinal position to the feature values in the activation vector.

The pooling layer comprises accumulators (e.g., accumulators **602**) configured to perform parallel accumulation of an ordered set of feature sums in a state vector for a current time series window by concurrently accumulating feature values of components of the convolutional vector on an ordinal position-wise basis. Each feature sum is accumulated by the accumulators in dependence upon a feature value at a given ordinal position in an activation vector outputted for the current time series window, one or more feature values at the given ordinal position in one or more gate vectors outputted for the current time series window, and a feature sum at the given ordinal position in a state vector accumulated for a prior time series window.

The output producer sequentially outputs, at each successive time series window, a state vector pooled by the pooling layer.

The classifier performs a sequence classification task using successive state vectors produced by the output producer.

This system implementation and other systems disclosed optionally include one or more of the following features. System can also include features described in connection with methods disclosed. In the interest of conciseness, alternative combinations of system features are not individually enumerated. Features applicable to systems, methods, and articles of manufacture are not repeated for each statutory class set of base features. The reader will understand how features identified in this section can readily be combined with base features in other statutory classes.

The QRNN system further comprises a dimensionality augmenter for augmenting dimensionality of the convolutional vectors relative to dimensionality of the input vectors in dependence upon a number of convolutional filters in the convolutional filter bank.

The input vectors can represent elements of an input sequence. The pooling layer can comprise an encoder (e.g., encoder **142, 146**) for encoding order and context information of the elements in the state vectors. These steps of encoding are embodied by the encoders (e.g., encoder **142, 146)** of the pooling layers.

In some implementations, the input sequence can be a word-level sequence. In other implementations, the input sequence can be a character-level sequence.

The gate vector can be a forget gate vector. In such an implementation, the pooling layer can use a forget gate vector for the current time series window to control accumulation of information from a state vector accumulated for a prior time series window and information from an activation vector for the current time series window.

The gate vector can be an input gate vector. In such an implementation, the pooling layer can use an input gate vector for the current time series window to control accumulation of information from an activation vector for the current time series window.

The gate vector can be an output gate vector. In such an implementation, the pooling layer can use an output gate vector for a current time series window to control accumulation of information from a state vector for the current time series window.

The QRNN system can further comprise a plurality of sub-QRNNs arranged in a sequence from lowest to highest. Each sub-QRNN can comprise at least one convolutional layer and at least one pooling layer.

The sub-QRNNs can further comprising an input receiver (e.g., input receivers **144**) for receiving as input a preceding output generated by a preceding sub-QRNN system in the sequence, a convolutional layer for parallel convolution of the preceding output to produce an alternative representation of the preceding output, and a pooling layer for parallel accumulation of the alternative representation to produce an output.

The QRNN system can further comprise skip connections between the sub-QRNNs and between layers in the sub-QRNN for concatenating output of a preceding layer with output of a current layer and for providing the concatenation to a following layer as input.

The sequence classification task can be language modeling, sentiment classification, document classification, word-level translation, or character-level translation.

The QRNN system can further comprise a regularizer (e.g., regularizer **140**) for regularizing the convolutional layer and the pooling layer by requiring respective feature values at the given ordinal positions in the forget gate vector for the current time series window to be unity. This produces a random subset of feature sums at given ordinal positions in the state vector for the current time series window that match respective feature sums at the given ordinal positions in the state vector concurrently accumulated for the prior time series window.

Other implementations may include a non-transitory computer readable storage medium storing instructions executable by a processor to perform actions of the system described above.

In another implementation, the technology disclosed presents a quasi-recurrent neural network (abbreviated QRNN) system. The QRNN system runs on numerous parallel processing cores. The QRNN system comprises a QRNN and increases computation speed during training and inference stages of neural network-based sequence classification tasks.

The QRNN system comprises a convolutional layer, a pooling layer, an output producer (e.g., output producer **604**), and a classifier (e.g., classifier **806**).

The convolutional layer comprises a convolutional filter bank configured to perform parallel convolution of input vectors in time series windows over a set of time series of input vectors among a plurality of time series of input vectors. The convolutional layer further comprises a convolutional vector producer configured to concurrently output a convolutional vector for each of the time series windows based on the parallel convolution.

The pooling layer comprises accumulators (e.g., accumulators **602**) for parallel accumulation of an ordered set of feature sums in a state vector for a current time series window by concurrently accumulating feature values of components of the convolutional vector on an ordinal position-wise basis.

The output producer sequentially outputs, at each successive time series window, a state vector pooled by the pooling layer.

The classifier performs a sequence classification task using successive state vectors produced by the output producer.

Each of the features discussed in this particular implementation section for the first system implementation apply equally to this system implementation. As indicated above, all the system features are not repeated here and should be considered repeated by reference.

Other implementations may include a non-transitory computer readable storage medium storing instructions executable by a processor to perform actions of the system described above.

In yet another implementation, the technology disclosed presents a method of increasing computation speed during training and inference stages of neural network-based sequence classification tasks.

The method includes applying a convolutional filter bank in parallel to input vectors in a time series windows over a set of time series of input vectors among a plurality of time series of input vectors to concurrently output a convolutional vector for each of the time series windows. Each convolution vector comprises feature values in an activation vector and in one or more gate vectors and the feature values in the gate vectors are parameters that, respectively, apply element-wise by ordinal position to the feature values in the activation vector.

The method includes applying accumulators in parallel over feature values of components of the convolutional vector to concurrently accumulate, on an ordinal position-wise basis, in a state vector for a current time series window, an ordered set of feature sums. Each feature sum is accumulated by the accumulators in dependence upon a feature value at a given ordinal position in an activation vector outputted for the current time series window, one or more feature values at the given ordinal position in one or more gate vectors outputted for the current time series window, and a feature sum at the given ordinal position in a state vector accumulated for a prior time series window.

The method includes sequentially outputting, at each successive time series window, a state vector accumulated by the accumulators.

The method includes performing a sequence classification task using successive state vectors.

Each of the features discussed in this particular implementation section for the first system implementation apply equally to this method implementation. As indicated above, all the system features are not repeated here and should be considered repeated by reference.

Other implementations may include a non-transitory computer readable storage medium (CRM) storing instructions executable by a processor to perform the method described above. Yet another implementation may include a system including memory and one or more processors operable to execute instructions, stored in the memory, to perform the method described above.

The technology disclosed presents a quasi-recurrent neural network (QRNN) system that increases computational efficiency in neural network sequence modeling.

The QRNN system comprises a convolutional layer that runs on numerous processing cores. The convolutional layer receives a time series of input vectors, applies a convolutional filter bank in parallel to time series windows over the input vectors, and concurrently outputs convolutional vectors for the time series windows. Each of the convolution vectors comprises feature values in an activation vector and in one or more gate vectors, and the feature values in the gate vectors are parameters that, respectively, apply element-wise by ordinal position to the feature values in the activation vector.

The QRNN system comprises a pooling layer that that runs on numerous processing cores. The pooling layer receives the convolutional vectors for the time series windows, and operates in parallel over feature values of a convolutional vector to concurrently accumulate ordinal position-wise, in a state vector for a current time series window, an ordered set of feature sums.

The feature sums are accumulated in dependence upon a feature value at a given ordinal position in an activation vector outputted for the current time series window, one or more feature values at the given ordinal position in one or more gate vectors outputted for the current time series window, and a feature sum at the given ordinal position in a state vector accumulated for a prior time series window.

This system implementation and other systems disclosed optionally include one or more of the following features. System can also include features described in connection with methods disclosed. In the interest of conciseness, alternative combinations of system features are not individually enumerated. Features applicable to systems, methods, and articles of manufacture are not repeated for each statutory class set of base features. The reader will understand how features identified in this section can readily be combined with base features in other statutory classes.

Each of the features discussed in this particular implementation section for the prior method and system implementations apply equally to this system implementation. As indicated above, all the method and system features are not repeated here and should be considered repeated by reference.

The pooling layer then sequentially outputs a state vector for each successive time series window among the time series windows.

The dimensionality of the convolutional vectors can be augmented relative to dimensionality of the input vectors in dependence upon a number of convolutional filters in the convolutional filter bank.

The input vectors can represent elements of an input sequence. In such an implementation, the pooling layer can encode order and context information of the elements in the state vectors.

In some implementations, the input sequence can be a word-level sequence. In other implementations, the input sequence can be a character-level sequence.

The gate vector can be a forget gate vector. In such an implementation, the pooling layer can use a forget gate vector for the current time series window to control accumulation of information from a state vector accumulated for a prior time series window and information from an activation vector for the current time series window.

The gate vector can be an input gate vector. In such an implementation, the pooling layer can use an input gate vector for the current time series window to control accumulation of information from an activation vector for the current time series window.

The gate vector can be an output gate vector. In such an implementation, the pooling layer can use an output gate vector for a current time series window to control accumulation of information from a state vector for the current time series window.

The QRNN system can comprise a plurality of sub-QRNNs arranged in a sequence from lowest to highest. Each sub-QRNN can comprise at least one convolutional layer and at least one pooling layer.

The sub-QRNNs can be configured to receive as input a preceding output generated by a preceding sub-QRNN in the sequence, process the preceding output through the convolutional layer to produce an alternative representation of the preceding output, and process the alternative representation through the pooling layer to produce an output.

The QRNN system can comprise skip connections between the sub-QRNNs and between layers in the sub-QRNN. The skip connections can concatenate output of a preceding layer with output of a current layer and provide the concatenation to a following layer as input.

The convolutional filters in the convolutional filter bank can be trained using a sequence task. The sequence task can be language modeling, sentiment classification, document classification, word-level translation, or character-level translation.

The QRNN system can be regularized by requiring respective feature values at the given ordinal positions in a forget gate vector for the current time series window to be unity. This produces a random subset of feature sums at given ordinal positions in the state vector for the current time series window that match respective feature sums at the given ordinal positions in the state vector concurrently accumulated for the prior time series window.

Other implementations may include a non-transitory computer readable storage medium storing instructions executable by a processor to perform actions of the system described above.

The technology disclosed presents a quasi-recurrent neural network (QRNN) system that increases computational efficiency in neural network sequence modeling.

The QRNN system comprises a convolutional layer that runs on numerous processing cores. The convolutional layer receives a time series of input vectors, applies a convolutional filter bank in parallel to time series windows over the input vectors, and concurrently outputs convolutional vectors for the time series windows. Each of the convolution vectors comprises feature values in an activation vector and in one or more gate vectors, and the feature values in the gate vectors are parameters that, respectively, apply element-wise by ordinal position to the feature values in the activation vector.

The QRNN system comprises a pooling layer that that runs on numerous processing cores. The pooling layer receives the convolutional vectors for the time series windows, and applies accumulators in parallel to respective feature values of a convolutional vector, to calculate a state vector for each successive timestep among the time series windows.

At each timestep, for respective ordinal positions in an activation vector and one or more gate vectors of the convolutional vector, an accumulator begins with a feature sum at a given ordinal position in a state vector from a prior timestep, if any, multiplied by a respective feature value at the given ordinal position in the forget gate vector for a current timestep, adds an evaluation of a respective feature value at the given ordinal position in the activation vector for the current timestep against one or more respective feature values at the given ordinal position in the gate vectors for the current timestep, and outputs a state vector for the current timestep that combines results of the accumulators across all of the respective ordinal positions.

Each of the features discussed in this particular implementation section for the prior method and system implementations apply equally to this system implementation. As indicated above, all the method and system features are not repeated here and should be considered repeated by reference.

Other implementations may include a non-transitory computer readable storage medium storing instructions executable by a processor to perform actions of the system described above.

The technology disclosed presents a method of increasing computational efficiency in neural network sequence modeling.

The method includes receiving a time series of input vectors, applying a convolutional filter bank in parallel to time series windows over the input vectors, and concurrently outputting convolutional vectors for the time series windows. Each of the convolution vectors comprises feature values in an activation vector and in one or more gate vectors, and the feature values in the gate vectors are parameters that, respectively, apply element-wise by ordinal position to the feature values in the activation vector.

The method includes operating in parallel over feature values of a convolutional vector to concurrently accumulate ordinal position-wise, in a state vector for a current time series window, an ordered set of feature sums. The feature sums are accumulated in dependence upon a feature value at a given ordinal position in an activation vector outputted for the current time series window, one or more feature values at the given ordinal position in one or more gate vectors outputted for the current time series window, and a feature sum at the given ordinal position in a state vector accumulated for a prior time series window.

Each of the features discussed in this particular implementation section for the prior method and system implementations apply equally to this method implementation. As indicated above, all the method and system features are not repeated here and should be considered repeated by reference.

Other implementations may include a non-transitory computer readable storage medium (CRM) storing instructions executable by a processor to perform the method described above. Yet another implementation may include a system including memory and one or more processors operable to execute instructions, stored in the memory, to perform the method described above.

The technology disclosed presents a quasi-recurrent neural network (QRNN) system that increases computational efficiency in neural network sequence modeling.

The QRNN system comprises a convolutional layer that receives a time series of input vectors and concurrently outputs convolutional vectors for time series windows.

The QRNN system a pooling layer that receives the convolutional vectors for the time series windows and concurrently accumulates an ordered set of feature values in a state vector for a current time series window, and sequentially outputs a state vector for each successive time series window among the time series windows.

Each of the features discussed in this particular implementation section for the prior method and system implementations apply equally to this system implementation. As indicated above, all the method and system features are not repeated here and should be considered repeated by reference.

Other implementations may include a non-transitory computer readable storage medium storing instructions executable by a processor to perform actions of the system described above.

## ORNN Encoder-Decoder Model

In one implementation, the technology disclosed presents a quasi-recurrent neural network (abbreviated QRNN) system. The QRNN system runs on numerous parallel processing cores. The QRNN system comprises a QRNN and increases computation speed during training and inference stages of neural network-based sequence-to-sequence machine translation task of translating a source language sequence into a target language sequence.

The QRNN system comprises a QRNN encoder, a QRNN decoder, and a translator. The QRNN encoder comprises at least one encoder convolutional layer, at least one encoder pooling layer, and at least one encoder output gate. The QRNN decoder that comprises at least one decoder convolutional layer, at least one decoder pooling layer, and at least one attender or attention encoder. The attender comprises a state comparator, an encoding mixer, a perceptron or linear perceptron, and a decoder output gate.

The encoder convolutional layer comprises an encoder convolutional filter bank configured to perform parallel convolution of source language vectors in encoder time series windows over a set of time series of source language vectors among a plurality of time series of source language vectors. The encoder convolutional layer further comprises an encoder convolutional vector producer configured to concurrently output a convolutional vector of the encoder for each of the encoder time series windows based on the parallel convolution.

The encoder pooling layer comprises accumulators for parallel accumulation of an ordered set of feature sums in each state vector of the encoder sequentially produced for each successive encoder time series window by concurrently accumulating feature values of components of the convolutional vector of the encoder on an ordinal position-wise basis.

The encoder output gate (e.g., encoder output gate **936**) comprises an encoder hidden state producer (e.g., encoder hidden state producer **937**) for applying an output gate vector to state vectors of the encoder and thereby produce hidden state vectors of the encoder.

The decoder convolutional layer comprises a decoder convolutional filter bank for parallel convolution of decoder input vectors in decoder time series windows over a set of time series of decoder input vectors among a plurality of time series of decoder input vectors. At an initial decoder time series window, the decoder convolutional filter bank convolves over only a single decoder input vector which is a start-of-translation token. At successive decoder time series windows, the decoder convolutional filter bank convolves over the decoder input vectors comprising the start-of-translation token and previously emitted target language vectors.

The decoder convolutional layer further comprises a decoder convolutional vector producer for concurrently outputting a convolutional vector of the decoder for each of the decoder time series windows based on the parallel convolution.

The decoder pooling layer comprises accumulators configured to perform parallel accumulation of an ordered set of feature sums in each state vector of the decoder sequentially produced for each successive decoder time series window by concurrently accumulating feature values of components of the convolutional vector of the decoder on an ordinal position-wise basis.

The attender comprises the state comparator (e.g., state comparator **940)** for determining pairwise similarity scores between the hidden state vectors of the encoder and state vectors of the decoder.

The attender comprises the encoding mixer (e.g., encoding mixer **942**) for generating contextual summaries of the hidden state vectors of the encoder as a convex combination of the hidden state vectors of the encoder scaled by exponentially normalized similarity score sequences produced along the encoder time series windows.

The attender comprises the perceptron or linear perceptron (e.g., linear perceptron **944)** for linearly projecting the contextual summaries and the state vectors of the decoder.

The attender comprises the concatenator (e.g., concatenator **946)** for combining the linearly projected contextual summaries and state vectors of the decoder.

The attender comprises the decoder output gate (e.g., decoder output gate **948**) for applying an output gate vector to the combined linearly projected contextual summaries and state vectors of the decoder and thereby produce hidden state vectors of the decoder.

The QRNN system comprises the translator (e.g., translator **950**) for performing the sequence-to-sequence translation task by emitting target language vectors based on the decoded hidden state vectors.

Each of the features discussed in this particular implementation section for the prior method and system implementations apply equally to this system implementation. As indicated above, all the method and system features are not repeated here and should be considered repeated by reference.

The QRNN system further comprises a supplementer (e.g., supplementer **934**) for supplementing each input to the decoder pooling layer with a final hidden state vector of the encoder produced by the encoder hidden state producer for a final encoder time series window.

The state comparator can use dot product or bilinear product for determining pairwise similarity scores between the hidden state vectors of the encoder and state vectors of the decoder.

The source language sequence and the target language sequence can be word-level sequences or character -level sequences.

Other implementations may include a non-transitory computer readable storage medium storing instructions executable by a processor to perform actions of the system described above.

In another implementation, the technology disclosed presents a quasi-recurrent neural network (abbreviated QRNN) system. The QRNN system runs on numerous parallel processing cores. The QRNN system comprises a QRNN and increases computation speed during training and inference stages of neural network-based sequence-to-sequence translation task of translating a source language sequence into a target language sequence.

The QRNN system comprises a QRNN encoder, a QRNN decoder, and a translator.

The QRNN encoder comprises at least one encoder convolutional layer for parallel convolution of source language vectors in encoder time series windows over a set of time series of source language vectors among a plurality of time series of source language vectors and thereby concurrently output a convolutional vector of the encoder for each of the encoder time series windows, at least one encoder pooling layer for parallel accumulation of an ordered set of feature sums in each state vector of the encoder sequentially produced for each successive encoder time series window, and an encoder hidden state producer for applying an output gate vector to state vectors of the encoder and thereby produce hidden state vectors of the encoder.

The QRNN decoder comprises at least one decoder convolutional layer for parallel convolution of decoder input vectors in decoder time series windows over a set of time series of decoder input vectors among a plurality of time series of decoder input vectors and thereby concurrently output a convolutional vector of the decoder for each of the decoder time series windows and at least one decoder pooling layer for parallel accumulation of an ordered set of feature sums in each state vector of the decoder sequentially produced for each successive decoder time series window.

The QRNN system comprises the attender for generating hidden state vectors of the decoder by combining contextual summaries of the hidden state vectors of the encoder with the state vectors of the decoder.

The QRNN system comprises the translator (e.g., translator **950**) for performing the sequence-to-sequence translation task by emitting target language vectors based on the decoded hidden state vectors.

Each of the features discussed in this particular implementation section for the prior method and system implementations apply equally to this system implementation. As indicated above, all the method and system features are not repeated here and should be considered repeated by reference.

Other implementations may include a non-transitory computer readable storage medium storing instructions executable by a processor to perform actions of the system described above.

The technology disclosed presents a method of increasing computation speed during training and inference stages of neural network-based sequence-to-sequence translation task of translating a source language sequence into a target language sequence.

The method includes convolving in parallel source language vectors in encoder time series windows over a set of time series of source language vectors among a plurality of time series of source language vectors to concurrently output a convolutional vector of the encoder for each of the encoder time series windows, accumulating in parallel an ordered set of feature sums in each state vector of the encoder sequentially produced for each successive encoder time series window, and applying an output gate vector to state vectors of the encoder to produce hidden state vectors of the encoder.

The method includes convolving in parallel decoder input vectors in decoder time series windows over a set of time series of decoder input vectors among a plurality of time series of decoder input vectors to concurrently output a convolutional vector of the decoder for each of the decoder time series windows and accumulating in parallel an ordered set of feature sums in each state vector of the decoder sequentially produced for each successive decoder time series window.

The method includes generating hidden state vectors of the decoder by combining contextual summaries of the hidden state vectors of the encoder with the state vectors of the decoder.

The method includes performing the sequence-to-sequence translation task by emitting target language vectors based on the decoded hidden state vectors.

Each of the features discussed in this particular implementation section for the prior method and system implementations apply equally to this method implementation. As indicated above, all the method and system features are not repeated here and should be considered repeated by reference.

Other implementations may include a non-transitory computer readable storage medium (CRM) storing instructions executable by a processor to perform the method described above. Yet another implementation may include a system including memory and one or more processors operable to execute instructions, stored in the memory, to perform the method described above.

In one implementation, the technology disclosed presents a quasi-recurrent neural network (abbreviated QRNN) system. The QRNN system runs on numerous parallel processing cores. The QRNN system comprises a QRNN and increases computation speed during training and inference stages of neural network-based sequence-to-sequence classification tasks.

The QRNN system comprises a QRNN encoder, a QRNN decoder, and a classifer. The QRNN encoder comprises at least one encoder convolutional layer, at least one encoder pooling layer, and at least one encoder output gate. The QRNN decoder that comprises at least one decoder convolutional layer, at least one decoder pooling layer, and at least one attender or attention encoder. The attender comprises a state comparator, an encoding mixer, a perceptron or linear perceptron, and a decoder output gate.

The encoder convolutional layer comprises an encoder convolutional filter bank configured to perform parallel convolution of encoder input vectors in encoder time series windows over a set of time series of encoder input vectors among a plurality of time series of encoder input vectors. The encoder convolutional layer further comprises an encoder convolutional vector producer configured to concurrently output a convolutional vector of the encoder for each of the encoder time series windows based on the parallel convolution.

The encoder pooling layer comprises accumulators configured to perform parallel accumulation of an ordered set of feature sums in each state vector of the encoder sequentially produced for each successive encoder time series window by concurrently accumulating feature values of components of the convolutional vector of the encoder on an ordinal position-wise basis.

The encoder output gate (e.g., encoder output gate **936**) comprises an encoder hidden state producer (e.g., encoder hidden state producer **937**) for applying an output gate vector to state vectors of the encoder and thereby produce hidden state vectors of the encoder.

The decoder convolutional layer comprises a decoder convolutional filter bank for parallel convolution of decoder input vectors in decoder time series windows over a set of time series of decoder input vectors among a plurality of time series of decoder input vectors. At an initial decoder time series window, the decoder convolutional filter bank convolves over only a single decoder input vector which is a start-of-translation token. At successive decoder time series windows, the decoder convolutional filter bank convolves over the decoder input vectors comprising the start-of-translation token and previously emitted target language vectors.

The decoder convolutional layer further comprises a decoder convolutional vector producer for concurrently outputting a convolutional vector of the decoder for each of the decoder time series windows based on the parallel convolution.

The decoder pooling layer comprises accumulators configured to perform parallel accumulation of an ordered set of feature sums in each state vector of the decoder sequentially produced for each successive decoder time series window by concurrently accumulating feature values of components of the convolutional vector of the decoder on an ordinal position-wise basis.

The attender comprises the state comparator (e.g., state comparator **940**) for determining pairwise similarity scores between the hidden state vectors of the encoder and state vectors of the decoder.

The attender comprises the encoding mixer (e.g., encoding mixer **942**) for generating contextual summaries of the hidden state vectors of the encoder as a convex combination of the hidden state vectors of the encoder scaled by exponentially normalized similarity score sequences produced along the encoder time series windows.

The attender comprises the perceptron or linear perceptron (e.g., linear perceptron 944) for linearly projecting the contextual summaries and the state vectors of the decoder.

The attender comprises the concatenator (e.g., concatenator **946**) for combining the linearly projected contextual summaries and state vectors of the decoder.

The attender comprises the decoder output gate (e.g., decoder output gate **948**) for applying an output gate vector to the combined linearly projected contextual summaries and state vectors of the decoder and thereby produce hidden state vectors of the decoder.

The QRNN system comprises the classifier for performing a sequence-to-sequence classification task using the decoded hidden state vectors.

Each of the features discussed in this particular implementation section for the prior method and system implementations apply equally to this system implementation. As indicated above, all the method and system features are not repeated here and should be considered repeated by reference.

The sequence-to-sequence classification task can be translation, speech recognition, text-to-speech synthesis, question answering, and abstractive text summarization.

Other implementations may include a non-transitory computer readable storage medium storing instructions executable by a processor to perform actions of the system described above.

The technology disclosed presents a quasi-recurrent neural network (QRNN) system that increases computational efficiency in neural network sequence-to-sequence modeling.

The QRNN system comprises a QRNN encoder that further comprises one or more encoder convolutional layers and one or more one encoder pooling layers.

At least one encoder convolutional layer receives a time series of encoder input vectors and concurrently outputs encoded convolutional vectors for time series windows.

At least one encoder pooling layer receives the encoded convolutional vectors for the time series windows, concurrently accumulates an ordered set of feature sums in an encoded state vector for a current time series window, and sequentially outputs an encoded state vector for each successive time series window among the time series windows.

The QRNN system comprises a QRNN decoder that further comprises one or more decoder convolutional layers and one or more one decoder pooling layers.

At least one decoder convolutional layer receives a time series of decoder input vectors and concurrently outputs decoded convolutional vectors for time series windows.

At least one decoder pooling layer receives the decoded convolutional vectors for the time series windows respectively concatenated with an encoded state vector outputted by an encoder pooling layer for a final time series window, concurrently accumulates an ordered set of feature sums in a decoded state vector for a current time series window, and sequentially outputs a decoded state vector for each successive time series window among the time series windows.

The QRNN system comprises a state comparator that calculates linguistic similarity between the encoded state vectors and the decoded state vectors to produce an affinity matrix with encoding-wise and decoding-wise axes.

The QRNN system comprises an exponential normalizer that normalizes the affinity matrix encoding-wise to produce respective encoding-to-decoding attention weights.

The QRNN system comprises an encoding mixer that respectively combines the encoded state vectors with the encoding-to-decoding attention weights to generate respective contextual summaries of the encoded state vectors.

The QRNN system comprises an attention encoder that respectively combines the decoded state vectors with the respective contextual summaries of the encoded state vectors to produce an attention encoding for each of the time series windows.

This system implementation and other systems disclosed optionally include one or more of the following features. System can also include features described in connection with methods disclosed. In the interest of conciseness, alternative combinations of system features are not individually enumerated. Features applicable to systems, methods, and articles of manufacture are not repeated for each statutory class set of base features. The reader will understand how features identified in this section can readily be combined with base features in other statutory classes.

Each of the features discussed in this particular implementation section for the prior method and system implementations apply equally to this system implementation. As indicated above, all the method and system features are not repeated here and should be considered repeated by reference.

The attention encoder can be a multilayer perceptron that projects a concatenation of the decoded state vectors and respective contextual summaries of the encoded state vectors into linear projections to produce an attention encoding for each of the time series windows.

The encoded state vectors can be respectively multiplied by output gate vectors of the encoded convolutional vectors to produce respective encoded hidden state vectors.

The state comparator can calculate linguistic similarity between the encoded hidden state vectors and the decoded state vectors to produce an affinity matrix with encoding-wise and decoding-wise axes.

The encoding mixer can respectively combine the encoded hidden state vectors with the encoding-to-decoding attention weights to generate respective contextual summaries of the encoded hidden state vectors.

The attention encoder can respectively combine the decoded state vectors with the respective contextual summaries of the encoded hidden state vectors, and can further multiply the combinations with respective output gate vectors of the decoded convolutional vectors to produce an attention encoding for each of the time series windows.

The attention encoder can be a multilayer perceptron that projects a concatenation of the decoded state vectors and respective contextual summaries of the encoded hidden state vectors into linear projections, and can further multiply the non-linear projections with respective output gate vectors of the decoded convolutional vectors to produce an attention encoding for each of the time series windows.

Other implementations may include a non-transitory computer readable storage medium storing instructions executable by a processor to perform actions of the system described above.

The technology disclosed presents a method of increasing efficiency in neural network sequence-to-sequence modeling.

The method includes receiving a time series of encoder input vectors at an encoder convolutional layer of a QRNN encoder and concurrently outputting encoded convolutional vectors for time series windows.

The method includes receiving the encoded convolutional vectors for the time series windows at an encoder pooling layer of the QRNN encoder, concurrently accumulating an ordered set of feature sums in an encoded state vector for a current time series window, and sequentially outputting an encoded state vector for each successive time series window among the time series windows.

The method includes receiving a time series of decoder input vectors at a decoder convolutional layer of a QRNN decoder and concurrently outputting decoded convolutional vectors for time series windows.

The method includes receiving the decoded convolutional vectors for the time series windows at a decoder pooling layer of the QRNN decoder respectively concatenated with an encoded state vector outputted by an encoder pooling layer for a final time series window, concurrently accumulating an ordered set of feature sums in an decoded state vector for a current time series window, and sequentially outputting an decoded state vector for each successive time series window among the time series windows.

The method includes calculating linguistic similarity between the encoded state vectors and the decoded state vectors to produce an affinity matrix with encoding-wise and decoding-wise axes.

The method includes exponentially normalizing the affinity matrix encoding-wise to produce respective encoding-to-decoding attention weights.

The method includes combining the encoded state vectors with the encoding-to-decoding attention weights to generate respective contextual summaries of the encoded state vectors.

The method includes combining the decoded state vectors with the respective contextual summaries of the encoded state vectors to produce an attention encoding for each of the time series windows.

Each of the features discussed in this particular implementation section for the prior method and system implementations apply equally to this method implementation. As indicated above, all the method and system features are not repeated here and should be considered repeated by reference.

Other implementations may include a non-transitory computer readable storage medium (CRM) storing instructions executable by a processor to perform the method described above. Yet another implementation may include a system including memory and one or more processors operable to execute instructions, stored in the memory, to perform the method described above.

## Computer System

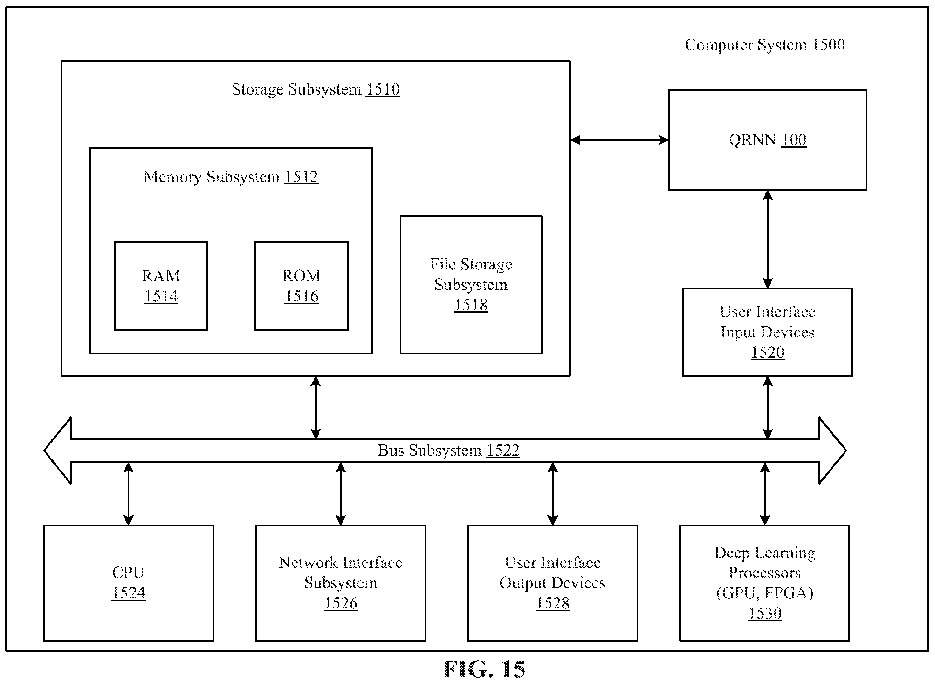

FIG. 15 is a simplified block diagram of a computer system **1500** that can be used to implement the quasi-recurrent neural network (QRNN) **100**. Computer system **1500** includes at least one central processing unit (CPU) **1524** that communicates with a number of peripheral devices via bus subsystem **1522**. These peripheral devices can include a storage subsystem **1510** including, for example, memory devices and a file storage subsystem **1518,** user interface input devices **1520,** user interface output devices **1528,** and a network interface subsystem **1526.** The input and output devices allow user interaction with computer system **1500.** Network interface subsystem **1526** provides an interface to outside networks, including an interface to corresponding interface devices in other computer systems.

In one implementation, the QRNN **100** is communicably linked to the storage subsystem **1510** and to the user interface input devices **1520.**

User interface input devices **1520** can include a keyboard; pointing devices such as a mouse, trackball, touchpad, or graphics tablet; a scanner; a touch screen incorporated into the display; audio input devices such as voice recognition systems and microphones; and other types of input devices. In general, use of the term "input device" is intended to include all possible types of devices and ways to input information into computer system **1500.**

User interface output devices **1528** can include a display subsystem, a printer, a fax machine, or non-visual displays such as audio output devices. The display subsystem can include a cathode ray tube (CRT), a flat-panel device such as a liquid crystal display (LCD), a projection device, or some other mechanism for creating a visible image. The display subsystem can also provide a non-visual display such as audio output devices. In general, use of the term "output device" is intended to include all possible types of devices and ways to output information from computer system **1500** to the user or to another machine or computer system.

Storage subsystem **1510** stores programming and data constructs that provide the functionality of some or all of the modules and methods described herein. These software modules are generally executed by deep learning processors **1530.**

Deep learning processors **1530** can be graphics processing units (GPUs) or field-programmable gate arrays (FPGAs). Deep learning processors **1530** can be hosted by a deep learning cloud platform such as Google Cloud Platform™, Xilinx™, and Cirrascale™. Examples of deep learning processors **1530** include Google's Tensor Processing Unit (TPU)™, rackmount solutions like GX4 Rackmount Series™, GX8 Rackmount Series™, NVIDIA DGX-1™, Microsoft' Stratix V FPGA™, Graphcore's Intelligent Processor Unit (IPU)™, Qualcomm's Zeroth Platform™ with Snapdragon processors™, NVIDIA's Volta™, NVIDIA's DRIVE PX™, NVIDIA's JETSON TX1/TX2 MODULE™, Intel's Nirvana™, Movidius VPU™, Fujitsu DPI™, ARM's DynamicIQ™, IBM TrueNorth™, and others.

Memory subsystem **1512** used in the storage subsystem **1510** can include a number of memories including a main random access memory (RAM) **1514** for storage of instructions and data during program execution and a read only memory (ROM) **1516** in which fixed instructions are stored. A file storage subsystem **1518** can provide persistent storage for program and data files, and can include a hard disk drive, a floppy disk drive along with associated removable media, a CD-ROM drive, an optical drive, or removable media cartridges. The modules implementing the functionality of certain implementations can be stored by file storage subsystem **1518** in the storage subsystem **1510,** or in other machines accessible by the processor.

Bus subsystem **1522** provides a mechanism for letting the various components and subsystems of computer system **1500** communicate with each other as intended. Although bus subsystem **1522** is shown schematically as a single bus, alternative implementations of the bus subsystem can use multiple busses.

Computer system **1500** itself can be of varying types including a personal computer, a portable computer, a workstation, a computer terminal, a network computer, a television, a mainframe, a server farm, a widely-distributed set of loosely networked computers, or any other data processing system or user device. Due to the ever-changing nature of computers and networks, the description of computer system **1500** depicted in **FIG. 15** is intended only as a specific example for purposes of illustrating the preferred embodiments of the present invention. Many other configurations of computer system **1500** are possible having more or less components than the computer system depicted in **FIG. 15.**

The preceding description is presented to enable the making and use of the technology disclosed. Various modifications to the disclosed implementations will be apparent, and the general principles defined herein may be applied to other implementations and applications without departing from the scope of the appended claims. Thus, the technology disclosed is not intended to be limited to the implementations shown, but is to be accorded the widest scope consistent with the principles and features disclosed herein. The scope of the technology disclosed is defined by the appended claims.

# QUASI-RECURRENT NEURAL NETWORKS

**James Bradbury,* Stephen Merity,* Caiming Xiong & Richard Socher**
Salesforce Research
Palo Alto, California
{james.bradbury,smerity,cxiong,rsocher}@salesforce.com

## ABSTRACT

Recurrent neural networks are a powerful tool for modeling sequential data, but the dependence of each timestep's computation on the previous timestep's output limits parallelism and makes RNNs unwieldy for very long sequences. We introduce quasi-recurrent neural networks (QRNNs), an approach to neural sequence modeling that alternates convolutional layers, which apply in parallel across timesteps, and a minimalist recurrent pooling function that applies in parallel across channels. Despite lacking trainable recurrent layers, stacked QRNNs have better predictive accuracy than stacked LSTMs of the same hidden size. Due to their increased parallelism, they are up to 16 times faster at train and test time. Experiments on language modeling, sentiment classification, and character-level neural machine translation demonstrate these advantages and underline the viability of QRNNs as a basic building block for a variety of sequence tasks.

## 1 INTRODUCTION

Recurrent neural networks (RNNs), including gated variants such as the long short-term memory (LSTM) (Hochreiter & Schmidhuber, 1997) have become the standard model architecture for deep learning approaches to sequence modeling tasks. RNNs repeatedly apply a function with trainable parameters to a hidden state. Recurrent layers can also be stacked, increasing network depth, representational power and often accuracy. RNN applications in the natural language domain range from sentence classification (Wang et al., 2015) to word- and character-level language modeling (Zaremba et al., 2014). RNNs are also commonly the basic building block for more complex models for tasks such as machine translation (Bahdanau et al., 2015; Luong et al., 2015; Bradbury & Socher, 2016) or question answering (Kumar et al., 2016; Xiong et al., 2016). Unfortunately standard RNNs, including LSTMs, are limited in their capability to handle tasks involving very long sequences, such as document classification or character-level machine translation, as the computation of features or states for different parts of the document cannot occur in parallel.

Convolutional neural networks (CNNs) (Krizhevsky et al., 2012), though more popular on tasks involving image data, have also been applied to sequence encoding tasks (Zhang et al., 2015). Such models apply time-invariant filter functions in parallel to windows along the input sequence. CNNs possess several advantages over recurrent models, including increased parallelism and better scaling to long sequences such as those often seen with character-level language data. Convolutional models for sequence processing have been more successful when combined with RNN layers in a hybrid architecture (Lee et al., 2016), because traditional max- and average-pooling approaches to combining convolutional features across timesteps assume time invariance and hence cannot make full use of large-scale sequence order information.

We present quasi-recurrent neural networks for neural sequence modeling. QRNNs address both drawbacks of standard models: like CNNs, QRNNs allow for parallel computation across both timestep and minibatch dimensions, enabling high throughput and good scaling to long sequences. Like RNNs, QRNNs allow the output to depend on the overall order of elements in the sequence. We describe QRNN variants tailored to several natural language tasks, including document-level sentiment classification, language modeling, and character-level machine translation. These models outperform strong LSTM baselines on all three tasks while dramatically reducing computation time.

---

*Equal contribution

Figure 1: Block diagrams showing the computation structure of the QRNN compared with typical LSTM and CNN architectures. Red signifies convolutions or matrix multiplications; a continuous block means that those computations can proceed in parallel. Blue signifies parameterless functions that operate in parallel along the channel/feature dimension. LSTMs can be factored into (red) linear blocks and (blue) elementwise blocks, but computation at each timestep still depends on the results from the previous timestep.

## 2 MODEL

Each layer of a quasi-recurrent neural network consists of two kinds of subcomponents, analogous to convolution and pooling layers in CNNs. The convolutional component, like convolutional layers in CNNs, allows fully parallel computation across both minibatches and spatial dimensions, in this case the sequence dimension. The pooling component, like pooling layers in CNNs, lacks trainable parameters and allows fully parallel computation across minibatch and feature dimensions.

Given an input sequence $\mathbf{X} \in \mathbb{R}^{T \times n}$ of $T$ $n$-dimensional vectors $x_1 \ldots x_T$, the convolutional subcomponent of a QRNN performs convolutions in the timestep dimension with a bank of $m$ filters, producing a sequence $\mathbf{Z} \in \mathbb{R}^{T \times m}$ of $m$-dimensional candidate vectors $z_t$. In order to be useful for tasks that include prediction of the next token, the filters must not allow the computation for any given timestep to access information from future timesteps. That is, with filters of width $k$, each $z_t$ depends only on $x_{t-k+1}$ through $x_t$. This concept, known as a masked convolution (van den Oord et al., 2016), is implemented by padding the input to the left by the convolution's filter size minus one.

We apply additional convolutions with separate filter banks to obtain sequences of vectors for the elementwise gates that are needed for the pooling function. While the candidate vectors are passed through a tanh nonlinearity, the gates use an elementwise sigmoid. If the pooling function requires a forget gate $f_t$ and an output gate $o_t$ at each timestep, the full set of computations in the convolutional component is then:

$$\mathbf{Z} = \tanh(\mathbf{W}_z * \mathbf{X})$$
$$\mathbf{F} = \sigma(\mathbf{W}_f * \mathbf{X}) \tag{1}$$
$$\mathbf{O} = \sigma(\mathbf{W}_o * \mathbf{X}),$$

where $\mathbf{W}_z, \mathbf{W}_f$, and $\mathbf{W}_o$, each in $\mathbb{R}^{k \times n \times m}$, are the convolutional filter banks and $*$ denotes a masked convolution along the timestep dimension. Note that if the filter width is 2, these equations reduce to the LSTM-like

$$z_t = \tanh(\mathbf{W}_z^1 x_{t-1} + \mathbf{W}_z^2 x_t)$$
$$f_t = \sigma(\mathbf{W}_f^1 x_{t-1} + \mathbf{W}_f^2 x_t) \tag{2}$$
$$o_t = \sigma(\mathbf{W}_o^1 x_{t-1} + \mathbf{W}_o^2 x_t).$$

Convolution filters of larger width effectively compute higher $n$-gram features at each timestep; thus larger widths are especially important for character-level tasks.

Suitable functions for the pooling subcomponent can be constructed from the familiar elementwise gates of the traditional LSTM cell. We seek a function controlled by gates that can mix states across timesteps, but which acts independently on each channel of the state vector. The simplest option, which Balduzzi & Ghifary (2016) term "dynamic average pooling", uses only a forget gate:

$$h_t = f_t \odot h_{t-1} + (1 - f_t) \odot z_t, \tag{3}$$

where $\odot$ denotes elementwise multiplication. The function may also include an output gate:

$$c_t = f_t \odot c_{t-1} + (1 - f_t) \odot z_t$$
$$h_t = o_t \odot c_t. \tag{4}$$

Or the recurrence relation may include an independent input and forget gate:

$$c_t = f_t \odot c_{t-1} + i_t \odot z_t$$
$$h_t = o_t \odot c_t. \tag{5}$$

We term these three options $f$-pooling, $fo$-pooling, and $ifo$-pooling respectively; in each case we initialize $h$ or $c$ to zero. Although the recurrent parts of these functions must be calculated for each timestep in sequence, their simplicity and parallelism along feature dimensions means that, in practice, evaluating them over even long sequences requires a negligible amount of computation time.

A single QRNN layer thus performs an input-dependent pooling, followed by a gated linear combination of convolutional features. As with convolutional neural networks, two or more QRNN layers should be stacked to create a model with the capacity to approximate more complex functions.

## 2.1 VARIANTS

Motivated by several common natural language tasks, and the long history of work on related architectures, we introduce several extensions to the stacked QRNN described above. Notably, many extensions to both recurrent and convolutional models can be applied directly to the QRNN as it combines elements of both model types.

**Regularization** An important extension to the stacked QRNN is a robust regularization scheme inspired by recent work in regularizing LSTMs.

The need for an effective regularization method for LSTMs, and dropout's relative lack of efficacy when applied to recurrent connections, led to the development of recurrent dropout schemes, including variational inference–based dropout (Gal & Ghahramani, 2016) and zoneout (Krueger et al., 2016). These schemes extend dropout to the recurrent setting by taking advantage of the repeating structure of recurrent networks, providing more powerful and less destructive regularization.

Variational inference–based dropout locks the dropout mask used for the recurrent connections across timesteps, so a single RNN pass uses a single stochastic subset of the recurrent weights. Zoneout stochastically chooses a new subset of channels to "zone out" at each timestep; for these channels the network copies states from one timestep to the next without modification.

As QRNNs lack recurrent weights, the variational inference approach does not apply. Thus we extended zoneout to the QRNN architecture by modifying the pooling function to keep the previous pooling state for a stochastic subset of channels. Conveniently, this is equivalent to stochastically setting a subset of the QRNN's $f$ gate channels to 1, or applying dropout on $1 - f$:

$$F = 1 - \sigma(\text{dropout}(1 - W_f * X)) \tag{6}$$

Thus the pooling function itself need not be modified at all. We note that when using an off-the-shelf dropout layer in this context, it is important to remove automatic rescaling functionality from the implementation if it is present. In many experiments, we also apply ordinary dropout between layers, including between word embeddings and the first QRNN layer.

**Densely-Connected Layers** We can also extend the QRNN architecture using techniques introduced for convolutional networks. For sequence classification tasks, we found it helpful to use skip-connections between every QRNN layer, a technique termed "dense convolution" by Huang et al. (2016). Where traditional feed-forward or convolutional networks have connections only between subsequent layers, a "DenseNet" with $L$ layers has feed-forward or convolutional connections between every pair of layers, for a total of $L(L-1)$. This can improve gradient flow and convergence properties, especially in deeper networks, although it requires a parameter count that is quadratic in the number of layers.

When applying this technique to the QRNN, we include connections between the input embeddings and every QRNN layer and between every pair of QRNN layers. This is equivalent to concatenating

Figure 2: The QRNN encoder–decoder architecture used for machine translation experiments.

each QRNN layer's input to its output along the channel dimension before feeding the state into the next layer. The output of the last layer alone is then used as the overall encoding result.

**Encoder–Decoder Models** To demonstrate the generality of QRNNs, we extend the model architecture to sequence-to-sequence tasks, such as machine translation, by using a QRNN as encoder and a modified QRNN, enhanced with attention, as decoder. The motivation for modifying the decoder is that simply feeding the last encoder hidden state (the output of the encoder's pooling layer) into the decoder's recurrent pooling layer, analogously to conventional recurrent encoder–decoder architectures, would not allow the encoder state to affect the gate or update values that are provided to the decoder's pooling layer. This would substantially limit the representational power of the decoder.

Instead, the output of each decoder QRNN layer's convolution functions is supplemented at every timestep with the final encoder hidden state. This is accomplished by adding the result of the convolution for layer $\ell$ (e.g., $\mathbf{W}_z^\ell * \mathbf{X}^\ell$, in $\mathbb{R}^{T \times m}$) with broadcasting to a linearly projected copy of layer $\ell$'s last encoder state (e.g., $\mathbf{V}_z^\ell \tilde{\mathbf{h}}_T^\ell$, in $\mathbb{R}^m$):

$$\mathbf{Z}^\ell = \tanh(\mathbf{W}_z^\ell * \mathbf{X}^\ell + \mathbf{V}_z^\ell \tilde{\mathbf{h}}_T^\ell)$$
$$\mathbf{F}^\ell = \sigma(\mathbf{W}_f^\ell * \mathbf{X}^\ell + \mathbf{V}_f^\ell \tilde{\mathbf{h}}_T^\ell) \qquad (7)$$
$$\mathbf{O}^\ell = \sigma(\mathbf{W}_o^\ell * \mathbf{X}^\ell + \mathbf{V}_o^\ell \tilde{\mathbf{h}}_T^\ell),$$

where the tilde denotes that $\tilde{\mathbf{h}}$ is an encoder variable. Encoder–decoder models which operate on long sequences are made significantly more powerful with the addition of soft attention (Bahdanau et al., 2015), which removes the need for the entire input representation to fit into a fixed-length encoding vector. In our experiments, we computed an attentional sum of the encoder's last layer's hidden states. We used the dot products of these encoder hidden states with the decoder's last layer's un-gated hidden states, applying a softmax along the encoder timesteps, to weight the encoder states into an attentional sum $\mathbf{k}_t$ for each decoder timestep. This context, and the decoder state, are then fed into a linear layer followed by the output gate:

$$\alpha_{st} = \operatorname*{softmax}_{\text{all } s}(\mathbf{c}_t^L \cdot \tilde{\mathbf{h}}_s^L)$$
$$\mathbf{k}_t = \sum_s \alpha_{st} \tilde{\mathbf{h}}_s^L \qquad (8)$$
$$\mathbf{h}_t^L = \mathbf{o}_t \odot (\mathbf{W}_k \mathbf{k}_t + \mathbf{W}_c \mathbf{c}_t^L),$$

where $L$ is the last layer.

While the first step of this attention procedure is quadratic in the sequence length, in practice it takes significantly less computation time than the model's linear and convolutional layers due to the simple and highly parallel dot-product scoring function.

| Model | Time / Epoch (s) | Test Acc (%) |
|---|---|---|
| BSVM-bi (Wang & Manning, 2012) | — | 91.2 |
| 2 layer sequential BoW CNN (Johnson & Zhang, 2014) | — | 92.3 |
| Ensemble of RNNs and NB-SVM (Mesnil et al., 2014) | — | 92.6 |
| 2-layer LSTM (Longpre et al., 2016) | — | 87.6 |
| Residual 2-layer bi-LSTM (Longpre et al., 2016) | — | 90.1 |
| *Our models* | | |
| Deeply connected 4-layer LSTM (cuDNN optimized) | 480 | 90.9 |
| Deeply connected 4-layer QRNN | 150 | 91.4 |
| D.C. 4-layer QRNN with $k = 4$ | 160 | 91.1 |

Table 1: Accuracy comparison on the IMDb binary sentiment classification task. All of our models use 256 units per layer; all layers other than the first layer, whose filter width may vary, use filter width $k = 2$. Train times are reported on a single NVIDIA K40 GPU. We exclude semi-supervised models that conduct additional training on the unlabeled portion of the dataset.

## 3 EXPERIMENTS

We evaluate the performance of the QRNN on three different natural language tasks: document-level sentiment classification, language modeling, and character-based neural machine translation. Our QRNN models outperform LSTM-based models of equal hidden size on all three tasks while dramatically improving computation speed. Experiments were implemented in Chainer (Tokui et al.).

### 3.1 SENTIMENT CLASSIFICATION

We evaluate the QRNN architecture on a popular document-level sentiment classification benchmark, the IMDb movie review dataset (Maas et al., 2011). The dataset consists of a balanced sample of 25,000 positive and 25,000 negative reviews, divided into equal-size train and test sets, with an average document length of 231 words (Wang & Manning, 2012). We compare only to other results that do not make use of additional unlabeled data (thus excluding e.g., Miyato et al. (2016)).

Our best performance on a held-out development set was achieved using a four-layer densely-connected QRNN with 256 units per layer and word vectors initialized using 300-dimensional cased GloVe embeddings (Pennington et al., 2014). Dropout of 0.3 was applied between layers, and we used $L^2$ regularization of $4 \times 10^{-6}$. Optimization was performed on minibatches of 24 examples using RMSprop (Tieleman & Hinton, 2012) with learning rate of 0.001, $\alpha = 0.9$, and $\epsilon = 10^{-8}$.

Small batch sizes and long sequence lengths provide an ideal situation for demonstrating the QRNN's performance advantages over traditional recurrent architectures. We observed a speedup of 3.2x on IMDb train time per epoch compared to the optimized LSTM implementation provided in NVIDIA's cuDNN library. For specific batch sizes and sequence lengths, a 16x speed gain is possible. Figure 4 provides extensive speed comparisons.

In Figure 3, we visualize the hidden state vectors $c_t^L$ of the final QRNN layer on part of an example from the IMDb dataset. Even without any post-processing, changes in the hidden state are visible and interpretable in regards to the input. This is a consequence of the elementwise nature of the recurrent pooling function, which delays direct interaction between different channels of the hidden state until the computation of the next QRNN layer.

### 3.2 LANGUAGE MODELING

We replicate the language modeling experiment of Zaremba et al. (2014) and Gal & Ghahramani (2016) to benchmark the QRNN architecture for natural language sequence prediction. The experiment uses a standard preprocessed version of the Penn Treebank (PTB) by Mikolov et al. (2010).

We implemented a gated QRNN model with medium hidden size: 2 layers with 640 units in each layer. Both QRNN layers use a convolutional filter width $k$ of two timesteps. While the "medium" models used in other work (Zaremba et al., 2014; Gal & Ghahramani, 2016) consist of 650 units in

Figure 3: Visualization of the final QRNN layer's hidden state vectors $c_t^L$ in the IMDb task, with timesteps along the vertical axis. Colors denote neuron activations. After an initial positive statement *"This movie is simply gorgeous"* (off graph at timestep 9), timestep 117 triggers a reset of most hidden states due to the phrase *"not exactly a bad story"* (soon after *"main weakness is its story"*). Only at timestep 158, after *"I recommend this movie to everyone, even if you've never played the game"*, do the hidden units recover.

each layer, it was more computationally convenient to use a multiple of 32. As the Penn Treebank is a relatively small dataset, preventing overfitting is of considerable importance and a major focus of recent research. It is not obvious in advance which of the many RNN regularization schemes would perform well when applied to the QRNN. Our tests showed encouraging results from zoneout applied to the QRNN's recurrent pooling layer, implemented as described in Section 2.1.

The experimental settings largely followed the "medium" setup of Zaremba et al. (2014). Optimization was performed by stochastic gradient descent (SGD) without momentum. The learning rate was set at 1 for six epochs, then decayed by 0.95 for each subsequent epoch, for a total of 72 epochs. We additionally used $L^2$ regularization of $2 \times 10^{-4}$ and rescaled gradients with norm above 10. Zoneout was applied by performing dropout with ratio 0.1 on the forget gates of the QRNN, without rescaling the output of the dropout function. Batches consist of 20 examples, each 105 timesteps.

Comparing our results on the gated QRNN with zoneout to the results of LSTMs with both ordinary and variational dropout in Table 2, we see that the QRNN is highly competitive. The QRNN without zoneout strongly outperforms both our medium LSTM and the medium LSTM of Zaremba et al. (2014) which do not use recurrent dropout and is even competitive with variational LSTMs. This may be due to the limited computational capacity that the QRNN's pooling layer has relative to the LSTM's recurrent weights, providing structural regularization over the recurrence.

Without zoneout, early stopping based upon validation loss was required as the QRNN would begin overfitting. By applying a small amount of zoneout ($p = 0.1$), no early stopping is required and the QRNN achieves competitive levels of perplexity to the variational LSTM of Gal & Ghahramani

| Model | Parameters | Validation | Test |
|---|---|---|---|
| LSTM (medium) (Zaremba et al., 2014) | 20M | 86.2 | 82.7 |
| Variational LSTM (medium) (Gal & Ghahramani, 2016) | 20M | 81.9 | 79.7 |
| LSTM with CharCNN embeddings (Kim et al., 2016) | 19M | – | 78.9 |
| Zoneout + Variational LSTM (medium) (Merity et al., 2016) | 20M | 84.4 | 80.6 |
| *Our models* | | | |
| LSTM (medium) | 20M | 85.7 | 82.0 |
| QRNN (medium) | 18M | 82.9 | 79.9 |
| QRNN + zoneout ($p = 0.1$) (medium) | 18M | 82.1 | 78.3 |

Table 2: Single model perplexity on validation and test sets for the Penn Treebank language modeling task. Lower is better. "Medium" refers to a two-layer network with 640 or 650 hidden units per layer. All QRNN models include dropout of 0.5 on embeddings and between layers. MC refers to Monte Carlo dropout averaging at test time.

| | | Sequence length | | | | |
| | | 32 | 64 | 128 | 256 | 512 |
|---|---|---|---|---|---|---|
| Batch size | 8 | 5.5x | 8.8x | 11.0x | 13.4x | 16.9x |
| | 16 | 5.5x | 6.7x | 7.8x | 8.3x | 10.8x |
| | 32 | 4.2x | 4.5x | 4.9x | 4.9x | 6.4x |
| | 64 | 3.0x | 3.0x | 3.0x | 3.0x | 3.7x |
| | 128 | 2.1x | 1.9x | 2.0x | 2.0x | 2.4x |
| | 256 | 1.4x | 1.4x | 1.3x | 1.3x | 1.3x |

Figure 4: *Left:* Training speed for two-layer 640-unit PTB LM on a batch of 20 examples of 105 timesteps. "RNN" and "softmax" include the forward and backward times, while "optimization overhead" includes gradient clipping, $L^2$ regularization, and SGD computations.
*Right:* Inference speed advantage of a 320-unit QRNN layer alone over an equal-sized cuDNN LSTM layer for data with the given batch size and sequence length. Training results are similar.

(2016), which had variational inference based dropout of 0.2 applied recurrently. The best performing variation also used Monte Carlo (MC) dropout averaging at test time of 1000 different masks, making it computationally expensive to run.

When training on the PTB dataset with an NVIDIA K40 GPU, we found that the QRNN is substantially faster than a standard LSTM, even when comparing against the optimized cuDNN LSTM. In Figure 4 we provide a breakdown of the time taken for Chainer's default LSTM, the cuDNN LSTM, and QRNN to perform a full forward and backward pass on a single batch during training of the RNN LM on PTB. For both LSTM implementations, running time was dominated by the RNN computations, even with the highly optimized cuDNN implementation. For the QRNN implementation, however, the "RNN" layers are no longer the bottleneck. Indeed, there are diminishing returns from further optimization of the QRNN itself as the softmax and optimization overhead take equal or greater time. Note that the softmax, over a vocabulary size of only 10,000 words, is relatively small; for tasks with larger vocabularies, the softmax would likely dominate computation time.

It is also important to note that the cuDNN library's RNN primitives do not natively support any form of recurrent dropout. That is, running an LSTM that uses a state-of-the-art regularization scheme at cuDNN-like speeds would likely require an entirely custom kernel.

### 3.3 CHARACTER-LEVEL NEURAL MACHINE TRANSLATION

We evaluate the sequence-to-sequence QRNN architecture described in 2.1 on a challenging neural machine translation task, IWSLT German–English spoken-domain translation, applying fully character-level segmentation. This dataset consists of 209,772 sentence pairs of parallel training data from transcribed TED and TEDx presentations, with a mean sentence length of 103 characters for German and 93 for English. We remove training sentences with more than 300 characters in English or German, and use a unified vocabulary of 187 Unicode code points.

Our best performance on a development set (TED.tst2013) was achieved using a four-layer encoder–decoder QRNN with 320 units per layer, no dropout or $L^2$ regularization, and gradient rescaling to a maximum magnitude of 5. Inputs were supplied to the encoder reversed. The first encoder layer used convolutional filter width $k = 6$, while the other encoder layers used $k = 2$. Optimization was performed for 10 epochs on minibatches of 16 examples using Adam (Kingma & Ba, 2014) with $\alpha = 0.001$, $\beta_1 = 0.9$, $\beta_2 = 0.999$, and $\epsilon = 10^{-8}$. Decoding was performed using beam search with beam width 8 and length normalization $\alpha = 0.6$. The modified log-probability ranking criterion is provided in the appendix.

Results using this architecture were compared to an equal-sized four-layer encoder–decoder LSTM with attention, applying dropout of 0.2. We again optimized using Adam; other hyperparameters were equal to their values for the QRNN and the same beam search procedure was applied. Table 3 shows that the QRNN outperformed the character-level LSTM, almost matching the performance of a word-level attentional baseline.

| Model | Train Time | BLEU (TED.tst2014) |
|---|---|---|
| Word-level LSTM w/attn (Ranzato et al., 2016) | — | 20.2 |
| Word-level CNN w/attn, input feeding (Wiseman & Rush, 2016) | — | 24.0 |
| *Our models* | | |
| Char-level 4-layer LSTM | 4.2 hrs/epoch | 16.53 |
| Char-level 4-layer QRNN with $k = 6$ | 1.0 hrs/epoch | 19.41 |

Table 3: Translation performance, measured by BLEU, and train speed in hours per epoch, for the IWSLT German-English spoken language translation task. All models were trained on in-domain data only, and use negative log-likelihood as the training criterion. Our models were trained for 10 epochs. The QRNN model uses $k = 2$ for all layers other than the first encoder layer.

## 4 RELATED WORK

Exploring alternatives to traditional RNNs for sequence tasks is a major area of current research. Quasi-recurrent neural networks are related to several such recently described models, especially the strongly-typed recurrent neural networks (T-RNN) introduced by Balduzzi & Ghifary (2016). While the motivation and constraints described in that work are different, Balduzzi & Ghifary (2016)'s concepts of "learnware" and "firmware" parallel our discussion of convolution-like and pooling-like subcomponents. As the use of a fully connected layer for recurrent connections violates the constraint of "strong typing", all strongly-typed RNN architectures (including the T-RNN, T-GRU, and T-LSTM) are also quasi-recurrent. However, some QRNN models (including those with attention or skip-connections) are not "strongly typed". In particular, a T-RNN differs from a QRNN as described in this paper with filter size 1 and $f$-pooling only in the absence of an activation function on z. Similarly, T-GRUs and T-LSTMs differ from QRNNs with filter size 2 and $fo$- or $ifo$-pooling respectively in that they lack tanh on z and use tanh rather than sigmoid on o.

The QRNN is also related to work in hybrid convolutional–recurrent models. Zhou et al. (2015) apply CNNs at the word level to generate $n$-gram features used by an LSTM for text classification. Xiao & Cho (2016) also tackle text classification by applying convolutions at the character level, with a stride to reduce sequence length, then feeding these features into a bidirectional LSTM. A similar approach was taken by Lee et al. (2016) for character-level machine translation. Their model's encoder uses a convolutional layer followed by max-pooling to reduce sequence length, a four-layer highway network, and a bidirectional GRU. The parallelism of the convolutional, pooling, and highway layers allows training speed comparable to subword-level models without hard-coded text segmentation.

The QRNN encoder–decoder model shares the favorable parallelism and path-length properties exhibited by the ByteNet (Kalchbrenner et al., 2016), an architecture for character-level machine translation based on residual convolutions over binary trees. Their model was constructed to achieve three desired properties: parallelism, linear-time computational complexity, and short paths between any pair of words in order to better propagate gradient signals.

## 5 CONCLUSION

Intuitively, many aspects of the semantics of long sequences are context-invariant and can be computed in parallel (e.g., convolutionally), but some aspects require long-distance context and must be computed recurrently. Many existing neural network architectures either fail to take advantage of the contextual information or fail to take advantage of the parallelism. QRNNs exploit both parallelism and context, exhibiting advantages from both convolutional and recurrent neural networks. QRNNs have better predictive accuracy than LSTM-based models of equal hidden size, even though they use fewer parameters and run substantially faster. Our experiments show that the speed and accuracy advantages remain consistent across tasks and at both word and character levels.

Extensions to both CNNs and RNNs are often directly applicable to the QRNN, while the model's hidden states are more interpretable than those of other recurrent architectures as its channels maintain their independence across timesteps. We believe that QRNNs can serve as a building block for long-sequence tasks that were previously impractical with traditional RNNs.

References

Dzmitry Bahdanau, Kyunghyun Cho, and Yoshua Bengio. Neural machine translation by jointly learning to align and translate. In *ICLR*, 2015.

David Balduzzi and Muhammad Ghifary. Strongly-typed recurrent neural networks. In *ICML*, 2016.

James Bradbury and Richard Socher. MetaMind neural machine translation system for WMT 2016. In *Proceedings of the First Conference on Machine Translation, Berlin, Germany. Association for Computational Linguistics*, 2016.

Yarin Gal and Zoubin Ghahramani. A theoretically grounded application of dropout in recurrent neural networks. In *NIPS*, 2016.

Sepp Hochreiter and Jürgen Schmidhuber. Long short-term memory. *Neural Computation*, 9(8): 1735–1780, Nov 1997. ISSN 0899-7667.

Gao Huang, Zhuang Liu, and Kilian Q Weinberger. Densely connected convolutional networks. *arXiv preprint arXiv:1608.06993*, 2016.

Rie Johnson and Tong Zhang. Effective use of word order for text categorization with convolutional neural networks. *arXiv preprint arXiv:1412.1058*, 2014.

Nal Kalchbrenner, Lasse Espeholt, Karen Simonyan, Aaron van den Oord, Alex Graves, and Koray Kavukcuoglu. Neural machine translation in linear time. *arXiv preprint arXiv:1610.10099*, 2016.

Yoon Kim, Yacine Jernite, David Sontag, and Alexander M. Rush. Character-aware neural language models. *arXiv preprint arXiv:1508.06615*, 2016.

Diederik Kingma and Jimmy Ba. Adam: A method for stochastic optimization. *arXiv preprint arXiv:1412.6980*, 2014.

Alex Krizhevsky, Ilya Sutskever, and Geoffrey E Hinton. ImageNet classification with deep convolutional neural networks. In *NIPS*, 2012.

David Krueger, Tegan Maharaj, János Kramár, Mohammad Pezeshki, Nicolas Ballas, Nan Rosemary Ke, Anirudh Goyal, Yoshua Bengio, Hugo Larochelle, Aaron Courville, et al. Zoneout: Regularizing RNNs by Randomly Preserving Hidden Activations. *arXiv preprint arXiv:1606.01305*, 2016.

Ankit Kumar, Ozan Irsoy, Peter Ondruska, Mohit Iyyer, James Bradbury, Ishaan Gulrajani, Victor Zhong, Romain Paulus, and Richard Socher. Ask me anything: Dynamic memory networks for natural language processing. In *ICML*, 2016.

Jason Lee, Kyunghyun Cho, and Thomas Hofmann. Fully character-level neural machine translation without explicit segmentation. *arXiv preprint arXiv:1610.03017*, 2016.

Shayne Longpre, Sabeek Pradhan, Caiming Xiong, and Richard Socher. A way out of the odyssey: Analyzing and combining recent insights for LSTMs. *Submitted to ICLR*, 2016.

M. T. Luong, H. Pham, and C. D. Manning. Effective approaches to attention-based neural machine translation. In *EMNLP*, 2015.

Andrew L Maas, Andrew Y Ng, and Christopher Potts. Multi-dimensional sentiment analysis with learned representations. Technical report, 2011.

Stephen Merity, Caiming Xiong, James Bradbury, and Richard Socher. Pointer sentinel mixture models. *arXiv preprint arXiv:1609.07843*, 2016.

Grégoire Mesnil, Tomas Mikolov, Marc'Aurelio Ranzato, and Yoshua Bengio. Ensemble of generative and discriminative techniques for sentiment analysis of movie reviews. *arXiv preprint arXiv:1412.5335*, 2014.

Tomas Mikolov, Martin Karafiát, Lukás Burget, Jan Cernocký, and Sanjeev Khudanpur. Recurrent neural network based language model. In *INTERSPEECH*, 2010.

Takeru Miyato, Andrew M Dai, and Ian Goodfellow. Virtual adversarial training for semi-supervised text classification. *arXiv preprint arXiv:1605.07725*, 2016.

Jeffrey Pennington, Richard Socher, and Christopher D Manning. GloVe: Global vectors for word representation. In *EMNLP*, 2014.

Marc'Aurelio Ranzato, Sumit Chopra, Michael Auli, and Wojciech Zaremba. Sequence level training with recurrent neural networks. In *ICLR*, 2016.

Tijmen Tieleman and Geoffrey Hinton. Lecture 6.5-rmsprop: Divide the gradient by a running average of its recent magnitude. *COURSERA: Neural Networks for Machine Learning*, 4(2), 2012.

Seiya Tokui, Kenta Oono, and Shohei Hido. Chainer: A next-generation open source framework for deep learning.

Aaron van den Oord, Nal Kalchbrenner, and Koray Kavukcuoglu. Pixel recurrent neural networks. *arXiv preprint arXiv:1601.06759*, 2016.

Sida Wang and Christopher D Manning. Baselines and bigrams: Simple, good sentiment and topic classification. In *ACL*, 2012.

Xin Wang, Yuanchao Liu, Chengjie Sun, Baoxun Wang, and Xiaolong Wang. Predicting polarities of tweets by composing word embeddings with long short-term memory. In *ACL*, 2015.

Sam Wiseman and Alexander M Rush. Sequence-to-sequence learning as beam-search optimization. *arXiv preprint arXiv:1606.02960*, 2016.

Yonghui Wu, Mike Schuster, Zhifeng Chen, Quoc V Le, Mohammad Norouzi, Wolfgang Macherey, Maxim Krikun, Yuan Cao, Qin Gao, Klaus Macherey, et al. Google's neural machine translation system: Bridging the gap between human and machine translation. *arXiv preprint arXiv:1609.08144*, 2016.

Yijun Xiao and Kyunghyun Cho. Efficient character-level document classification by combining convolution and recurrent layers. *arXiv preprint arXiv:1602.00367*, 2016.

Caiming Xiong, Stephen Merity, and Richard Socher. Dynamic memory networks for visual and textual question answering. In *ICML*, 2016.

Wojciech Zaremba, Ilya Sutskever, and Oriol Vinyals. Recurrent neural network regularization. *arXiv preprint arXiv:1409.2329*, 2014.

Xiang Zhang, Junbo Zhao, and Yann LeCun. Character-level convolutional networks for text classification. In *NIPS*, 2015.

Chunting Zhou, Chonglin Sun, Zhiyuan Liu, and Francis Lau. A C-LSTM neural network for text classification. *arXiv preprint arXiv:1511.08630*, 2015.

APPENDIX

BEAM SEARCH RANKING CRITERION

The modified log-probability ranking criterion we used in beam search for translation experiments is:

$$\log(P_{\text{cand}}) = \frac{T + \alpha}{T} \dots \frac{T_{\text{trg}} + \alpha}{T_{\text{trg}}} \sum_{i=1}^{T} \log(p(w_i|w_1 \dots w_{i-1})), \qquad (9)$$

where $\alpha$ is a length normalization parameter (Wu et al., 2016), $w_i$ is the $i^{\text{th}}$ output character, and $T_{\text{trg}}$ is a "target length" equal to the source sentence length plus five characters. This reduces at $\alpha = 0$ to ordinary beam search with probabilities:

$$\log(P_{\text{cand}}) = \sum_{i=1}^{T} \log(p(w_i|w_1 \dots w_{i-1})), \qquad (10)$$

and at $\alpha = 1$ to beam search with probabilities normalized by length (up to the target length):

$$\log(P_{\text{cand}}) \sim \frac{1}{T} \sum_{i=1}^{T} \log(p(w_i|w_1 \dots w_{i-1})). \qquad (11)$$

Conveniently, this ranking criterion can be computed at intermediate beam-search timesteps, obviating the need to apply a separate reranking on complete hypotheses.

**Claims**

1. A quasi-recurrent neural network, QRNN, system, running on numerous parallel processing cores, wherein the system comprises a QRNN and increases computation speed during training and inference stages of neural network-based sequence classification tasks or wherein the QRNN system comprises a QRNN encoder and a QRNN decoder and the system increases computation speed during training and inference stages of neural network-based translation tasks, wherein each QRNN of the QRNN system comprises:
   a convolutional layer of a QRNN that comprises:

   a convolutional filter bank (210) configured to perform parallel convolution of input vectors on the parallel processing cores in time series windows over a set of time series of input vectors among a plurality of time series of input vectors; and
   a convolutional vector producer (212) configured to concurrently output a convolutional vector for each of the time series windows based on the parallel convolution on the parallel processing cores,
   a pooling layer that comprises accumulators (602) configured to perform parallel accumulation on the parallel processing cores of an ordered set of feature sums in a state vector (802, 804) for a current time series window by concurrently accumulating feature values of components of the convolutional vector (208, 938) on an ordinal position-wise basis; and wherein the QRNN system further comprises:

   an output producer (604) for sequentially outputting, at each successive time series window, a state vector (802, 804) pooled by the pooling layer; and
   a classifier for performing a sequence classification task using successive state vectors produced by the output producer or a translator for performing a sequence-to-sequence translation task using the state vectors (802, 804).

2. The QRNN system of claim 1, further comprising a dimensionality augmenter (214) for augmenting dimensionality of the convolutional vectors (208, 938) relative to dimensionality of the input vectors in dependence upon a number of convolutional filters in the convolutional filter bank (210).

3. The QRNN system of any of claims 1-2, wherein the input vectors represent elements of an input sequence, and wherein the pooling layer comprises an encoder (142) for encoding order and context information of the elements in the state vectors (802, 804).

4. The QRNN system of any of claims 1-3, wherein the input sequence is a word-level sequence and/or a character-level sequence.

5. The QRNN system of any of claims 1 to 4, wherein a gate vector is a forget gate vector (304, 404), and wherein the pooling layer comprises a forget gate vector (304, 404) for the current time series window for controlling accumulation of information from the state vector (802, 804) accumulated for the prior time series window and information from the activation vector (302, 402) for the current time series window.

6. The QRNN system of any of claims 1 to 5, wherein a gate vector is an input gate vector (306, 406), and wherein the pooling layer comprises an input gate vector (306, 406) for the current time series window for controlling accumulation of information from the activation vector (302, 402) for the current time series window.

7. The QRNN system of any of claims 1 to 6, wherein a gate vector is an output gate vector (308, 408), and wherein the pooling layer comprises an output gate vector (308, 408) for the current time series window for controlling accumulation of information from the state vector (802, 804) for the current time series window.

8. The QRNN system of any of claims 1 to 7, further configured to comprise a plurality of sub-QRNN systems arranged in a sequence from lowest to highest for performing the sequence classification task, wherein each sub-QRNN system comprises at least one convolutional layer for parallel convolution and at least one pooling layer for parallel accumulation.

9. The QRNN system of claim 8, further comprising a sub-QRNN system that further comprises:

an input receiver for receiving as input a preceding output (114, 118) generated by a preceding sub-QRNN system in the sequence;
a convolutional layer for parallel convolution of the preceding output (114, 118) to produce an alternative representation (116) of the preceding output; and
a pooling layer for parallel accumulation of the alternative representation (116) to produce an output (114, 118).

10. The QRNN system of claim 8, further configured to comprise skip connections (120, 122, 124) between sub-QRNN systems and between layers in a sub-QRNN system for concatenating output (114, 118) of a preceding layer with output of a current layer and for providing the concatenation to a following layer as input.

11. The QRNN system of any of claims 1 to 10, wherein the sequence classification task is language modeling, sentiment classification, document classification, and wherein the sequence-to-sequence translation task is word-level translation, and/or character-level translation.

12. The QRNN system of any of claims 1 to 11, further comprising a regularizer (140) for regularizing the convolutional layer and the pooling layer by requiring respective feature values at the given ordinal positions in a forget gate vector (304, 404) for the current time series window to be unity, and thereby producing a random subset of feature sums at given ordinal positions in the state vector (802, 804) for the current time series window that match respective feature sums at the given ordinal positions in the state vector concurrently accumulated for the prior time series window.

13. The QRNN system of claim 1, wherein each convolution vector comprises feature values in an activation vector (302, 402) and in one or more gate vectors and the feature values in the gate vectors are parameters that, respectively, apply element-wise by ordinal position to the feature values in the activation vector; and
wherein each feature sum is accumulated by the accumulators in dependence upon a feature value at a given ordinal position in an activation vector (302, 402) outputted for the current time series window, one or more feature values at the given ordinal position in one or more gate vectors outputted for the current time series window, and a feature sum at the given ordinal position in a state vector accumulated for a prior time series window.

14. A computer-implemented method of increasing computation speed during training and inference stages of neural network-based sequence classification tasks using a quasi-recurrent neural network, QRNN, system that comprises a QRNN, or during training and inference stages of neural network-based translation tasks using a QRNN system that comprises a QRNN encoder and a QRNN decoder, the method including:

applying a convolutional filter bank (210) in parallel on parallel processing cores to input vectors in a time series windows over a set of time series of input vectors among a plurality of time series of input vectors to concurrently output (114, 118) a convolutional vector (208, 938) for each of the time series windows, wherein each convolution vector comprises feature values in an activation vector (302, 402) and in one or more gate vectors and the feature values in the gate vectors are parameters that, respectively, apply element-wise by ordinal position to the feature values in the activation vector;

applying accumulators (602) in parallel on the parallel processing cores over feature values of components of the convolutional vector (208, 938) to concurrently accumulate, on an ordinal position-wise basis, in a state vector (802, 804) for a current time series window, an ordered set of feature sums, wherein each feature sum is accumulated by the accumulators in dependence upon a feature value at a given ordinal position in an activation vector (302, 402) outputted for the current time series window, one or more feature values at the given ordinal position in one or more gate vectors outputted for the current time series window, and a feature sum at the given ordinal position in a state vector accumulated for a prior time series window;

sequentially outputting, at each successive time series window, a state vector (802, 804) accumulated by the accumulators (602); and

performing a sequence classification or translation task using successive state vectors (802, 804).

15. A non-transitory computer readable storage medium impressed with computer program instructions, which when executed on numerous parallel processing cores, increase computation speed during training and inference stages of neural network-based sequence classification tasks using a quasi-recurrent neural network, QRNN, system that comprises a QRNN, or during training and inference stages of neural network-based translation tasks using a QRNN system that comprises a QRNN encoder and a QRNN decoder, the instructions, when executed on numerous parallel processing cores, implement a method comprising:

applying a convolutional filter bank (210) in parallel on the parallel processing cores to input vectors in a time series windows over a set of time series of input vectors among a plurality of time series of input vectors to concurrently output (114, 118) a convolutional vector (208, 938) for each of the time series windows, wherein each convolution vector comprises feature values in an activation vector (302, 402) and in one or more gate vectors and the feature values in the gate vectors are parameters that, respectively, apply element-wise by ordinal position to the feature values in the activation vector;

applying accumulators (602) in parallel on the parallel processing cores over feature values of components of the convolutional vector (208, 938) to concurrently accumulate, on an ordinal position-wise basis, in a state vector (802, 804) for a current time series window, an ordered set of feature sums, wherein each feature sum is accumulated by the accumulators in dependence upon a feature value at a given ordinal position in an activation vector (302, 402) outputted for the current time series window, one or more feature values at the given ordinal position in one or more gate vectors outputted for the current time series window, and a feature sum at the given ordinal position in a state vector accumulated for a prior time series window;

sequentially outputting, at each successive time series window, a state vector (802, 804) accumulated by the accumulators (602); and

performing a sequence classification or translation task using successive state vectors (802, 804).

## Patentansprüche

1. Quasi-rekurrentes neuronales Netzwerk-, QRNN-, System, das auf zahlreichen parallelen Verarbeitungskernen läuft, wobei das System ein QRNN umfasst und die Berechnungsgeschwindigkeit während Trainings- und Inferenzphasen von auf einem neuronalen Netzwerk basierenden Sequenzklassifizierungsaufgaben erhöht oder wobei das QRNN-System einen QRNN-Codierer und einen QRNN-Decodierer umfasst und das System die Berechnungsgeschwindigkeit während Trainings- und Inferenzphasen von auf einem neuronalen Netzwerk basierenden Übersetzungsaufgaben erhöht, wobei jedes QRNN des QRNN-Systems umfasst:
eine Faltungsschicht eines QRNN, die umfasst:

eine Faltungsfilterbank (210), die konfiguriert ist, um eine parallele Faltung von Eingangsvektoren auf den parallelen Verarbeitungskernen in Zeitreihenfenstern über einen Satz von Zeitreihen von Eingangsvektoren unter einer Mehrzahl von Zeitreihen von Eingangsvektoren durchzuführen; und
einen Faltungsvektorerzeuger (212), der konfiguriert ist, um gleichzeitig einen Faltungsvektor für jedes der Zeitreihenfenster basierend auf der parallelen Faltung auf den parallelen Verarbeitungskernen auszugeben, eine Pooling-Schicht, die Akkumulatoren (602) umfasst, die konfiguriert sind, um eine parallele Akkumulation auf den parallelen Verarbeitungskernen eines geordneten Satzes von Merkmalssummen in einem Zustandsvektor (802, 804) für ein aktuelles Zeitreihenfenster durch gleichzeitiges Akkumulieren von Merkmalswerten von Komponenten des Faltungsvektors (208, 938) auf einer ordinalen positionsweisen Basis durchzuführen; und wobei das QRNN-System ferner umfasst:

einen Ausgangserzeuger (604) zum sequenziellen Ausgeben, bei jedem aufeinanderfolgenden Zeitreihenfenster, eines Zustandsvektors (802, 804), der durch die Pooling-Schicht gepoolt wird; und
einen Klassifizierer zum Durchführen einer Sequenzklassifizierungsaufgabe unter Verwendung von aufeinanderfolgenden Zustandsvektoren, die durch den Ausgangserzeuger erzeugt werden, oder einen Übersetzer zum Durchführen einer Sequenz-zu-Sequenz-Übersetzungsaufgabe unter Verwendung der Zustandsvektoren (802, 804).

2. QRNN-System nach Anspruch 1, ferner umfassend einen Dimensionalitätserhöher (214) zum Erhöhen der Dimensionalität der Faltungsvektoren (208, 938) relativ zur Dimensionalität der Eingangsvektoren in Abhängigkeit von einer Anzahl von Faltungsfiltern in der Faltungsfilterbank (210).

3. QRNN-System nach einem der Ansprüche 1-2, wobei die Eingangsvektoren Elemente einer Eingangssequenz darstellen, und
wobei die Pooling-Schicht einen Codierer (142) zum Codieren von Reihenfolge- und Kontextinformationen der Elemente in den Zustandsvektoren (802, 804) umfasst.

4. QRNN-System nach einem der Ansprüche 1-3, wobei die Eingangssequenz eine Wortebenensequenz und/oder eine Zeichenebenensequenz ist.

5. QRNN-System nach einem der Ansprüche 1 bis 4, wobei ein Gate-Vektor ein Vergessen-Gate-Vektor (304, 404) ist, und
wobei die Pooling-Schicht einen Vergessen-Gate-Vektor (304, 404) für das aktuelle Zeitreihenfenster zum Steuern der Akkumulation von Informationen aus dem Zustandsvektor (802, 804), der für das vorherige Zeitreihenfenster akkumuliert wurde, und Informationen aus dem Aktivierungsvektor (302, 402) für das aktuelle Zeitreihenfenster umfasst.

6. QRNN-System nach einem der Ansprüche 1 bis 5, wobei ein Gate-Vektor ein Eingangs-Gate-Vektor (306, 406) ist, und
wobei die Pooling-Schicht einen Eingangs-Gate-Vektor (306, 406) für das aktuelle Zeitreihenfenster zum Steuern der Akkumulation von Informationen aus dem Aktivierungsvektor (302, 402) für das aktuelle Zeitreihenfenster umfasst.

7. QRNN-System nach einem der Ansprüche 1 bis 6, wobei ein Gate-Vektor ein Ausgangs-Gate-Vektor (308, 408) ist, und
wobei die Pooling-Schicht einen Ausgangs-Gate-Vektor (308, 408) für das aktuelle Zeitreihenfenster zum Steuern der Akkumulation von Informationen aus dem Zustandsvektor (802, 804) für das aktuelle Zeitreihenfenster umfasst.

8. QRNN-System nach einem der Ansprüche 1 bis 7, das ferner konfiguriert ist, um eine Mehrzahl von Sub-QRNN-Systemen zu umfassen, die in einer Sequenz von der niedrigsten zur höchsten zum Durchführen der Sequenzklassifizierungsaufgabe angeordnet sind, wobei jedes Sub-QRNN-System mindestens eine Faltungsschicht zur parallelen Faltung und mindestens eine Pooling-Schicht zur parallelen Akkumulation umfasst.

9. QRNN-System nach Anspruch 8, das ferner ein Sub-QRNN-System umfasst, das ferner Folgendes umfasst:

einen Eingangsempfänger zum Empfangen, als Eingang, eines vorhergehenden Ausgangs (114, 118), der durch ein vorhergehendes Sub-QRNN-System in der Sequenz erzeugt wird;
eine Faltungsschicht zur parallelen Faltung des vorhergehenden Ausgangs (114, 118), um eine alternative Darstellung (116) des vorhergehenden Ausgangs zu erzeugen; und
eine Pooling-Schicht zur parallelen Akkumulation der alternativen Darstellung (116), um einen Ausgang (114, 118) zu erzeugen.

**10.** QRNN-System nach Anspruch 8, das ferner konfiguriert ist, um Sprungverbindungen (120, 122, 124) zwischen Sub-QRNN-Systemen und zwischen Schichten in einem Sub-QRNN-System zum Verketten des Ausgangs (114, 118) einer vorhergehenden Schicht mit dem Ausgang einer aktuellen Schicht und zum Bereitstellen der Verkettung an eine folgende Schicht als Eingang zu umfassen.

**11.** QRNN-System nach einem der Ansprüche 1 bis 10, wobei die Sequenzklassifizierungsaufgabe Sprachmodellierung, Gefühlsklassifizierung, Dokumentklassifizierung ist und wobei die Sequenz-zu-Sequenz-Übersetzungsaufgabe Wortebenenübersetzung und/oder Zeichenebenenübersetzung ist.

**12.** QRNN-System nach einem der Ansprüche 1 bis 11, das ferner einen Regularisierer (140) zum Regularisieren der Faltungsschicht und der Pooling-Schicht durch Erfordern, dass jeweilige Merkmalswerte an den gegebenen ordinalen Positionen in einem Vergessen-Gate-Vektor (304, 404) für das aktuelle Zeitreihenfenster eins sind, und dadurch Erzeugen einer zufälligen Teilmenge von Merkmalssummen an gegebenen ordinalen Positionen in dem Zustandsvektor (802, 804) für das aktuelle Zeitreihenfenster, die mit jeweiligen Merkmalssummen an den gegebenen ordinalen Positionen in dem Zustandsvektor übereinstimmen, die gleichzeitig für das vorherige Zeitreihenfenster akkumuliert wurden, umfasst.

**13.** QRNN-System nach Anspruch 1, wobei jeder Faltungsvektor Merkmalswerte in einem Aktivierungsvektor (302, 402) und in einem oder mehreren Gate-Vektoren umfasst und die Merkmalswerte in den Gate-Vektoren Parameter sind, die jeweils elementweise nach ordinaler Position auf die Merkmalswerte in dem Aktivierungsvektor anwenden; und wobei jede Merkmalssumme durch die Akkumulatoren in Abhängigkeit von einem Merkmalswert an einer gegebenen ordinalen Position in einem Aktivierungsvektor (302, 402), der für das aktuelle Zeitreihenfenster ausgegeben wird, einem oder mehreren Merkmalswerten an der gegebenen ordinalen Position in einem oder mehreren Gate-Vektoren, die für das aktuelle Zeitreihenfenster ausgegeben werden, und einer Merkmalssumme an der gegebenen ordinalen Position in einem Zustandsvektor, der für ein vorheriges Zeitreihenfenster akkumuliert wurde, akkumuliert wird.

**14.** Computerimplementiertes Verfahren zum Erhöhen der Berechnungsgeschwindigkeit während Trainings- und Inferenzphasen von auf einem neuronalen Netzwerk basierenden Sequenzklassifizierungsaufgaben unter Verwendung eines quasi-rekurrenten neuronalen Netzwerk-, QRNN-, Systems, das ein QRNN umfasst, oder während Trainings- und Inferenzphasen von auf einem neuronalen Netzwerk basierenden Übersetzungsaufgaben unter Verwendung eines QRNN-Systems, das einen QRNN-Codierer und einen QRNN-Decodierer umfasst, wobei das Verfahren umfasst:

Anwenden einer Faltungsfilterbank (210) parallel auf parallele Verarbeitungskerne auf Eingangsvektoren in einem Zeitreihenfenster über einen Satz von Zeitreihen von Eingangsvektoren unter einer Mehrzahl von Zeitreihen von Eingangsvektoren, um gleichzeitig einen Faltungsvektor (208, 938) für jedes der Zeitreihenfenster auszugeben (114, 118), wobei jeder Faltungsvektor Merkmalswerte in einem Aktivierungsvektor (302, 402) und in einem oder mehreren Gate-Vektoren umfasst und die Merkmalswerte in den Gate-Vektoren Parameter sind, die jeweils elementweise nach ordinaler Position auf die Merkmalswerte in dem Aktivierungsvektor anwenden;
Anwenden von Akkumulatoren (602) parallel auf die parallelen Verarbeitungskerne über Merkmalswerte von Komponenten des Faltungsvektors (208, 938), um gleichzeitig auf einer ordinalen positionsweisen Basis in einem Zustandsvektor (802, 804) für ein aktuelles Zeitreihenfenster einen geordneten Satz von Merkmalssummen zu akkumulieren, wobei jede Merkmalssumme durch die Akkumulatoren in Abhängigkeit von einem Merkmalswert an einer gegebenen ordinalen Position in einem Aktivierungsvektor (302, 402), der für das aktuelle Zeitreihenfenster ausgegeben wird, einem oder mehreren Merkmalswerten an der gegebenen ordinalen Position in einem oder mehreren Gate-Vektoren, die für das aktuelle Zeitreihenfenster ausgegeben werden, und einer Merkmalssumme an der gegebenen ordinalen Position in einem Zustandsvektor, der für ein vorheriges Zeitreihenfenster akkumuliert wurde, akkumuliert wird;
sequenzielles Ausgeben, bei jedem aufeinanderfolgenden Zeitreihenfenster, eines Zustandsvektors (802, 804), der durch die Akkumulatoren (602) akkumuliert wurde; und
Durchführen einer Sequenzklassifizierungs- oder -übersetzungsaufgabe unter Verwendung von aufeinanderfolgenden Zustandsvektoren (802, 804).

**15.** Nichtflüchtiges computerlesbares Speichermedium, auf das Computerprogrammanweisungen aufgedruckt sind, die, wenn sie auf zahlreichen parallelen Verarbeitungskernen ausgeführt werden, die Berechnungsgeschwindigkeit während Trainings- und Inferenzphasen von auf einem neuronalen Netzwerk basierenden Sequenzklassifizierungsaufgaben unter Verwendung eines quasi-rekurrenten neuronalen Netzwerk-, QRNN-, Systems, das ein QRNN umfasst, oder während Trainings- und Inferenzphasen von auf einem neuronalen Netzwerk basierenden Übersetzungsaufgaben unter Verwendung eines QRNN-Systems, das einen QRNN-Codierer und einen QRNN-Decodierer umfasst, erhöhen, wobei die Anweisungen, wenn sie auf zahlreichen parallelen Verarbeitungskernen ausgeführt werden, ein Verfahren implementieren, das umfasst:

Anwenden einer Faltungsfilterbank (210) parallel auf die parallelen Verarbeitungskerne auf Eingangsvektoren in einem Zeitreihenfenster über einen Satz von Zeitreihen von Eingangsvektoren unter einer Mehrzahl von Zeitreihen von Eingangsvektoren, um gleichzeitig einen Faltungsvektor (208, 938) für jedes der Zeitreihenfenster auszugeben (114, 118), wobei jeder Faltungsvektor Merkmalswerte in einem Aktivierungsvektor (302, 402) und in einem oder mehreren Gate-Vektoren umfasst und die Merkmalswerte in den Gate-Vektoren Parameter sind, die jeweils elementweise nach ordinaler Position auf die Merkmalswerte in dem Aktivierungsvektor anwenden;

Anwenden von Akkumulatoren (602) parallel auf die parallelen Verarbeitungskerne über Merkmalswerte von Komponenten des Faltungsvektors (208, 938), um gleichzeitig auf einer ordinalen positionsweisen Basis in einem Zustandsvektor (802, 804) für ein aktuelles Zeitreihenfenster einen geordneten Satz von Merkmalssummen zu akkumulieren, wobei jede Merkmalssumme durch die Akkumulatoren in Abhängigkeit von einem Merkmalswert an einer gegebenen ordinalen Position in einem Aktivierungsvektor (302, 402), der für das aktuelle Zeitreihenfenster ausgegeben wird, einem oder mehreren Merkmalswerten an der gegebenen ordinalen Position in einem oder mehreren Gate-Vektoren, die für das aktuelle Zeitreihenfenster ausgegeben werden, und einer Merkmalssumme an der gegebenen ordinalen Position in einem Zustandsvektor, der für ein vorheriges Zeitreihenfenster akkumuliert wurde, akkumuliert wird;

sequenzielles Ausgeben, bei jedem aufeinanderfolgenden Zeitreihenfenster, eines Zustandsvektors (802, 804), der durch die Akkumulatoren (602) akkumuliert wurde; und

Durchführen einer Sequenzklassifizierungs- oder -übersetzungsaufgabe unter Verwendung von aufeinanderfolgenden Zustandsvektoren (802, 804).

## Revendications

1. Système de réseau neuronal quasi-récurrent, QRNN, fonctionnant sur de nombreux coeurs de traitement parallèles, dans lequel le système comprend un QRNN et augmente la vitesse de calcul pendant les étapes d'entraînement et d'inférence de tâches de classification de séquence basées sur un réseau neuronal ou dans lequel le système QRNN comprend un encodeur QRNN et un décodeur QRNN et le système augmente la vitesse de calcul pendant les étapes d'entraînement et d'inférence de tâches de traduction basées sur un réseau neuronal, dans lequel chaque QRNN du système QRNN comprend :
   une couche de convolution d'un QRNN qui comprend :

   une banque de filtres de convolution (210) configurée pour effectuer une convolution parallèle de vecteurs d'entrée sur les coeurs de traitement parallèles dans des fenêtres de séries temporelles sur un ensemble de séries temporelles de vecteurs d'entrée parmi une pluralité de séries temporelles de vecteurs d'entrée ; et
   un producteur de vecteur de convolution (212) configuré pour délivrer simultanément en sortie un vecteur de convolution pour chacune des fenêtres de séries temporelles sur la base de la convolution parallèle sur les coeurs de traitement parallèles,
   une couche de regroupement qui comprend des accumulateurs (602) configurés pour effectuer une accumulation parallèle sur les coeurs de traitement parallèles d'un ensemble ordonné de sommes de caractéristiques dans un vecteur d'état (802, 804) pour une fenêtre de séries temporelles actuelle en accumulant simultanément des valeurs de caractéristiques de composants du vecteur de convolution (208, 938) sur une base positionnelle ordinale ; et dans lequel le système QRNN comprend en outre :

   un producteur de sortie (604) pour délivrer séquentiellement en sortie, à chaque fenêtre de séries temporelles successive, un vecteur d'état (802, 804) regroupé par la couche de regroupement ; et
   un classificateur pour effectuer une tâche de classification de séquence en utilisant des vecteurs d'état successifs produits par le producteur de sortie ou un convertisseur pour effectuer une tâche de traduction de séquence en séquence en utilisant les vecteurs d'état (802, 804).

2. Système QRNN selon la revendication 1, comprenant en outre un augmenteur de dimensionnalité (214) pour augmenter la dimensionnalité des vecteurs de convolution (208, 938) par rapport à la dimensionnalité des vecteurs d'entrée en fonction d'un nombre de filtres de convolution dans la banque de filtres de convolution (210).

3. Système QRNN selon l'une quelconque des revendications 1 et 2, dans lequel les vecteurs d'entrée représentent des éléments d'une séquence d'entrée, et

dans lequel la couche de regroupement comprend un encodeur (142) pour coder des informations d'ordre et de contexte des éléments dans les vecteurs d'état (802, 804).

4. Système QRNN selon l'une quelconque des revendications 1 à 3, dans lequel la séquence d'entrée est une séquence au niveau du mot et/ou une séquence au niveau du caractère.

5. Système QRNN selon l'une quelconque des revendications 1 à 4, dans lequel un vecteur de porte est un vecteur de porte d'oubli (304, 404), et

dans lequel la couche de regroupement comprend un vecteur de porte d'oubli (304, 404) pour la fenêtre de séries temporelles actuelle pour commander l'accumulation d'informations à partir du vecteur d'état (802, 804) accumulé pour la fenêtre de séries temporelles précédente et d'informations à partir du vecteur d'activation (302, 402) pour la fenêtre de séries temporelles actuelle.

6. Système QRNN selon l'une quelconque des revendications 1 à 5, dans lequel un vecteur de porte est un vecteur de porte d'entrée (306, 406), et

dans lequel la couche de regroupement comprend un vecteur de porte d'entrée (306, 406) pour la fenêtre de séries temporelles actuelle pour commander l'accumulation d'informations à partir du vecteur d'activation (302, 402) pour la fenêtre de séries temporelles actuelle.

7. Système QRNN selon l'une quelconque des revendications 1 à 6, dans lequel un vecteur de porte est un vecteur de porte de sortie (308, 408), et

dans lequel la couche de regroupement comprend un vecteur de porte de sortie (308, 408) pour la fenêtre de séries temporelles actuelle pour commander l'accumulation d'informations à partir du vecteur d'état (802, 804) pour la fenêtre de séries temporelles actuelle.

8. Système QRNN selon l'une quelconque des revendications 1 à 7, configuré en outre pour comprendre une pluralité de sous-systèmes QRNN agencés dans une séquence de la plus basse à la plus haute pour effectuer la tâche de classification de séquence, dans lequel chaque sous-système QRNN comprend au moins une couche de convolution pour une convolution parallèle et au moins une couche de regroupement pour une accumulation parallèle.

9. Système QRNN selon la revendication 8, comprenant en outre un sous-système QRNN qui comprend en outre :

un récepteur d'entrée pour recevoir en tant qu'entrée une sortie précédente (114, 118) générée par un sous-système QRNN précédent dans la séquence ;

une couche de convolution pour une convolution parallèle de la sortie précédente (114, 118) pour produire une représentation alternative (116) de la sortie précédente ; et

une couche de regroupement pour une accumulation parallèle de la représentation alternative (116) pour produire une sortie (114, 118).

10. Système QRNN selon la revendication 8, configuré en outre pour comprendre des connexions de saut (120, 122, 124) entre des sous-systèmes QRNN et entre des couches dans un sous-système QRNN pour concaténer une sortie (114, 118) d'une couche précédente avec une sortie d'une couche actuelle et pour fournir la concaténation à une couche suivante en tant qu'entrée.

11. Système QRNN selon l'une quelconque des revendications 1 à 10, dans lequel la tâche de classification de séquence est une modélisation de langage, une classification de sentiment, une classification de document, et dans lequel la tâche de traduction de séquence en séquence est une traduction au niveau du mot et/ou une traduction au niveau du caractère.

12. Système QRNN selon l'une quelconque des revendications 1 à 11, comprenant en outre un régularisateur (140) pour régulariser la couche de convolution et la couche de regroupement en exigeant que des valeurs de caractéristiques respectives aux positions ordinales données dans un vecteur de porte d'oubli (304, 404) pour la fenêtre de séries temporelles actuelle soient unitaires, et produire ainsi un sous-ensemble aléatoire de sommes de caractéristiques à des positions ordinales données dans le vecteur d'état (802, 804) pour la fenêtre de séries temporelles actuelle qui correspondent à des sommes de caractéristiques respectives aux positions ordinales données dans le vecteur d'état accumulé simultanément pour la fenêtre de séries temporelles précédente.

13. Système QRNN selon la revendication 1, dans lequel chaque vecteur de convolution comprend des valeurs de caractéristiques dans un vecteur d'activation (302, 402) et dans un ou plusieurs vecteurs de porte et les valeurs de caractéristiques dans les vecteurs de porte sont des paramètres qui, respectivement, s'appliquent élément par élément par position ordinale aux valeurs de caractéristiques dans le vecteur d'activation ; et

dans lequel chaque somme de caractéristiques est accumulée par les accumulateurs en fonction d'une valeur de caractéristique à une position ordinale donnée dans un vecteur d'activation (302, 402) délivré en sortie pour la fenêtre de séries temporelles actuelle, d'une ou plusieurs valeurs de caractéristiques à la position ordinale donnée dans un ou plusieurs vecteurs de porte délivrés en sortie pour la fenêtre de séries temporelles actuelle, et d'une somme de caractéristiques à la position ordinale donnée dans un vecteur d'état accumulé pour une fenêtre de séries temporelles précédente.

14. Procédé mis en œuvre par ordinateur pour augmenter la vitesse de calcul pendant les étapes d'entraînement et d'inférence de tâches de classification de séquence basées sur un réseau neuronal en utilisant un système de réseau neuronal quasi-récurrent, QRNN, qui comprend un QRNN, ou pendant les étapes d'entraînement et d'inférence de tâches de traduction basées sur un réseau neuronal en utilisant un système QRNN qui comprend un encodeur QRNN et un décodeur QRNN, le procédé comprenant :

l'application d'une banque de filtres de convolution (210) en parallèle sur des coeurs de traitement parallèles à des vecteurs d'entrée dans des fenêtres de séries temporelles sur un ensemble de séries temporelles de vecteurs d'entrée parmi une pluralité de séries temporelles de vecteurs d'entrée pour délivrer simultanément en sortie (114, 118) un vecteur de convolution (208, 938) pour chacune des fenêtres de séries temporelles, dans lequel chaque vecteur de convolution comprend des valeurs de caractéristiques dans un vecteur d'activation (302, 402) et dans un ou plusieurs vecteurs de porte et les valeurs de caractéristiques dans les vecteurs de porte sont des paramètres qui, respectivement, s'appliquent élément par élément par position ordinale aux valeurs de caractéristiques dans le vecteur d'activation ;

l'application d'accumulateurs (602) en parallèle sur les coeurs de traitement parallèles sur des valeurs de caractéristiques de composants du vecteur de convolution (208, 938) pour accumuler simultanément, sur une base positionnelle ordinale, dans un vecteur d'état (802, 804) pour une fenêtre de séries temporelles actuelle, un ensemble ordonné de sommes de caractéristiques, dans lequel chaque somme de caractéristiques est accumulée par les accumulateurs en fonction d'une valeur de caractéristique à une position ordinale donnée dans un vecteur d'activation (302, 402) délivré en sortie pour la fenêtre de séries temporelles actuelle, d'une ou plusieurs valeurs de caractéristiques à la position ordinale donnée dans un ou plusieurs vecteurs de porte délivrés en sortie pour la fenêtre de séries temporelles actuelle, et d'une somme de caractéristiques à la position ordinale donnée dans un vecteur d'état accumulé pour une fenêtre de séries temporelles précédente ;

la délivrance séquentielle en sortie, à chaque fenêtre de séries temporelles successive, d'un vecteur d'état (802, 804) accumulé par les accumulateurs (602) ; et

l'exécution d'une tâche de classification de séquence ou de traduction en utilisant des vecteurs d'état successifs (802, 804).

15. Support de stockage lisible par ordinateur non transitoire imprimé avec des instructions de programme informatique qui, lorsqu'elles sont exécutées sur de nombreux coeurs de traitement parallèles, augmentent la vitesse de calcul pendant les étapes d'entraînement et d'inférence de tâches de classification de séquence basées sur un réseau neuronal en utilisant un système de réseau neuronal quasi-récurrent, QRNN, qui comprend un QRNN, ou pendant les étapes d'entraînement et d'inférence de tâches de traduction basées sur un réseau neuronal en utilisant un système QRNN qui comprend un encodeur QRNN et un décodeur QRNN, les instructions, lorsqu'elles sont exécutées sur de nombreux coeurs de traitement parallèles, mettent en œuvre un procédé comprenant :

l'application d'une banque de filtres de convolution (210) en parallèle sur les coeurs de traitement parallèles à des vecteurs d'entrée dans des fenêtres de séries temporelles sur un ensemble de séries temporelles de vecteurs d'entrée parmi une pluralité de séries temporelles de vecteurs d'entrée pour délivrer simultanément en sortie (114, 118) un vecteur de convolution (208, 938) pour chacune des fenêtres de séries temporelles, dans lequel chaque vecteur de convolution comprend des valeurs de caractéristiques dans un vecteur d'activation (302, 402) et dans un ou plusieurs vecteurs de porte et les valeurs de caractéristiques dans les vecteurs de porte sont des paramètres qui, respectivement, s'appliquent élément par élément par position ordinale aux valeurs de caractéristiques dans le vecteur d'activation ;

l'application d'accumulateurs (602) en parallèle sur les coeurs de traitement parallèles sur des valeurs de caractéristiques de composants du vecteur de convolution (208, 938) pour accumuler simultanément, sur une base positionnelle ordinale, dans un vecteur d'état (802, 804) pour une fenêtre de séries temporelles actuelle, un ensemble ordonné de sommes de caractéristiques,

dans lequel chaque somme de caractéristiques est accumulée par les accumulateurs en fonction d'une valeur de caractéristique à une position ordinale donnée dans un vecteur d'activation (302, 402) délivré en sortie pour la fenêtre de séries temporelles actuelle, d'une ou plusieurs valeurs de caractéristiques à la position ordinale donnée dans un ou plusieurs vecteurs de porte délivrés en sortie pour la fenêtre de séries temporelles actuelle, et d'une somme de caractéristiques à la position ordinale donnée dans un vecteur d'état accumulé pour une fenêtre de séries temporelles précédente ;

la délivrance séquentielle en sortie, à chaque fenêtre de séries temporelles successive, d'un vecteur d'état (802, 804) accumulé par les accumulateurs (602) ; et

l'exécution d'une tâche de classification de séquence ou de traduction en utilisant des vecteurs d'état successifs (802, 804).

Regularizer 140

100

Convolutional Layer    102

110 Sub-QRNN

126

120

Pooling Layer    104

Encoder 142

Input Receiver 144

122

128    114

Convolutional Layer    106

124    130    116

112 Sub-QRNN

Pooling Layer    108

Encoder 146

118

FIG. 1

50

FIG. 2

FIG. 3

302

Activation Vector

$z_m$

$d$

304

Forget Gate Vector

$f_m$

$d$

306

Input Gate Vector

$i_m$

$d$

308

Output Gate Vector

$o_m$

$d$

$y_m$

208

Convolutional
Vector

$\zeta d$

EP 3 535 700 B1

$$y_1 = \begin{bmatrix} z_1 \\ f_1 \\ i_1 \\ o_1 \end{bmatrix} \quad y_2 = \begin{bmatrix} z_2 \\ f_2 \\ i_2 \\ o_2 \end{bmatrix} \quad y_3 = \begin{bmatrix} z_3 \\ f_3 \\ i_3 \\ o_3 \end{bmatrix} \quad y_4 = \begin{bmatrix} z_4 \\ f_4 \\ i_4 \\ o_4 \end{bmatrix} \quad y_5 = \begin{bmatrix} z_5 \\ f_5 \\ i_5 \\ o_5 \end{bmatrix} \quad \ldots \quad y_m = \begin{bmatrix} z_m \\ f_m \\ i_m \\ o_m \end{bmatrix}$$

202  402  404  406  408

208  302  304  306  308

Convolutional vector
for first time series
window

Convolutional vector
for m<sup>th</sup> time series
window

EP 3 535 700 B1

FIG. 4

FIG. 5

600

$$\bigvee_{t=1}^{t=m}\bigvee_{j=1}^{j=d} c_t^j = f_t^j \cdot c_{t-1}^j + (1-f_t^j) \cdot z_t^j$$

Output Producers 604

Accumulators 602 $\longrightarrow$ *Parallel Operations*

| | | | |
|---|---|---|---|
| $c_0^1 = 0$ | $c_0^2 = 0$ | $\ldots$ | $c_0^{100} = 0$ |
| $c_1^1 = f_1^1 \cdot c_0^1 + (1-f_1^1) \cdot z_1^1$ | $c_1^2 = f_1^2 \cdot c_0^2 + (1-f_1^2) \cdot z_1^2$ | $\ldots$ | $c_1^{100} = f_1^{100} \cdot c_0^{100} + (1-f_1^{100}) \cdot z_1^{100}$ |
| $c_2^1 = f_2^1 \cdot c_1^1 + (1-f_2^1) \cdot z_2^1$ | $c_2^2 = f_2^2 \cdot c_1^2 + (1-f_2^2) \cdot z_2^2$ | $\ldots$ | $c_2^{100} = f_2^{100} \cdot c_1^{100} + (1-f_2^{100}) \cdot z_2^{100}$ |
| $c_3^1 = f_3^1 \cdot c_2^1 + (1-f_3^1) \cdot z_3^1$ | $c_3^2 = f_3^2 \cdot c_2^2 + (1-f_3^2) \cdot z_3^2$ | $\ldots$ | $c_3^{100} = f_3^{100} \cdot c_2^{100} + (1-f_3^{100}) \cdot z_3^{100}$ |
| $c_4^1 = f_4^1 \cdot c_3^1 + (1-f_4^1) \cdot z_4^1$ | $c_4^2 = f_4^2 \cdot c_3^2 + (1-f_4^2) \cdot z_4^2$ | $\ldots$ | $c_4^{100} = f_4^{100} \cdot c_3^{100} + (1-f_4^{100}) \cdot z_4^{100}$ |
| $c_5^1 = f_5^1 \cdot c_4^1 + (1-f_5^1) \cdot z_5^1$ | $c_5^2 = f_5^2 \cdot c_4^2 + (1-f_5^2) \cdot z_5^2$ | $\ldots$ | $c_5^{100} = f_5^{100} \cdot c_4^{100} + (1-f_5^{100}) \cdot z_5^{100}$ |
| $\vdots$ | $\vdots$ | $\ldots$ | $\vdots$ |
| $c_m^1 = f_m^1 \cdot c_{m-1}^1 + (1-f_m^1) \cdot z_m^1$ | $c_m^2 = f_m^2 \cdot c_{m-1}^2 + (1-f_m^2) \cdot z_m^2$ | $\ldots$ | $c_m^{100} = f_m^{100} \cdot c_{m-1}^{100} + (1-f_m^{100}) \cdot z_m^{100}$ |

FIG. 6

*Sequential Operations*

700

EP 3 535 700 B1

Output Producers 604

$$\bigvee_{t=1}^{t=m} \bigvee_{j=1}^{j=d} c_t^j = f_t^j \cdot c_{t-1}^j + i_t^j \cdot z_t^j$$

Accumulators 602 → *Parallel Operations*

| | | | |
|---|---|---|---|
| $c_0^1 = 0$ | $c_0^2 = 0$ | $\cdots$ | $c_0^{100} = 0$ |
| $c_1^1 = f_1^1 \cdot c_0^1 + i_1^1 \cdot z_1^1$ | $c_1^2 = f_1^2 \cdot c_0^2 + i_1^2 \cdot z_1^2$ | $\cdots$ | $c_1^{100} = f_1^{100} \cdot c_0^{100} + i_1^{100} \cdot z_1^{100}$ |
| $c_2^1 = f_2^1 \cdot c_1^1 + i_2^1 \cdot z_2^1$ | $c_2^2 = f_2^2 \cdot c_1^2 + i_2^2 \cdot z_2^2$ | $\cdots$ | $c_2^{100} = f_2^{100} \cdot c_1^{100} + i_2^{100} \cdot z_2^{100}$ |
| $c_3^1 = f_3^1 \cdot c_2^1 + i_3^1 \cdot z_3^1$ | $c_3^2 = f_3^2 \cdot c_2^2 + i_3^2 \cdot z_3^2$ | $\cdots$ | $c_3^{100} = f_3^{100} \cdot c_2^{100} + i_3^{100} \cdot z_3^{100}$ |
| $c_4^1 = f_4^1 \cdot c_3^1 + i_4^1 \cdot z_4^1$ | $c_4^2 = f_4^2 \cdot c_3^2 + i_4^2 \cdot z_4^2$ | $\cdots$ | $c_4^{100} = f_4^{100} \cdot c_3^{100} + i_4^{100} \cdot z_4^{100}$ |
| $c_5^1 = f_5^1 \cdot c_4^1 + i_5^1 \cdot z_5^1$ | $c_5^2 = f_5^2 \cdot c_4^2 + i_5^2 \cdot z_5^2$ | $\cdots$ | $c_5^{100} = f_5^{100} \cdot c_4^{100} + i_5^{100} \cdot z_5^{100}$ |
| $\vdots$ | $\vdots$ | $\cdots$ | $\vdots$ |
| $c_m^1 = f_m^1 \cdot c_{m-1}^1 + i_m^1 \cdot z_m^1$ | $c_m^2 = f_m^2 \cdot c_{m-1}^2 + i_m^2 \cdot z_m^2$ | $\cdots$ | $c_m^{100} = f_m^{100} \cdot c_{m-1}^{100} + i_m^{100} \cdot z_m^{100}$ |

FIG. 7

*Sequential Operations*

$$C =$$

| $c_1$ | $c_2$ | $c_3$ | $c_4$ | $c_5$ | $\cdots$ | $c_m$ |
|---|---|---|---|---|---|---|
| $c_1^1$ | $c_2^1$ | $c_3^1$ | $c_4^1$ | $c_5^1$ | | $c_m^1$ |
| $c_1^2$ | $c_2^2$ | $c_3^2$ | $c_4^2$ | $c_5^2$ | $\cdots$ | $c_m^2$ |
| $c_1^3$ | $c_2^3$ | $c_3^3$ | $c_4^3$ | $c_5^3$ | | $c_m^3$ |
| $\vdots$ | $\vdots$ | $\vdots$ | $\vdots$ | $\vdots$ | | $\vdots$ |
| $c_1^{100}$ | $c_2^{100}$ | $c_3^{100}$ | $c_4^{100}$ | $c_5^{100}$ | | $c_m^{100}$ |

$d = 100$

802

804

**Classifier 806**

**Classification Output**

State vector
for first time series window
with an ordered set of 100
feature sums

State vector
for m<sup>th</sup> time series window
with an ordered set of 100
feature sums

FIG. 8

FIG. 9

| Model | Time / Epoch (s) | Test Acc (%) |
|---|---|---|
| NBSVM-bi (Wang & Manning, 2012) | — | 91.2 |
| 2 layer sequential BoW CNN (Johnson & Zhang, 2014) | — | 92.3 |
| Ensemble of RNNs and NB-SVM (Mesnil et al., 2014) | — | 92.6 |
| 2-layer LSTM (Longpre et al., 2016) | — | 87.6 |
| Residual 2-layer bi-LSTM (Longpre et al., 2016) | — | 90.1 |
| *Our models* | | |
| Densely-connected 4-layer LSTM (cuDNN optimized) | 480 | 90.9 |
| Densely-connected 4-layer QRNN | 150 | 91.4 |
| Densely-connected 4-layer QRNN with $k = 4$ | 160 | 91.1 |

**FIG. 10**

FIG. 11

| Model | Parameters | Validation | Test |
|---|---|---|---|
| LSTM (medium) (Zaremba et al., 2014) | 20M | 86.2 | 82.7 |
| Variational LSTM (mediuum, MC) (Gal & Ghahramani, 2016) | 20M | 81.9 | 79.7 |
| LSTM with CharCNN embeddings (Kim et al., 2016) | 19M | -- | 78.9 |
| Zoneout + Variational LSTM (medium) (Merity et al., 2016) | 20M | 84.4 | 80.6 |
| Our models | | | |
| LSTM (medium) | 20M | 85.7 | 82.0 |
| QRNN (medium) | 18M | 82.9 | 79.9 |
| QRNN + zoneout (p = 0.1) (medium) | 18M | 82.1 | 78.3 |

**FIG. 12**

| Model | Train Time | Bleu (TED.ts2014) |
|---|---|---|
| Word-level LSTM w/attn (Ranzato et al., 2016) | -- | 20.2 |
| Word-level CNN w/attn, input feeding (Wiseman & Rush, 2016) | -- | 24.0 |
| Our models | | |
| Char-level 4-layer LSTM | 4.2 hrs/epoch | 16.53 |
| Char-level 4-layer LSTM QRNN with k = 6 | 1.0 hrs/epoch | 19.41 |

**FIG. 13**

FIG. 14

| | | Sequence length | | | | |
|---|---|---|---|---|---|---|
| | | 32 | 64 | 128 | 256 | 512 |
| Batch size | 8 | 5.5x | 8.8x | 11.0x | 12.4x | 16.9x |
| | 16 | 5.5x | 6.7x | 7.8x | 8.3x | 10.8x |
| | 32 | 4.2x | 4.5x | 4.9x | 4.9x | 6.4x |
| | 64 | 3.0x | 3.0x | 3.0x | 3.0x | 3.7x |
| | 128 | 2.1x | 1.9x | 2.0x | 2.0x | 2.4x |
| | 256 | 1.4x | 1.4x | 1.3x | 1.3x | 1.3x |

Computer System 1500

Storage Subsystem 1510

Memory Subsystem 1512

RAM
1514

ROM
1516

File Storage
Subsystem
1518

QRNN 100

User Interface
Input Devices
1520

Bus Subsystem 1522

CPU
1524

Network Interface
Subsystem
1526

User Interface
Output Devices
1528

Deep Learning
Processors
(GPU, FPGA)
1530

FIG. 15

## REFERENCES CITED IN THE DESCRIPTION

**Patent documents cited in the description**

- US 62417333
- US 62418075
- US 42071017
- US 42080117

**Non-patent literature cited in the description**

- **CHUNG et al.** *Gated Feedback Recurrent Neural Networks*, 09 February 2015, 1-9, https://arxiv.org/pdf/1502.02367.pdf
- Strongly-Typed Recurrent Neural Networks. **BALDUZZI et al.** ARXIV.ORG. Cornell University Library, 06 February 2016, 1-8
- **CHOPRA et al.** Abstractive Sentence Summarization with Attentive Recurrent Neural Networks. *Proceedings of the 2016 Conference of the North American Chapter of the Association for Computational Linguistics: Human Language Technologies*, 12 June 2016, 93-98
- **NALLAPATI et al.** Abstractive Text Summarization using Sequence-to Sequence RNNs and Beyond. *Proceedings of the 20th Signll Conference on Computational Natural Language Learning*, 26 August 2016, 280-290
- **GREFF et al.** LSTM: A Search Space Odyssey. *IEEE Transactions on Neural Networks and Learning Systems*, 01 January 2016, 1-18
- Quasi-Recurrent Neural Networks. **BRADBURY et al.** ARXIV.ORG. Cornell University Library, 05 November 2016